# EUROPÄISCHE PATENTSCHRIFT

(11) **EP 2 030 988 B1**
(45) Veröffentlichungstag und Bekanntmachung des Hinweises auf die Patenterteilung: **10.02.2010**
(21) Anmeldenummer: 08162051.0
(22) Anmeldetag: 08.08.2008
(51) Int. Cl.: C08C 19/02, C08C 19/08, C08L 9/02, C08L 15/00

(54) **Verfahren zum Metathese-Abbau von Nitrilkautschuk**
Method for metathesis decomposition of nitrile rubbers
Procédé de décomposition par métathèse de caoutchouc nitrile

(30) Priorität: 21.08.2007 DE 102007039525
(43) Veröffentlichungstag der Anmeldung: 04.03.2009
(73) Patentinhaber: LANXESS Deutschland GmbH, 51369 Leverkusen (DE)
(72) Erfinder: Obrecht, Werner, 47447 Moers (DE); Müller, Julia Maria, 89134 Blaustein (DE); Nuyken, Oskar, 81927 München (DE)

(56) Entgegenhaltungen:
- EP-A- 1 754 720
- EP-A- 1 757 623
- EP-A- 1 760 093
- EP-A- 1 825 913
- EP-A- 1 826 220

## Beschreibung

Die vorliegende Erfindung betrifft ein Verfahren zum Molekulargewichtsabbau von Nitrilkautschuk durch Metathese in Gegenwart spezieller Katalysator-Systeme.

Metathese-Reaktionen werden umfangreich im Rahmen chemischer Synthesen eingesetzt, z.B. in Form von Ringschlussmetathesen (RCM), Kreuzmetathesen (CM), oder Ringöffnungsmetathesen (ROMP). Anwendung finden Metathese-Reaktionen beispielsweise zur Olefin-Synthese, zur Depolymerisation ungesättigter Polymere und zur Synthese von telechelen Polymeren.

Metathesekatalysatoren sind unter anderem aus der WO-A-96/04289 **und** WO-A-97/06185 bekannt. Sie besitzen die folgende prinzipielle Struktur: 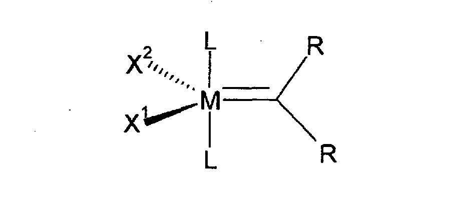 worin M Osmium oder Ruthenium bedeutet, R für gleiche oder verschiedene organische Reste mit großer struktureller Variationsbreite steht, X¹ und X² anionische Liganden bedeuten und L neutrale Elektronen-Donoren darstellt. Unter dem gängigen Begriff anionische Liganden" werden in der Literatur für derartige Metathese-Katalysatoren immer solche Liganden verstanden, die, wenn man sie als vom Metall-Zentrum entfernt betrachtet, bei geschlossener Elektronenschale negativ geladen sind.

Auch für den Abbau von Nitrilkautschuken gewinnen Metathese-Reaktionen in jüngerer Zeit zunehmende Bedeutung.

Unter Nitrilkautschuk, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt.

Hydrierter Nitrilkautschuk, abgekürzt auch als "HNBR" bezeichnet, wird durch Hydrierung von Nitrilkautschuk hergestellt. Entsprechend sind in HNBR die C=C Doppelbindungen der einpolymerisierten Dieneinheiten ganz oder teilweise hydriert. Der Hydriergrad der einpolymerisierten Dieneinheiten liegt üblicherweise in einem Bereich von 50 bis 100%.

Hydrierter Nitrilkautschuk ist ein Spezialkautschuk, der über eine sehr gute Hitzebeständigkeit, eine hervorragende Beständigkeit gegen Ozon und Chemikalien sowie eine ausgezeichnete Ölbeständigkeit verfügt.

Die vorgenannten physikalischen und chemischen Eigenschaften des HNBR gehen einher mit sehr guten mechanischen Eigenschaften, insbesondere einer hohen Abriebfestigkeit. Aus diesem Grund hat HNBR breite Verwendung in den verschiedensten Anwendungsgebieten gefunden. HNBR wird beispielsweise eingesetzt für Dichtungen, Schläuche, Riemen und Dämpfungselemente im Automobilsektor, ferner für Statoren, Bohrlochdichtungen und Ventildichtungen im Bereich der Ölförderung sowie auch für zahlreiche Teile der Luftfahrtindustrie, der Elektroindustrie, des Maschinen- und des Schiffsbaus.

Am Markt kommerziell erhältliche HNBR Typen weisen üblicherweise eine Mooney-Viskosität (ML 1+4 bei 100°C) im Bereich von 55 bis 120 auf, was einem Zahlenmittel des Molekulargewichts Mₙ (Bestimmungsmethode: Gelpermeationschromatographie (GPC) gegen Polystyroläquivalente) im Bereich von ca. 200.000 bis 700.000 entspricht. Die dabei zu messenden Polydispersitätsindizes PDI (PDI = M_{w} /Mₙ, wobei M_{w} das Gewichtsmittel und Mₙ das Zahlenmittel des Molekulargewichts darstellt), die eine Aussage über die Breite der Molekulargewichtsverteilung liefern, besitzen häufig einen Wert von 3 oder darüber. Der Restdoppelbindungsgehalt liegt üblicherweise in einem Bereich von 1 bis 18 % (bestimmt durch IR-Spektroskopie).

Der Verarbeitbarkeit von HNBR sind durch die relativ hohe Mooney-Viskosität starke Beschränkungen auferlegt. Für viele Anwendungen wäre ein HNBR Typ wünschenswert, der ein niedrigeres Molekulargewicht und damit eine niedrigere Mooney-Viskosität besitzt. Dies würde die Verarbeitbarkeit entscheidend verbessern.

In der Vergangenheit wurden zahlreiche Versuche unternommen, die Kettenlänge von HNBR durch Abbau zu verkürzen. Beispielsweise ist ein Molekulargewichtsabbau durch thermomechanische Behandlung (Mastikation) z. B. auf einem Walzwerk oder auch in einem Schneckenaggregat **(**EP-A-0 419 952**)** möglich. Dieser thermomechanische Abbau hat jedoch den Nachteil, dass durch partielle Oxidation funktionelle Gruppen wie Hydroxyl-, Keto-, Carbonsäure- und Ester-Gruppen in das Molekül eingebaut werden und zusätzlich die Mikrostruktur des Polymers substanziell geändert wird.

Die Herstellung von HNBR mit niedrigen Molmassen, entsprechend einer Mooney-Viskosität (ML 1+4 bei 100°C) in einem Bereich kleiner 55 bzw. einem Zahlenmittel des Molekulargewichts von ca. Mₙ < 200.000 g /mol, war mittels etablierter Herstellungsverfahren lange Zeit nicht möglich, da einerseits bei der Hydrierung von NBR ein sprunghafter Anstieg der Mooney-Viskosität erfolgt und andererseits die Molmasse des für die Hydrierung einzusetzenden NBR-Feedstocks nicht beliebig reduziert werden kann, da sonst die Aufarbeitung in den zur Verfügung stehenden großtechnischen Anlagen wegen zu hoher Klebrigkeit nicht mehr möglich ist. Die niedrigste Mooney-Viskosität eines NBR-Feedstocks, die ohne Schwierigkeiten in einer etablierten großtechnischen Anlage aufarbeitbar ist, liegt bei ca. 30 Mooney-Einheiten (ML 1+4 bei 100°C). Die Mooney-Viskosität des hydrierten Nitrilkautschuks, der mit einem solchen NBR-Feedstock erhalten wird, liegt in der Größenordnung von 55 Mooney-Einheiten (ML 1+4 bei 100°C). Die Bestimmung der Mooney-Viskosität erfolgt dabei gemäß ASTM Norm D 1646.

Im neueren Stand der Technik wird dieses Problem gelöst, indem man das Molekulargewicht des Nitrilkautschuks vor der Hydrierung durch Abbau auf eine Mooney-Viskosität (ML 1+4 bei 100°C) von weniger als 30 Mooney-Einheiten bzw. ein Zahlenmittel des Molekulargewichts von Mₙ < 70.000 g / mol reduziert. Den Abbau des Molekulargewichts erreicht man durch Metathese, bei der man üblicherweise niedermolekulare 1-Olefine zusetzt. Beschrieben ist die Metathese von Nitrilkautschuk beispielsweise in WO-A-02/100905**,** WO-A-02/100941 und WO-A-03/002613**.** Die Metathesereaktion wird zweckmäßigerweise im gleichen Lösungsmittel wie die Hydrierreaktion durchgeführt, damit man den abgebauten Nitrilkautschuk nach Beendigung der Abbaureaktion nicht aus dem Lösungsmittel isolieren muss, bevor man ihn der nachfolgenden Hydrierung unterwirft. Für die Katalyse der Metathese-Abbaureaktion verwendet man Metathesekatalysatoren, die gegenüber polaren Gruppen, insbesondere gegenüber Nitrilgruppen, tolerant sind.

In der WO-A-02/100905 und der WO-A-02/100941 wird ein Verfahren beschrieben, welches den Abbau von Nitrilkautschuk-Ausgangspolymeren durch Olefinmetathese und eine anschließende Hydrierung zu HNBR mit niedriger Mooney-Viskosität umfasst. Hierbei wird ein Nitrilkautschuk in einem ersten Schritt in Gegenwart eines Co-Olefins und spezieller Komplexkatalysatoren auf Osmium-, Ruthenium-, Molybdän- oder Wolfram-Basis umgesetzt und in einem zweiten Schritt hydriert. Erhältlich sind auf diesem Weg hydrierte Nitrilkautschuke mit einem Gewichtsmittel des Molekulargewichts (M_{w}) im Bereich von 30.000 bis 250.000, einer Mooney-Viskosität (ML 1+4 bei 100 °C) im Bereich von 3 bis 50 und einem Polydispersitätsindex PDI von kleiner 2.5.

Zur Metathese von Nitrilkautschuk kann z.B. der nachfolgend dargestellte Katalysator Bis(tricyclohexylphosphin) benzyliden-rutheniumdichlorid eingesetzt werden.

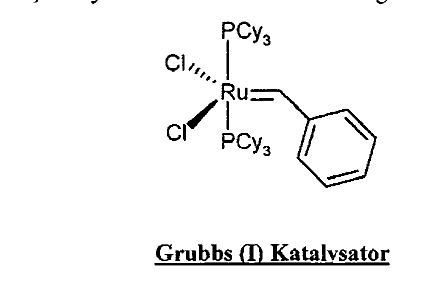

Nach Metathese und Hydrierung weisen die Nitrilkautschuke ein niedrigeres Molekulargewicht sowie eine engere Molekulargewichtsverteilung auf als die nach dem Stand der Technik bisher herstellbaren hydrierten Nitrilkautschuke.

Die für die Durchführung der Metathese angewandten Mengen an Grubbs-(I)-Katalysator sind jedoch groß. Sie betragen in den Versuchen der WO-A-03/002613 beispielsweise 307 ppm und 61 ppm Ru bezogen auf den eingesetzten Nitrilkautschuk. Die notwendigen Reaktionszeiten sind darüber hinaus lang und die Molekulargewichte nach dem Abbau immer noch relativ hoch (siehe Beispiel 3 der WO-A-03/002613 mit M_{w} = 180.000 g/mol und Mₙ = 71.000g/mol).

US 2004/0127647 A1 beschreibt Blends auf der Basis niedermolekularer HNBR-Kautschuke mit bi- bzw. multimodaler Molekulargewichtsverteilung sowie Vulkanisate dieser Kautschuke. Für die Durchführung der Metathese werden nach den Beispielen 0,5 phr an Grubbs-(I)-Katalysator verwendet. Dies entspricht der hohen Menge von 614 ppm Ruthenium bezogen auf den eingesetzten Nitrilkautschuk.

Aus WO-A-00/71554 ist ferner eine Gruppe von Katalysatoren bekannt, die in der Fachwelt als "Grubbs-(II)-Katalysatoren" bezeichnet werden.

Verwendet man einen solchen "Grubbs-(II)-Katalysator" wie z.B. den nachfolgend dargestellten Katalysator 1,3-Bis (2,4,6-trimethylphenyl)-2-imidazolidenyliden) (tricyclohexylphosphin)-ruthenium(phenyl-methylen)dichlorid für die NBR-Metathese **(**US-A-2004/0132891**)**, so gelingt diese auch ohne Verwendung eines Co-Olefins.

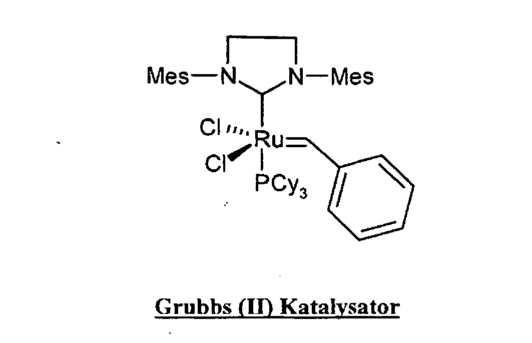

Nach der anschließenden Hydrierung, die bevorzugt im gleichen Lösungsmittel durchgeführt wird, weist der hydrierte Nitrilkautschuk niedrigere Molekulargewichte und eine engere Molekulargewichtsverteilung (PDI) auf als bei Verwendung von Katalysatoren des Grubbs-(I)-Typs. Bezüglich des Molekulargewichts und der Molekulargewichtsverteilung verläuft somit der Metatheseabbau mit Katalysatoren des Typs Grubbs-(II) effizienter als mit Katalysatoren des Typs Grubbs-(I). Allerdings sind die für diesen effizienten Metatheseabbau notwendigen Ruthenium-Mengen immer noch relativ hoch. Auch werden für die Durchführung der Metathese mit dem Grubbs-(II)-Katalysator immer noch lange Reaktionszeiten benötigt.

Allen zuvor genannten Verfahren zum Metatheseabbau von Nitrilkautschuk ist gemeinsam, dass relativ große Katalysatormengen eingesetzt werden müssen und lange Reaktionszeiten benötigt werden, um die gewünschten niedermolekularen Nitrilkautschuke mittels Metathese herzustellen.

Auch bei den anderen Typen der Metathese-Reaktionen kommt der Aktivität der eingesetzten Katalysatoren entscheidende Bedeutung zu.

In J.Am.Chem. Soc. 1997, 119, 3887-3897 wird beschrieben, dass bei der nachfolgend dargestellten Ringschlussmetathese von Diethyldiallylmalonat 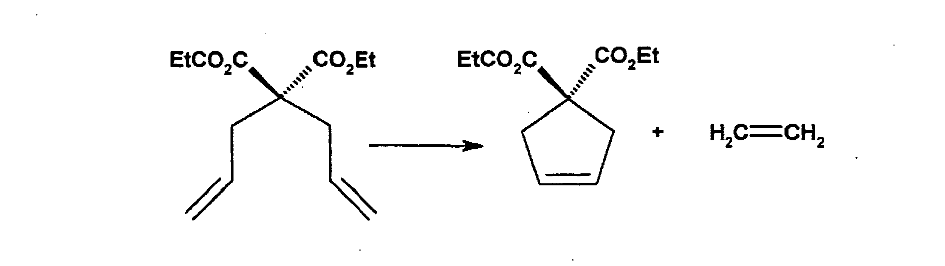 die Aktivität der Katalysatoren des Grubbs-(I) Typs durch Zusätze von CuCl und CuCl₂ gesteigert werden kann. Erklärt wird diese Aktivitätssteigerung durch eine Verschiebung des Dissoziationsgleichgewichts, indem ein abdissoziierender Phosphanligand durch Kupferionen unter Bildung von Kupfer-Phosphankomplexen abgefangen wird.

Diese Aktivitätssteigerung durch Kupfer-Salze in der genannten Ringschlussmetathese lässt sich jedoch nicht beliebig auf andere Arten von Metathese-Reaktionen übertragen. Eigene Untersuchungen ergaben, dass unerwarteterweise der Zusatz von Kupfer-Salzen für den Metathese-Abbau von Nitrilkautschuken zwar zu einer anfänglichen Beschleunigung der Metathese-Reaktion führt, dann aber eine signifikante Verschlechterung der Metathese-Effizienz zu beobachten ist: Die letztendlich erreichbaren Molekulargewichte der abgebauten Nitrilkautschuke sind substanziell höher, als wenn die Metathese-Reaktion in Gegenwart des gleichen Katalysators aber in Abwesenheit der Kupfer-Salze durchgeführt wird.

In einer noch nicht veröffentlichten deutschen Patentanmeldung werden Katalysator-Systeme für die Metathese beschrieben, bei denen neben dem eigentlichen Metathese-Katalysator noch ein oder mehrere Salze eingesetzt werden. Diese Kombination von einem oder mehreren Salzen mit dem Metathese-Katalysator führt zu einer Aktivitätssteigerung des Katalysators. Für die Anionen und Kationen dieser Salze ist jeweils eine Vielzahl von Bedeutungen möglich, die aus verschiedenen Listen ausgewählt werden können. Als besonders vorteilhaft erweist sich in den Beispielen dieser deutschen Patentanmeldung der Einsatz von Lithiumbromid sowohl für den Metathese Abbau von Kautschuken, wie z.B. Nitrilkautschuken, als auch für die Ringschlussmetathese von Diethyldiallylmalonat. Als Katalysatoren werden hierbei der Grubbs-(II) Katalysator, der Hoveyda-, der Buchmeiser-Nuyken- und der Grela-Katalysator eingesetzt.

Der Einsatz von Lithiumbromid und auch von Cäsiumbromid ist wegen der korrosionsfördernden Wirkung von Bromidionen nicht uneingeschränkt für alle Metathese Reaktionen empfehlenswert. Bei der Herstellung niedermolekularer hydrierter Nitrilkautschuke spielen beispielsweise zusätzliche sicherheitstechnische Aspekte eine Rolle, da im Anschluss an den Metatheseabbau des Nitrilkautschuks eine Hydrierung unter erhöhtem Druck in Stahlreaktoren durchgeführt wird. Da über die Restfeuchte des Nitrilkautschuks Wasser in die Reaktionsmischung gelangt, ist bei der Durchführung der Hydrierung in Gegenwart von Lithiumbromid durch zusätzliche Maßnahmen sicherzustellen, dass es nicht zu einer "Lochkorrosion" des Stahlautoklaven kommt. Aus diesem Grund ist die Verwendung von Bromidzusätzen bei der Herstellung besonders niedermolekularer Nitrilkautschuke keine wirtschaftlich optimale Vorgehensweise.

Die Beispiele der oben genannten deutschen Patentanmeldung legen ferner nahe, dass die aktivitätssteigernde Wirkung von Lithiumchlorid schwächer ist als diejenige von Lithiumbromid.

In Inorganica Chimica Acta 359 (2006) 2910-2917 wurde ebenfalls die Aktivitätssteigerung von Metathesekatalysatoren durch Salz-Zusatz untersucht. Betrachtet wurden die Einflüsse von Zinnchlorid, Zinnbromid, Zinnjodid, Eisen(II)chlorid, Eisen(II)bromid, Eisen(III)chlorid, Cer(III)chlorid*7H2O, Ytterbium(III)chlorid, Antimontrichlorid, Galliumdichlorid und Aluminiumtrichlorid auf die Selbstmetathese von 1-Octen zu 7-Tetradecen und Ethylen. Bei Verwendung des Grubbs-I-Katalysators wurde bei Zusatz von Zinnchlorid bzw. Zinnbromid eine deutliche Verbesserung des Umsatzes von 7-Tetradecen beobachtet (Table 1). Ohne Salzzusatz wurde ein Umsatz von 25,8 % erreicht, bei Zusatz von SnCl₂*2H₂O stieg der Umsatz auf 68,5% und durch Zusatz von Zinnbromid auf 71,9%. Ein Zusatz von Zinnjodid verschlechterte den Umsatz signifikant von 25,8% auf 4,1%. In Kombination mit dem Grubbs-II-Katalysator führten alle drei Zinnsalze dagegen nur zu geringfügigen Umsatzverbesserungen von 76,3% (Referenzversuch ohne Zusatz) auf 78,1% (SnCl₂), auf 79,5% (SnBr₂) und 77,6% (SnJ₂). Bei Verwendung des sogenannten "Phobcats" [Ru(phobCy)₂Cl₂ (= ChPh)] wird der Umsatz durch SnCl₂-Zusatz von 87,9% auf 80,8%, durch SnBr₂ auf 81,6% und durch SnJ₂ auf 73,9% verschlechtert. Bei Verwendung von Eisen(II)Salzen ist in Kombination mit dem Grubbs-I-Katalysators die Erhöhung des Umsatzes mit Eisen(II)bromid höher als bei Verwendung von Eisen(II)chlorid. Es ist anzumerken, dass unabhängig von der Art des verwendeten Katalysators bei Verwendung von Bromiden der Umsatz stets höher als bei Verwendung der entsprechenden Chloride ist.

Der Einsatz des in Inorganica Chimica Acta 359 (2006) 2910-2917 beschriebenen Zinn- bzw. Eisen(II)bromids ist aber für die Herstellung von Nitrilkautschuken wegen der Korrosivität der Bromide wie bereits oben beschrieben keine optimale Lösung.

Üblicherweise wird bei der Herstellung hydrierter Nitrilkautschuke nach der Hydrierung das Lösungsmittel durch Wasserdampfdestillation entfernt. Werden Zinnsalze als Teil des Katalysator-Systems verwendet, gelangen hierbei gewisse Mengen dieser Zinnsalze in das Abwasser, das daher aufwändig gereinigt werden muss. Aus diesem Grund ist die Verwendung von Zinnsalzen zur Aktivitätssteigerung von Katalysatoren bei der Herstellung von Nitrilkautschuken wirtschaftlich nicht empfehlenswert.

Die Verwendung von Eisensalzen ist dadurch eingeschränkt, dass sie die Kapazität mancher Austauscherharze, die üblicherweise für die Rückgewinnung der bei der Hydrierung eingesetzten Edelmetallverbindungen verwendet wird, reduzieren. Hierdurch wird ebenfalls die Wirtschaftlichkeit des Gesamtverfahrens beeinträchtigt.

In ChemBioChem 2003, 4, 1229-1231 wird ferner die Synthese von Polymeren durch eine ringöffnende Metathese-Polymerisation (ROMP) von Norbornyloligopeptiden in Gegenwart eines Rutheniumcarbenkomplexes Cl₂(PCy₃)₂Ru=CHPhenyl beschrieben, wobei LiCl zugesetzt wird. Der Zusatz von LiCl erfolgt dabei mit dem erklärten Ziel der Vermeidung einer Aggregation und der Erhöhung der Löslichkeit der wachsenden Polymerketten. Über eine aktivitätssteigernde Wirkung des Salzzusatzes auf den Katalysator wird nichts berichtet.

Auch aus J. Org. Chem. 2003, 68, 202-2023 ist die Durchführung einer ringöffnenden Polymerisation von mit Oligopeptiden substituierten Norbornenen bekannt, bei der LiCl eingesetzt wird. Auch hier wird auf den Einfluss von LiCl als löslichkeitssteigernder Zusatz für die Peptide in unpolaren organischen Lösungsmitteln abgehoben. Aus diesem Grund kann durch den Zusatz von LiCl eine Steigerung des Polymerisationsgrades DP erreicht werden.

In J.Am.Chem.Soc. 1997, 119, 3887-3897 wird beschrieben, dass man NHC-Liganden enthaltende Metathesekatalysatoren wie den Grubbs-(II) Katalysator mit LiBr oder NaI behandelt, um so die Chlorid-Liganden des Grubbs-(II)-Katalysators gegen Bromid oder Jodid auszutauschen.

In J.Am.Chem.Soc. 1997, 119, 9130 wird beschrieben, dass durch Zusatz von Tetraisopropoxytitanat die Aktivität des Grubbs-(I)-Katalysators bei der Ringschlussmetathese von 1,ω-Dienen eine Ausbeuteverbesserung erzielt werden kann. Bei der Cyclisierung des 9-Decensäureesters von 4-Pentenoat wird bei Zusatz von Tetraisopropanoxytitanat eine höhere Ausbeute des Makrolids erzielt als bei Zusatz von LiBr. Es findet sich kein Anhaltspunkt, inwieweit dieser Effekt auch auf andere Typen von Metathese-Reaktionen oder andere Metathese-Katalysatoren übertragbar ist.

In Biomol. Chem. 2005, 3, 4139 wird die Kreuzmetathese (CM) von Acrylnitril mit sich selbst und mit anderen funktionalisierten Olefinen bei Verwendung von [1,3-bis(2,6-dimethylphenyl)4,5-dihydroimidazol-2-yliden](C₅H₅N)₂(Cl)₂Ru=CHPh untersucht. Durch Zusatz von Tetraisopropoxytitanat wird die Ausbeute des jeweiligen Produkts verbessert. In dieser Publikation entsteht der Eindruck, dass die aktivitätssteigernde Wirkung von Tetraisopropoxytitanat nur bei Verwendung eines speziellen Katalysators mit Pyridin-Liganden auftritt. Es findet sich kein Hinweis auf den Einfluss von Tetraisopropoxytitanat bei Einsatz pyridinfreier Katalysatoren bzw. in anderen Typen von Metathese-Reaktionen.

Aus Synlett 2005, No4, 670-672 ist bekannt, dass der Zusatz von Tetraisopropoxytitanat bei der Kreuzmetathese von Allylcarbamat mit Methylacrylat einen negativen Einfluss auf die Produktausbeute besitzt, wenn als Katalysator der Hoveyda-Katalysator eingesetzt wird. So wird durch Zusatz von Tetraisopropoxytitanat die Produktausbeute von 28 % auf 0% reduziert. Auch ein Zusatz von Dimethylaluminiumchlorid reduziert die Ausbeute von 28% auf 20%. Im Gegensatz hierzu wird durch Zusätze von Borsäurederivaten die Produktausbeute verbessert.

Aus diesen Ausführungen wird deutlich, dass aus der Literatur keine Lehre gezogen werden kann, wie der Molekulargewichtsabbau von Nitrilkautschuk durch Metathese verbessert werden kann, da die Übertragbarkeit von Ergebnissen von einer Metathesereaktion auf eine andere nicht erkennbar ist. Auch ist die Übertragbarkeit von Ergebnissen, die mit einem spezifischen Metathesekatalysator erhalten wurden, nicht auf einen anderen möglich.

Es bestand daher die **Aufgabe,** für den Molekulargewichtsabbau von Nitrilkautschuk durch Metathese eine Aktivitätssteigerung des eingesetzten Metathese-Katalysators zu erzielen und gleichzeitig sicherzustellen, dass keine Vergelung des Nitrilkautschuks eintritt.

Überraschenderweise wurde gefunden, dass der Molekulargewichtsabbau von Nitrilkautschuk durch Metathese deutlich verbessert werden kann, wenn eine Kombination aus einem Metathese-Katalysator und bestimmten Übergangsmetall-Verbindungen eingesetzt wird. Es können deutlich engere Molekulargewichtsverteilungen und niedrigere Molekulargewichte erhalten werden, ohne dass eine Vergelung beobachtet wird.

**Gegenstand der Erfindung** ist somit ein Verfahren zum Molekulargewichtsabbau von Nitrilkautschuk, worin ein Nitrilkautschuk mit einem Metathese-Katalysator, bei dem es sich um einen Komplexkatalysator auf Basis eines Metalls der 6. oder 8. Nebengruppe des Periodensystems handelt und der mindestens einen carbenartig an das Metall gebundenen Liganden aufweist, sowie einer Verbindung der allgemeinen Formel (I)

M(OZ)ₘ (I)

worin
- M: ein Übergangsmetall der 4., 5. oder 6. Nebengruppe des Periodensystems der Elemente darstellt,
- m: 4, 5 oder 6 ist und
- Z: gleich oder verschieden ist und einen linearen, verzweigten, aliphatischen, cyclischen, heterocyclischen oder aromatischen Rest mit 1-32 Kohlenstoffatome darstellt, der zusätzlich noch 1 bis 15 Heteroatome aufweisen kann,
in Kontakt gebracht wird.

Bei der im erfindungsgemäßen Verfahren ablaufenden Metathese-Reaktion handelt es sich um eine Kreuzmetathese, in deren Verlauf es zu einem Abbau der Polymerketten des Nitrilkautschuks kommt.

Geeignete Übergangsmetalle der 4., 5. und 6. Nebengruppe in den Verbindungen der allgemeinen Formel (I) sind Titan, Zirkon, Hafnium, Vanadin, Niob, Tantal, Chrom, Molybdän und Wolfram.

In den Verbindungen der allgemeinen Formel (I) sind die Reste Z gleich oder verschieden und stellen lineare, verzweigte, aliphatische, cyclische, heterocyclische oder aromatische Reste mit 1-30 Kohlenstoffatome dar, die zusätzlich noch 1 bis 15 Heteroatome, bevorzugt Stickstoff oder Sauerstoff, aufweisen können.

Unter der Maßgabe, dass die Reste Z 1-32 Kohlenstoffatome besitzen und zusätzlich noch 1 bis 15 Heteroatome, bevorzugt Stickstoff oder Sauerstoff, aufweisen können, kann es sich bei Z um geradkettiges oder verzweigtes C₁-C₃₀-Alkyl, bevorzugt C₁-C₂₀-Alkyl, besonders bevorzugt C₁-C₁₂-Alkyl, C₃-C₂₀-Cycloalkyl, bevorzugt C₃-C₁₀-Cycloalkyl, besonders bevorzugt C₅-C₈-Cycloalkyl, C₂-C₂₀-Alkenyl, bevorzugt C₂-C₁₈-Alkenyl, C₂-C₂₀-Alkinyl-, um einen Rest der allgemeinen Formel (-CHZ¹-CHZ¹-A²-)ₚ-CH₂-CH₃, wobei p eine ganze Zahl von 1 bis 10 ist, Z¹ gleich oder verschieden und Wasserstoff oder Methyl bedeuten, bevorzugt die an benachbarten C-Atomen sitzenden Z¹ ungleich sind, und A² Sauerstoff, Schwefel oder -NH bedeutet, um einen C₆-C₂₄-Aryl, bevorzugt C₆-C₁₄-Aryl oder einen C₄-C₂₃-Heteroaryl-Rest, wobei diese Heteroaryl-Reste mindestens 1 Heteroatom, bevorzugt Stickstoff oder Sauerstoff aufweisen, handeln.

Bevorzugt werden im erfindungsgemäßen Verfahren Verbindungen der allgemeinen Formel (I) eingesetzt, worin
- M: Titan, Zirkon, Hafnium, Vanadin, Niob, Tantal, Chrom, Molybdän oder Wolfram bedeutet,
- m: 4, 5 oder 6 ist und
- Z: Methyl, Ethyl, n-Propyl, i-Propyl, n-Butyl, i-Butyl, tert.-Butyl, n-Pentyl, i-Pentyl, tert.- Pentyl, Dodecyl, Oleyl, Phenyl oder sterisch gehindertes Phenyl bedeutet.

Besonders bevorzugt werden im erfindungsgemäßen Verfahren als Verbindungen der allgemeinen Formel (I) Tetraethyloxytitanat, Tetraisopropyloxytitanat, Tetra-tert.-butyloxytitanat, Tetra-tert.-butyloxyzirkonat, Pentaethoxyniobat und Pentaethoxytantalat eingesetzt.

Im Rahmen dieser Anmeldung und Erfindung können alle zuvor genannten und im Folgenden genannten, allgemeinen oder in Vorzugsbereichen genannten Definitionen von Resten, Parametern oder Erläuterungen untereinander, also auch zwischen den jeweiligen Bereichen und Vorzugsbereichen in beliebiger Weise kombiniert werden.

Der im Rahmen dieser Anmeldung im Zusammenhang mit dem Metathese-Katalysator oder der Verbindung der allgemeinen Formel (I) verwendete Begriff "substituiert" bedeutet, dass ein Wasserstoff-Atom an einem angegebenen Rest oder Atom durch eine der jeweils angegebenen Gruppen ersetzt ist, mit der Maßgabe, dass die Wertigkeit des angegebenen Atoms nicht überschritten wird und die Substitution zu einer stabilen Verbindung führt.

Bei den im erfindungsgemäßen Verfahren einzusetzenden Metathese-Katalysatoren handelt es sich um Komplexkatalysatoren auf Basis eines Metalls der 6. oder 8. Nebengruppe des Periodensystems. Diese Komplexkatalysatoren besitzen das gemeinsame Strukturmerkmal, dass sie mindestens einen Liganden aufweisen, der carbenartig an das Metall gebunden ist. In einer bevorzugten Ausführungsform weist der Komplexkatalysator zwei Carben-Liganden auf, d.h. zwei Liganden, die carbenartig an das Zentralmetall des Komplexes gebunden sind. Als Metalle der 6. und 8. Nebengruppe des Periodensystems sind Molybdän, Wolfram, Osmium und Ruthenium bevorzugt.

Als Katalysatoren können im erfindungsgemäßen Verfahren solche der **allgemeinen Formel (A)** eingesetzt werden, 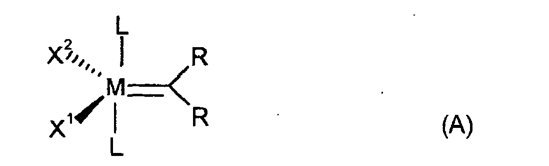 worin
- M: Osmium oder Ruthenium bedeutet,
- X¹ und X²: gleich oder verschieden sind und zwei Liganden, bevorzugt anionische Liganden, darstellen,
- L: gleiche oder verschiedene Liganden, bevorzugt neutrale Elektronen-Donoren darstellen,
- R: gleich oder verschieden sind und Wasserstoff, Alkyl, bevorzugt C₁-C₃₀-Alkyl, Cycloalkyl, bevorzugt C₃-C₂₀-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, oder Alkylsulfinyl, bevorzugt C₁-C₂₀-Alkylsulfinyl bedeuten, wobei diese Reste alle jeweils durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann.

In bevorzugten Katalysatoren der allgemeinen Formel (A) ist der eine Rest R Wasserstoff und der andere Rest R bedeutet C₁-C₂₀-Alkyl, C₃-C₁₀-Cycloalkyl, C₂-C₂₀-Alkenyl, C₂-C₂₀-Alkinyl, C₆-C₂₄-Aryl, C₁C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₃₀-Alkylamino, C₁-C₂₀-Alkylthio, C₆-C₂₄-Arylthio, C₁-C₂₀-Alkylsulfonyl oder C₁-C₂₀-Alkylsulfinyl, wobei diese Reste alle jeweils durch ein oder mehrere Alkyl-, Halogen-, Alkoxy-, Aryl- oder Heteroaryl-Reste substituiert sein können.

In den Katalysatoren der allgemeinen Formel (A) sind **X¹** und **X²** gleich oder verschieden und stellen zwei Liganden, bevorzugt anionische Liganden, dar.

X¹ und X² können beispielsweise Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl-Reste bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl, wobei auch diese Reste gegebenenfalls wiederum durch ein oder mehrere Substituenten substituiert sein können, die aus der Gruppe umfassend Halogen, bevorzugt Fluor, C₁-C₅-Alkyl, C₁-C₅-Alkoxy und Phenyl ausgewählt sind.

In einer bevorzugten Ausführungsform sind X¹ und X² gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X¹ und X² identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (A) steht L für gleiche oder verschiedene Liganden, bevorzugt neutrale Elektronen-Donoren.

Die beiden Liganden L können beispielsweise unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin ("Im")-Liganden bedeuten.

Bevorzugt bedeuten die beiden Liganden L unabhängig voneinander einen C₆-C₂₄-Aryl-, C₁-C₅-Alkyl- oder C₃-C₂₀-Cycloalkyl-Phosphin-Liganden, einen sulfonierten C₆-C₂₄-Aryl- oder sulfonierten C₁-C₁₀-Alkyl-Phosphin-Liganden, einen C₆-C₂₄-Aryl- oder C₁-C₁₀-Alkyl-Phosphinit-Liganden, einen C₆-C₂₄-Aryl- oder C₁-C₁₀-Alkylphosphonit-Liganden, einen C₆-C₂₄-Aryl- oder C₁-C₁₀-Alkylphosphit-Liganden, einen C₆-C₂₄-Aryl- oder C₁-C₁₀-Alkylarsin-Liganden, einen C₆-C₂₄-Aryl- oder C₁-C₁₀-Alkylamin-Liganden, einen Pyridin-Liganden, einen C₆-C₂₄-Aryl- oder C₁-C₁₀-Alkyl-Sulfoxid-Liganden, einen C₆-C₂₄-Aryl- oder C₁-C₁₀-Alkyl-Ether-Liganden oder einen C₆-C₂₄-Aryl- oder C₁-C₁₀-Alkylamid-Liganden, die alle jeweils durch eine Phenylgrupppe substituiert sein können, die wiederum gegebenenfalls durch einen Halogen-, C₁-C₅-Alkyl- oder C₁-C₅-Alkoxy-Rest substituiert ist.

Die Bezeichnung "Phosphin" schließt beispielsweise PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ ein.

Die Bezeichnung "Phosphinit" schließt beispielsweise Triphenylphosphinit, Tricyclohexylphosphinit, Triisopropylphosphinit und Methyldiphenylphosphinit ein.

Die Bezeichnung "Phosphit" schließt beispielsweise Triphenylphosphit, Tricyclohexylphosphit, Tri-tert.-Butylphosphit, Triisopropylphosphit und Methyldiphenylphosphit ein.

Die Bezeichnung "Stibin" schließt beispielsweise Triphenylstibin, Tricyclohexylstibin und Trimethylstibin ein.

Die Bezeichnung "Sulfonat" schließt beispielsweise Trifluoromethansulfonat, Tosylat und Mesylat ein.

Die Bezeichnung "Sulfoxid" schließt beispielsweise CH₃S(=O)CH₃ und (C₆H₅)₂SO ein.

Die Bezeichnung "Thioether" schließt beispielsweise CH₃SCH₃, C₆H₅SCH₃, CH₃OCH₂CH₂SCH₃ und Tetrahydrothiophen ein.

Die Bezeichnung "Pyridin" soll im Rahmen dieser Anmeldung als Oberbegriff sämtliche von Grubbs in der WO-A-03/011455 genannten stickstoffhaltigen Liganden einschließen. Beispiele hierfür sind: Pyridin, Picoline (α-, β-, und γ-Picolin), Lutidine (2,3-, 2,4-, 2,5-, 2,6-, 3,4- und 3,5-Lutidin), Collidin (2,4,6-Trimethylpyridin), Trifluormethyl-pyridin, Phenylpyridin, 4-(Dimethylamino)pyridin, Chlorpyridine, Brompyridine, Nitropyridine, Chinolin, Pyrimidin, Pyrrol, Imidazol und Phenylimidazol.

Der Imidazolidinrest (Im) weist üblicherweise eine Struktur der allgemeinen Formeln (IIa) oder (IIb)auf, 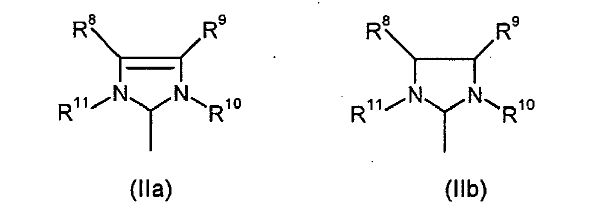 worin
- R⁸, R⁹, R¹⁰, R¹¹: gleich oder verschieden sind und Wasserstoff, geradkettiges oder verzweigtes C₁-C₃₀-Alkyl, C₃-C₂₀₋Cycloalkyl, C₂-C₂₀-Alkenyl, C₂-C₂₀-Alkinyₗ, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Gegebenenfalls kann einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

Nur zur Klarstellung sei hinzugefügt, dass die in den allgemeinen Formeln (IIa) und (IIb) im Rahmen dieser Anmeldung dargestellten Strukturen des Imidazolidinrests mit den in der Literatur für diesen Imidazolidinrest (Im) häufig auch zu findenden Strukturen (IIa) und (IIb'), die den Carben-Charakter des Imidazolidinrests hervorheben, gleichbedeutend sind. Dies gilt entsprechend auch für die zugehörigen bevorzugten, später noch dargestellten Strukturen (IIIa)-(IIIf).

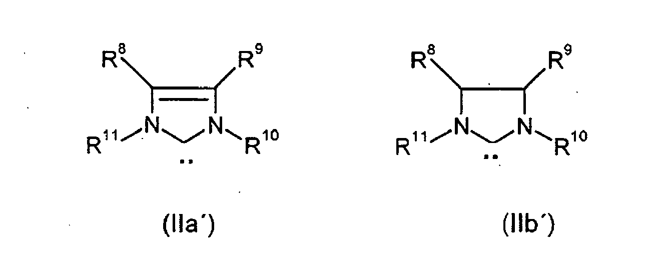

In einer bevorzugten Ausführungsform der Katalysatoren der allgemeinen Formel (A) bedeuten R⁸ und R⁹ unabhängig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der Katalysatoren der allgemeinen Formel (A) sind ferner die Reste R¹⁰ und R¹¹ gleich und verschieden und bedeuten geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Grupppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich und verschieden sein und bedeuten i-Propyl, Neopentyl, Adamantyl, Mesityl oder 2,6-Diisopropylphenyl.

Besonders bevorzugte Imidazolidinreste (Im) haben die nachfolgenden Strukturen (IIIa) bis (IIIf), wobei Mes jeweils für 2,4,6-Trimethylphenyl steht oder alternativ in allen Fällen für 2,6-Diisopropylphenyl.

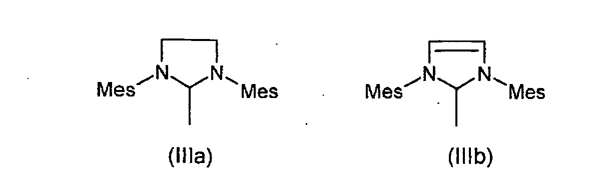

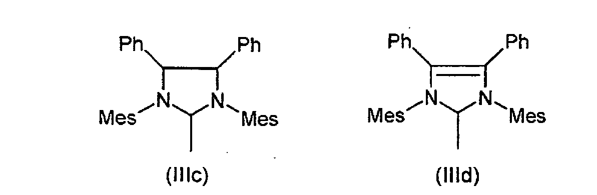

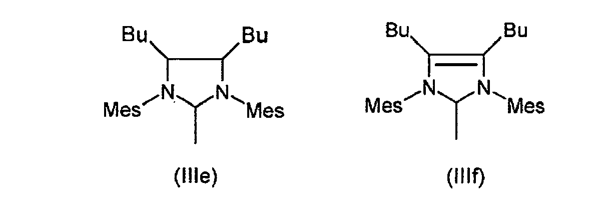

Verschiedenste Vertreter der Katalysatoren der Formel (A) sind prinzipiell bekannt, so z.B. aus der WO-A-96/04289 und der WO-A-97/06185**.**

Alternativ zu den bevorzugten Im-Resten steht einer oder beide Liganden L in der allgemeinen Formel (A) bevorzugt auch für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt steht in der allgemeinen Formel (A) einer oder beide Liganden L für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt ist der Einsatz einer der beiden folgenden Katalysatoren, die unter die allgemeine Formel (A) fallen, und die Strukturen (IV) (Grubbs (I)-Katalysator) und (V) (Grubbs (II)-Katalysator) besitzen, wobei Cy für Cyclohexyl steht.

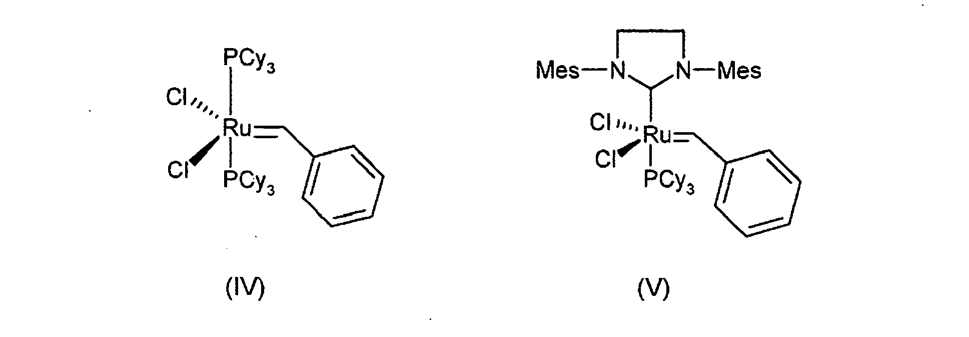

In einer weiteren Ausführungsform werden **Katalysatoren der allgemeinen Formel (A1)** eingesetzt, 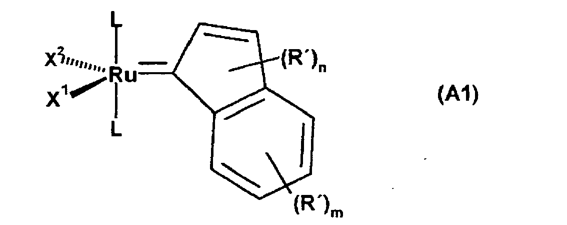 worin
- X¹, X² und L: die gleichen allgemeinen, bevorzugten und besonders bevorzugten Bedeutungen haben können wie X¹, X² und L in der allgemeinen Formel (A),
- n: gleich 0, 1 oder 2 ist,
- m: gleich 0, 1, 2, 3 oder 4 ist und
- R': gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten, die alle jeweils durch ein oder mehrere Alkyl-, Halogen-, Alkoxy-, Aryl- oder Heteroaryl-Reste substituiert sein können.

Als bevorzugter Katalysator, der unter die allgemeine Formel (A1) fällt, kann beispielsweise der jenige der folgenden Formel (VI) eingesetzt werden, wobei Mes jeweils für 2,4,6-Trimethylphenyl und Ph für Phenyl steht.

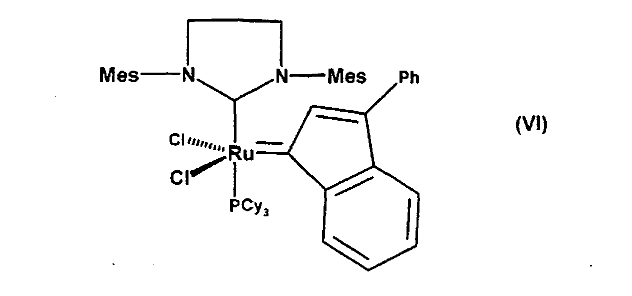

Dieser in der Literatur auch als "Nolan-Katalysator" bezeichnete Katalysator ist beispielsweise aus WO-A-2004/112951 bekannt.

Als Katalysatoren sind im erfindungsgemäßen Verfahren auch solche **der allgemeinen Formel** (**B**) geeignet, 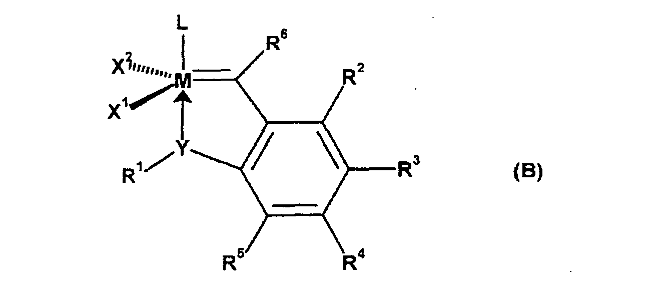 worin
- M: Ruthenium oder Osmium bedeutet,
- X¹ und X²: gleiche oder verschiedene Liganden, bevorzugt anionische Liganden sind,
- Y: Sauerstoff (O), Schwefel (S), einen Rest N-R¹ oder einen Rest P-R¹ bedeutet, wobei R¹ die nachfolgend genannten Bedeutungen besitzt,
- R¹: einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
- R², R³, R⁴ und R⁵: gleich oder verschieden sind und Wasserstoff, organische oder anorganische Reste darstellen,
- R⁶: Wasserstoff, einen Alkyl-, Alkenyl-, Alkinyl- oder einen Aryl-Rest bedeutet und
- L: ein Ligand ist, der die gleichen Bedeutungen besitzt wie in Formel (A) genannt.

Die Katalysatoren der allgemeinen Formel (B) sind prinzipiell bekannt. Vertreter dieser Verbindungsklasse sind die Katalysatoren, die von Hoveyda et al. in US 2002/0107138 A1 und Angew Chem. Int. Ed. 2003, 42, 4592 beschrieben sind, und die Katalysatoren, die von Grela in WO-A-2004/035596**,** Eur. J. Org. Chem 2003, 963-966 **und** Angew. Chem. Int. Ed. 2002, 41, 4038 sowie in J. Org. Chem. 2004, 69, 6894-96 **und** Chem. Eur. J 2004, 10, 777-784 beschrieben werden. Die Katalysatoren sind käuflich erhältlich bzw. gemäß den angegebenen Literaturstellen herstellbar.

In den Katalysatoren der allgemeinen Formel (B) steht **L** für einen Liganden, der üblicherweise eine Elektronen-Donor-Funktion besitzt und die gleichen allgemeinen, bevorzugten und besonders bevorzugten Bedeutungen annehmen kann wie L in der allgemeinen Formel (A).

Darüber hinaus gilt, dass L in der allgemeinen Formel (B) bevorzugt einen P(R⁷)₃ Rest, wobei R⁷ unabhängig voneinander C₁-C₆ Alkyl, C₃-C₈-Cycloalkyl oder Aryl bedeuten, oder aber einen gegebenenfalls substituierten Imidazolidinrest ("Im") darstellt.

**C₁-C₆-Alkyl** steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** umfasst Cyclopropyl, Cyclobutyl, Cylopentyl, Cyclohexyl, Cycloheptyl und Cyclooctyl.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Der Imidazolidinrest (Im) weist üblicherweise eine Struktur der allgemeinen Formeln (IIa) oder (IIb) auf, 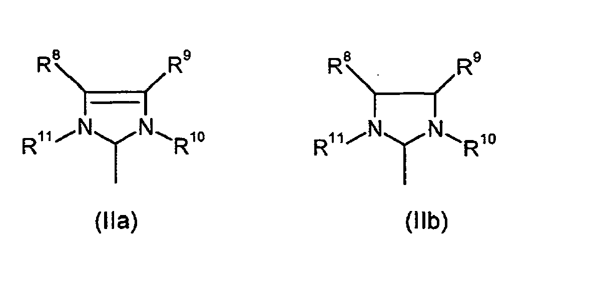 worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀, Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀ Alkylsulfonyl, C₁-C₂₀-Alkylsulfonat, C₆-C₂₀-Arylsulfonat oder C₁-C₂₀-Alkylsulfinyl bedeuten.

Gegebenenfalls kann einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

In einer bevorzugten Ausführungsform der erfindungsgemäßen Verfahrens werden Katalysatoren der allgemeinen Formel (B) eingesetzt, worin R⁸ und R⁹ unabhängig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, bedeuten oder zusammen unter Einschluss der Kohlenstoffatome, an die sie gebunden sind, einen Cycloalkyl- oder Aryl-Rest bilden, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der erfindungsgemäßen Verfahrens werden Katalysatoren der allgemeinen Formel (B) eingesetzt, worin die Reste R¹⁰ und R¹¹ gleich und verschieden sind und geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, oder C₆-C₁₀-Arylsulfonat, besonders bevorzugt p-Toluolsulfonat bedeuten.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich und verschieden sein und bedeuten i-Propyl, Neopentyl, Adamantyl oder Mesityl.

Besonders bevorzugte Imidazolidinreste (Im) haben die bereits für die allgemeine Formel (A) genannten Strukturen (IIIa-IIIf).

In den Katalysatoren der allgemeinen Formel (B) sind **X¹** und **X²** gleich oder verschieden und können beispielsweise Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl-Reste, wobei auch die letzteren Reste gegebenenfalls wiederum durch ein oder mehrere Substituenten substituiert sein können, die aus der Gruppe umfassend Halogen, bevorzugt Fluor, C₁₋C₅-Alkyl, C₁-C₅-Alkoxy und Phenyl ausgewählt sind.

In einer bevorzugten Ausführungsform sind X¹ und X² gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X¹ und X² identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (B) bedeutet der **Rest R¹** einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest, die alle jeweils optional durch ein oder mehrere Alkyl-, Halogen-, Alkoxy-, Aryl- oder Heteroaryl-Reste substituiert sein können.

Üblicherweise bedeutet der Rest R¹ einen C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Rest, die alle jeweils optional durch ein oder mehrere Alkyl-, Halogen-, Alkoxy-, Aryl- oder Heteroaryl-Reste substituiert sein können.

Bevorzugt steht R¹ für einen C₃-C₂₀-Cycoalkyl-Rest, einen C₆-C₂₄-Aryl-Rest oder einen geradkettigen oder verzweigten C₁-C₃₀-Alkyl-Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht R¹ für einen geradkettigen oder verzweigten C₁-C₁₂-Alkyl-Rest.

Der C₃-C₂₀-cycloalkyl-Rest umfasst beispielsweise Cyclopropyl, Cyclobutyl, Cylopentyl, Cyclohexyl, Cycloheptyl und Cyclooctyl.

Bei dem C₁-C₁₂-Alkyl-Rest kann es sich beispielsweise um Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, n-Heptyl, n-Octyl, n-Decyl oder n-Dodecyl handeln. Insbesondere steht R¹ für Methyl oder Isopropyl.

Der C₆-C₂₄-Aryl-Rest steht für einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

In der allgemeinen Formel (**B**) sind die Reste **R², R**³, **R**⁴ und **R⁵** gleich oder verschieden und können Wasserstoff, organische oder anorganische Reste darstellen.

In einer geeigneten Ausführungsform sind R², R³, R⁴, R⁵ gleich oder verschieden und bedeuten Wasserstoff, Halogen, Nitro, CF₃, Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio, Alkylsulfonyl- oder Alkylsulfinyl-Reste darstellen, die alle jeweils optional durch ein oder mehrere Alkyl-, Alkoxy-, Halogen-, Aryl- oder Heteroaryl-Reste substituiert sein können.

Üblicherweise sind R², R³, R⁴, R⁵ gleich oder verschieden und bedeuten Wasserstoff, Halogen, bevorzugt Chlor oder Brom, Nitro, CF₃, C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Reste, die alle jeweils optional durch ein oder mehrere C₁-C₃₀-Alkyl-, C₁-C₂₀-Alkoxy-, Halogen-, C₆-C₂₄-Aryl- oder Heteroaryl-Reste substituiert sein können.

In einer besonders bewährten Ausführungsform sind R², R³, R⁴, R⁵ sind gleich oder verschieden und stehen für Nitro, geradkettige oder verzweigte C₁-C₃₀-Alkyl-, C₅-C₂₀-Cylcoalkyl-, geradkettige oder verzweigte C₁-C₂₀-Alkoxy-Reste oder C₆-C₂₄-Aryl-Reste, bevorzugt Phenyl oder Naphthyl. Die C₁-C₃₀-Alkyl-Reste sowie C₁-C₂₀-Alkoxy-Reste können optional durch ein oder mehrere Doppel- oder Dreifachbindungen oder auch ein oder mehrere Heteroatome, bevorzugt Sauerstoff oder Stickstoff, unterbrochen sein.

Ferner können auch zwei oder mehr der Reste R², R³, R⁴ oder R⁵ über aliphatische oder aromatische Strukturen verbrückt sein. R³ und R⁴ können beispielsweise unter Einbeziehung der Kohlenstoff-Atome, an die sie im Phenylring der Formel (B) gebunden sind, einen ankondensierten Phenylring bilden, so dass insgesamt eine Naphthylstruktur resultiert.

In der allgemeinen Formel (B) bedeutet der **Rest R⁶** Wasserstoff, einen Alkyl-, Alkenyl-, Alkinyl- oder einen Aryl-Rest. Bevorzugt bedeutet R⁶ Wasserstoff, einen C₁-C₃₀-Alkyl, einen C₂-C₂₀-Alkenyl-, einen C₂-C₂₀-Alkinyl oder einen C₆-C₂₄-Aryl-Rest. Besonders bevorzugt ist R⁶ Wasserstoff.

Ferner geeignet für das erfindungsgemäße Verfahren sind **Katalysatoren der allgemeinen Formel (B1),** 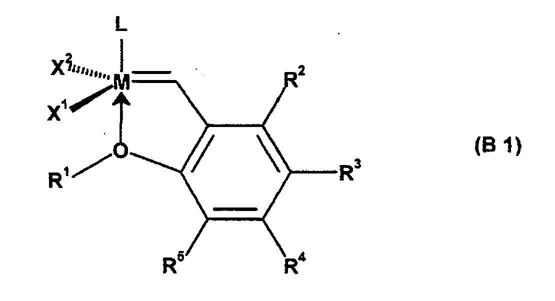 worin
- M, L, X¹, X², R¹, R², R³, R⁴ und R⁵: die für die allgemeine Formel (B) genannten allgemeinen, bevorzugten und besonders bevorzugten Bedeutungen besitzen können.

Die Katalysatoren der allgemeinen Formel (B1) sind beispielsweise aus US 2002/0107138 A1 (Hoveyda et al.**)** prinzipiell bekannt und können nach dort angegebenen Herstellverfahren erhalten werden.

Besonders bevorzugt sind Katalysatoren der allgemeinen Formel (B1), worin
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R², R³, R⁴, R⁵: die für die allgemeine Formel (B) genannten allgemeinen und bevorzugten Bedeutungen besitzen und
- L: die für die allgemeine Formel (B) genannten allgemeinen und bevorzugten Bedeutungen besitzt.

Insbesondere bevorzugt sind Katalysatoren der allgemeinen Formel (B1), worin
- M: Ruthenium darstellt,
- X¹ und X²: gleichzeitig Chlor bedeuten,
- R¹: für einen Isopropyl-Rest steht,
- R², R³, R⁴, R⁵: alle Wasserstoff bedeuten und
- L: einen gegebenenfalls substituierten Imidazolidin-Rest der Formeln (IIa) oder (IIb) darstellt, worin die Reste R⁸, R⁹, R¹⁰, R¹¹ alle bereits zuvor genannten allgemeinen und bevorzugten Bedeutungen besitzen können.

Ganz besonders bevorzugt wird im erfindungsgemäßen Verfahren ein Katalysator eingesetzt, der unter die allgemeine Strukturformel (B1) fällt, und die Formel (VII), wobei Mes jeweils für 2,4,6-Trimethylphenyl steht, besitzt.

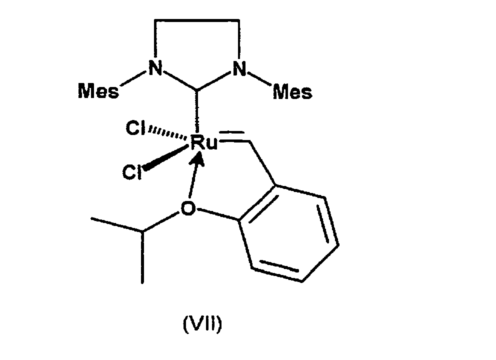

Dieser Katalysator (VII) wird in der Literatur auch als "Hoveyda-Katalysator" bezeichnet.

Weiterhin geeignet sind solche Katalysatoren, die unter die allgemeine Strukturformel (B1) fallen und eine der folgenden Formeln (VIII), (IX), (X), (XI), (XII), (XIII), (XIV) und (XV) besitzen, wobei Mes jeweils 2,4,6-Trimethylphenyl bedeutet,

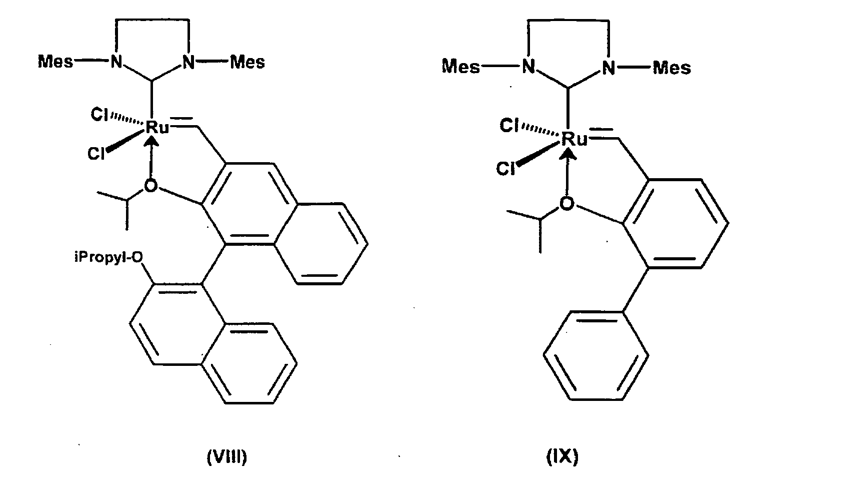

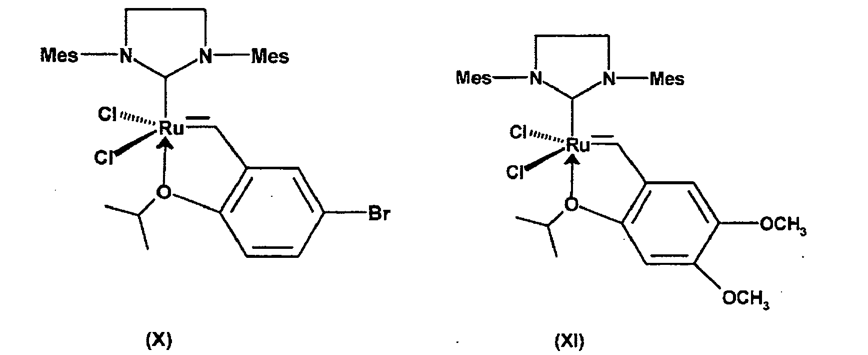

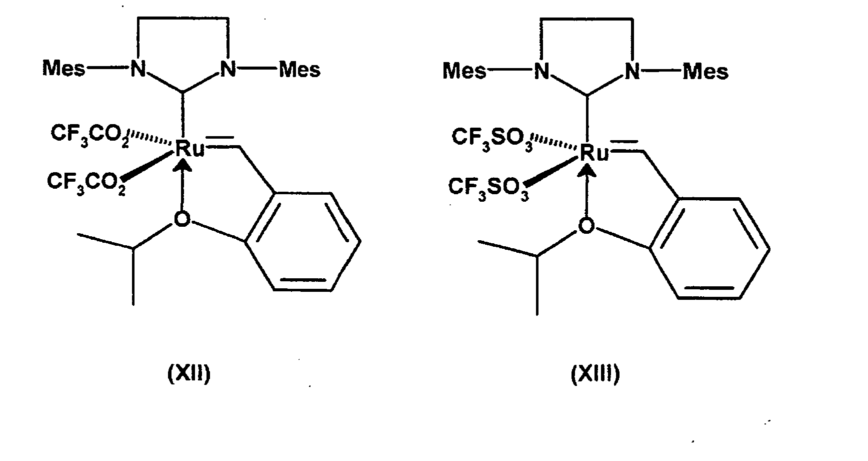

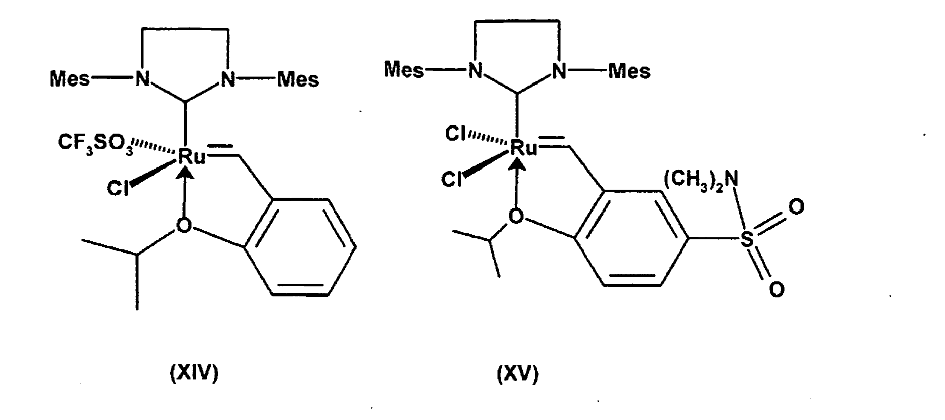

Weiterhin geeignet für das erfindungsgemäße Verfahren sind **Katalysatoren der allgemeinen Formel (B2),** 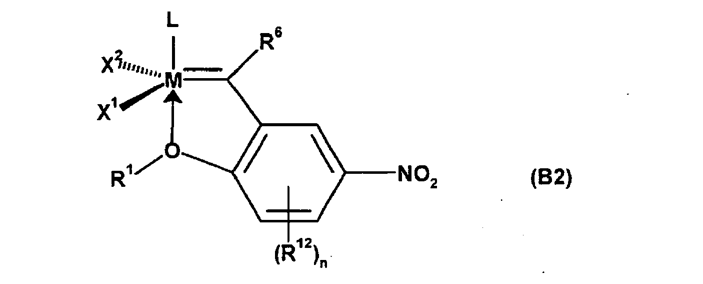 worin
- M, L, X¹, X², R¹ und R⁶: die für die Formel (B) genannten allgemeinen und bevorzugten Bedeutungen haben,
- R¹²: gleich oder verschieden sind und die für die Reste R², R³, R⁴ und R⁵ in der Formel (B) genannten allgemeinen und bevorzugten Bedeutungen, ausgenommen Wasserstoff, besitzen und
- n: gleich 0, 1, 2 oder 3 ist.

Diese Katalysatoren der allgemeinen Formel (B2) sind beispielsweise aus WO-A-2004/035596 (Grela**)** prinzipiell bekannt und können nach dort angegebenen Herstellverfahren erhalten werden.

Besonders bevorzugt ist der Einsatz von Katalysatoren der allgemeinen Formel (B2), worin
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R¹²: die für die allgemeine Formel (B2) genannten Bedeutungen besitzt,
- n: gleich 0, 1, 2 oder 3 ist,
- R⁶: Wasserstoff bedeutet und
- L: die für die allgemeine Formel (B) genannten Bedeutungen besitzt,

Insbesondere bevorzugt ist der Einsatz von Katalysatoren der allgemeinen Formel (B2), worin
- M: Ruthenium darstellt,
- X¹ und X²: gleichzeitig Chlor bedeuten,
- R¹: für einen Isopropyl-Rest steht,
- n: gleich 0 ist und
- L: einen gegebenenfalls substituierten Imidazolidin-Rest der Formeln (IIa) oder (IIb) darstellt, worin R⁸, R⁹, R¹⁰, R¹¹ gleich oder verschieden sind und alle allgemeinen und bevorzugten Bedeutungen von L in den Katalysatoren der allgemeinen Formel (B1) besitzen können.

Besonders geeignet ist ferner der Einsatz eines Katalysators, der unter die allgemeine Formel (B2) fällt und die Struktur (XVI) besitzt.

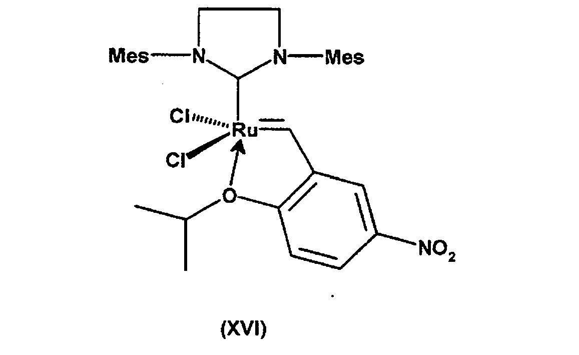

Der Katalysator (XVI) wird in der Literatur auch als "Grela-Katalysator" bezeichnet.

Ein weiterer für das erfindungsgemäße Verfahren geeigneter Katalysator, der unter die allgemeine Formel (B2) fällt, besitzt die Struktur (XVII), wobei Mes jeweils für 2,4,6-Trimethylphenyl steht.

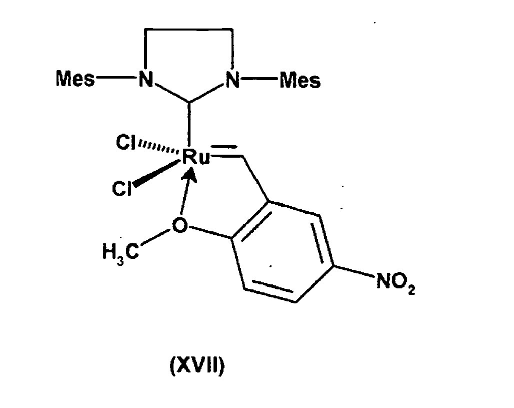

In einer weiteren alternativen Ausführungsform des erfindungsgemäßen Verfahrens können dendritisch aufgebaute **Katalysatoren der allgemeinen Formel (B3)** eingesetzt werden, 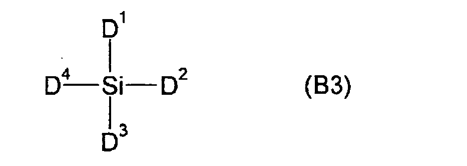 worin D¹, D², D³ und D⁴ jeweils eine Struktur der nachfolgend dargestellten allgemeinen Formel (XVIII) aufweisen, die über die rechts dargestellte Methylengruppe an das Silicium der Formel (B3) angebunden ist und 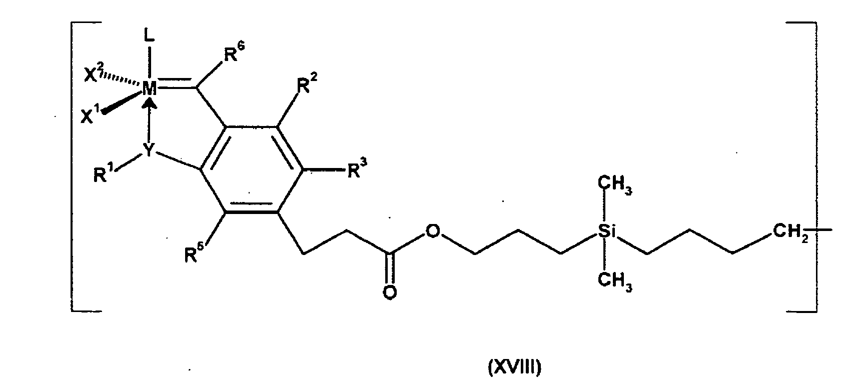 worin
- M, L, X¹, X², R¹, R², R³, R⁵ und R⁶: die für die allgemeine Formel (B) genannten allgemeinen und bevorzugten Bedeutungen besitzen können.

Derartige Katalysatoren gemäß der allgemeinen Formel (B3) sind aus US 2002/0107138 A1 bekannt und gemäß den dort gemachten Angaben herstellbar.

In einer weiteren alternativen Ausführungsform des erfindungsgemäßen Verfahrens können Katalysatoren der Formel (B4) eingesetzt werden, 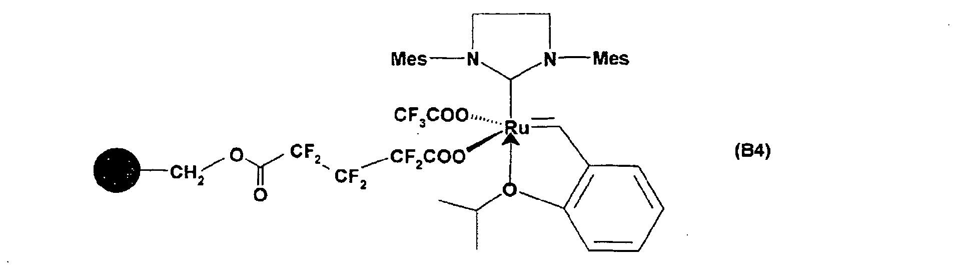 worin das Symbol ●
für einen Träger steht.

Bevorzugt handelt es sich bei dem Träger um ein Poly(styroldivinylbenzol)-Copolymer (PS-DVB).

Diese Katalysatoren gemäß Formel (B4) sind aus Chem. Eur. J. 2004 10, 777-784 prinzipiell bekannt und nach dort beschriebenen Herstellmethoden erhältlich.

Alle vorgenannten Katalysatoren des prinzipiellen Typs (B) können entweder als solche im Reaktionsgemisch der NBR-Metathese eingesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele sowie Ruß, Kieselsäure, Silikate, Calciumcarbonat und Bariumsulfat.

In einer weiteren Ausführungsform des erfindungsgemäßen Verfahrens können **Katalysatoren der allgemeinen Formel (C),** eingesetzt werden, 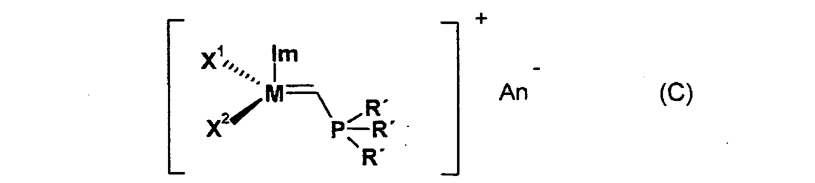 worin
- M: Ruthenium oder Osmium bedeutet,
- X¹ und X²: gleich oder verschieden sind und anionische Liganden darstellen,
- R': gleich oder verschieden sind und organische Reste darstellen,
- Im: einen gegebenenfalls substituierten Imidazolidinrest darstellt und
- An: ein Anion darstellt.

Die Katalysatoren der allgemeinen Formel (C) sind prinzipiell bekannt (siehe z.B. Angew. Chem. Int. Ed. 2004,43, 6161-6165**).**

X¹ und X² können in der allgemeinen Formel (C) die gleichen allgemeinen, bevorzugten und besonders bevorzugten Bedeutungen besitzen wie in den Formeln (A) und (B).

Der Imidazolidinrest (Im) weist üblicherweise eine Struktur der allgemeinen Formeln (IIa) oder (IIb) auf, die bereits für den Katalysator-Typ der Formeln (A) und (B) genannt wurden und kann auch alle dort als bevorzugt genannten Strukturen, insbesondere die der Formeln (IIIa)-(IIIf) besitzen.

Die Reste R' sind in der allgemeinen Formel (C) gleich oder verschieden und bedeuten einen geradkettigen oder verzweigten C₁-C₃₀-Alkyl-, C₅-C₃₀-Cylcoalkyl- oder Aryl-Rest, wobei die C₁-C₃₀-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Bevorzugt sind die Reste R' in der allgemeinen Formel (C) gleich und bedeuten Phenyl, Cyclohexyl, Cyclopentyl, Isopropyl, o-Tolyl o-Xylyl oder Mesityl.

Ebenfalls geeignet für den Einsatz im erfindungsgemäßen Verfahren sind **Katalysatoren der allgemeinen Formel (D)** 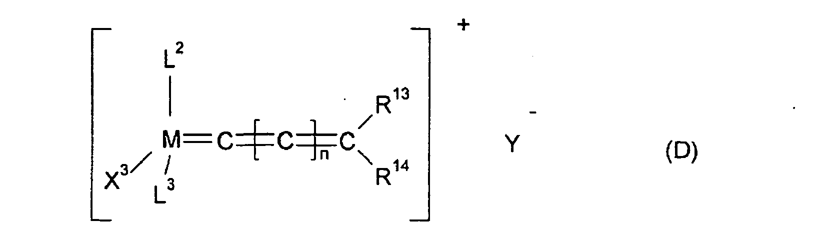 worin
- M: Ruthenium oder Osmium bedeutet,
- R¹³ und R¹⁴: unabhängig voneinander Wasserstoff, C₁-C₂₀-Alkyl, C₂-C₂₀-Alkenyl, C₂-C₂₀ Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀ -Alkylsulfonyl oder C₁-C₂₀ Alkylsulfmyl bedeuten,
- X³: ein anionischer Ligand ist,
- L²: ein neutraler π-gebundener Ligand ist, unabhängig davon, ob mono- oder polycyclisch,
- L³: ist ein Ligand aus der Gruppe der Phosphine, sulfonierten Phosphine, fluorierten Phosphine, funktionalisierten Phosphine mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl-Gruppen, Phosphite, Phosphinite, Phosphonite, Phosphinamine, Arsine, Stibine, Ether, Amine, Amide, Imine, Sulfoxide, Thioether und Pyridine,
- Y: ein nicht-koordinierendes Anion ist und
- n: 0, 1, 2, 3, 4 oder 5 ist.

In einer weiteren Ausführungsform des erfindungsgemäßen Verfahrens kann ein **Katalysator der allgemeinen Formel (E)** eingesetzt werden, 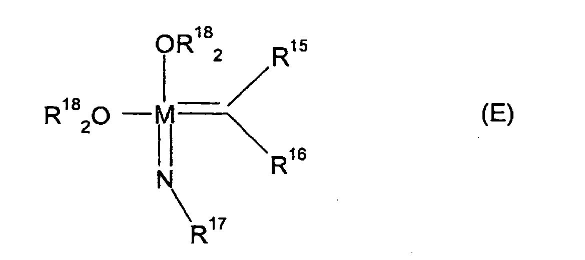 worin
- M²: Molybdän oder Wolfram bedeutet,
- R¹⁵ und R¹⁶: gleich oder verschieden sind und Wasserstoff, C₁-C₂₀-Alkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀ -Alkylsulfonyl oder C₁-C₂₀ Alkylsulfinyl bedeuten,
- R¹⁷ and R¹⁸: gleich oder verschieden sind und einen substituierten oder einen halogensubstituierten C₁-C₂₀-Alkyl, C₆-C₂₄-Aryl, C₆-C₃₀-Aralkyl-Rest oder Silikonenthaltende Analoga davon darstellen.

Eine weitere alternative Ausführungform des erfindungsgemäßen Verfahrens umfasst den Einsatz eines **Katalysators der allgemeinen Formel** (F), 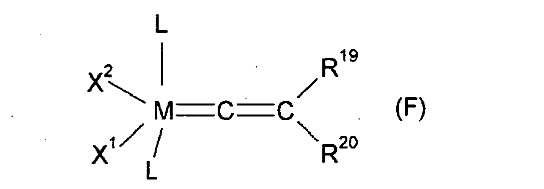 worin
- M: Ruthenium oder Osmium bedeutet,
- X¹ und X²: gleich oder verschieden sind und anionische Liganden darstellen, die alle Bedeutungen von X¹ und X² in den allgemeinen Formeln (A) und (B) annehmen können,
- L: gleiche oder verschiedene Liganden darstellt, die alle allgemeinen und bevorzugten Bedeutungen von L in den allgemeinen Formeln (A) und (B) annehmen können,
- R¹⁹ and R²⁰: gleich oder verschieden sind und Wasserstoff oder substituiertes oder unsubstituiertes Alkyl bedeuten.

Eine weitere alternative Ausführungform des erfindungsgemäßen Verfahrens umfasst den Einsatz eines **Katalysator der allgemeinen Formel (G), (H) oder (K),** 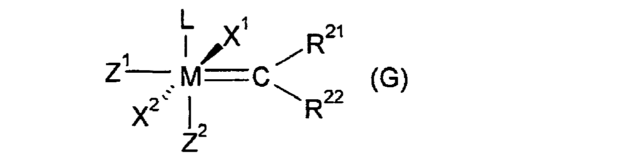 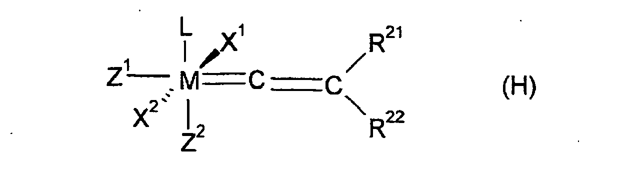 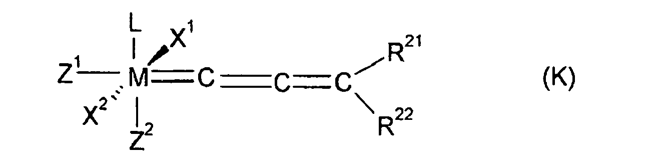 wobei
- M: Osmium oder Ruthenium bedeutet,
- X¹ und X²: gleich oder verschieden sind und zwei Liganden, bevorzugt anionische Liganden, darstellen,
- L: einen Liganden, bevorzugt einen neutralen Elektronen-Donor darstellt,
- Z¹ und Z²: gleich oder verschieden sind und neutrale Elektronen-Donoren darstellen,
- R²¹ und R²²: unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils optional durch ein oder mehrere Reste ausgewählt aus Alkyl, Halogen, Alkoxy, Aryl oder Heteroaryl substituiert sind.

Die Katalysatoren der allgemeinen Formeln (G), (H) und (K) sind prinzipiell bekannt, so z.B. aus WO 2003/011455 A1**,** WO 2003/087167 A2**,** Organometallics 2001, 20, 5314 und Angew. Chem. Int. Ed. 2002, 41, 4038**.** Die Katalysatoren sind kommerziell verfügbar oder aber nach den in den vorgenannten Literaturstellen angegebenen Herstellungsmethoden synthetisierbar.

### Z¹ und Z²

In den erfindungsgemäß einsetzbaren Katalysator-Systemen werden Katalysatoren der allgemeinen Formeln (G), (H) und (K) eingesetzt, worin **Z¹ und Z²** gleich oder verschieden sind und neutrale Elektronen-Donoren darstellen. Diese Liganden sind üblicherweise schwach koordinierend.

Typischerweise handelt es sich um optional substituierte heterocyclische Gruppen. Hierbei kann es sich um fünf- oder sechsgliedrige monocyclische Gruppen mit 1 bis 4, bevorzugterweise 1 bis 3 und besonders bevorzugt 1 oder 2 Heteroatomen handeln oder um zwei- oder polycyclische Strukturen aus 2, 3, 4 oder 5 solcher fünf- oder sechsgliedriger monocyclischer Gruppen, wobei alle jeweils vorgenannten Gruppen optional durch ein oder mehrere Alkyl, bevorzugt C₁-C₁₀-Alkyl, Cycloalkyl, bevorzugt C₃-C₈-Cycloalkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂₃ Heteroaryl-Reste, die jeweils erneut durch ein oder mehrere Gruppen, bevorzugt ausgewählt aus der Gruppe bestehend aus Halogen, inbesondere Chlor oder Brom, C₁-C₅-Alkyl, C₁-C₅-Alkoxy und Phenyl substituiert sein können.

Beispiele für Z¹ und Z² umfassen Stickstoff enthaltende Heterocyclen wie Pyridine, Pyridazine, Bipyridine, Pyrimidine, Pyrazine, Pyrazolidine, Pyrrolidine, Piperazine, Indazole, Quinoline, Purine, Acridine, Bisimidazole, Picolylimine, Imidazolidine and Pyrrole.

Z¹ und Z² können auch miteinander verbrückt sein unter Ausbildung einer cyclischen Struktur. In diesem Fall handelt es sich bei Z¹ und Z² um einen einzigen zweizähnigen Liganden.

### L

In den Katalysatoren der allgemeinen Formeln (G), (H) und (K) kann L die gleichen Bedeutungen annehmen wie L in der allgemeinen Formel (B).

### R²¹ und R²²

In den Katalysatoren der allgemeinen Formeln (G), (H) und (K) sind **R²¹ und R²²** gleich oder verschieden und bedeuten Alkyl, bevorzugt C₁-C₃₀-Alkyl, besonders bevorzugt C₁-C₂₀-Alkyl, Cycloalkyl, bevorzugt C₃-C₂₀-Cycloalkyl, besonders bevorzugt C₃-C₈-Cycloalkyl, Alkenyl, bevorzugt C₂-C₂₀-Alkenyl, besonders bevorzugt C₂-C₁₆-Alkenyl, Alkinyl, bevorzugt C₂-C₂₀-Alkinyl, besonders bevorzugt C₂-C₁₆-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulphonyl, oder Alkylsulfinyl, bevorzugt C₁-C₂₀-Alkylsulphinyl, wobei die vorgenannten Substituenten durch einen oder mehrere Alkyl, Halogen, Alkoxy, Aryl oder Heteroaryl Reste substituiert sein können.

### X¹ und X²

In den Katalysatoren der allgemeinen Formeln (G), (H) und (K) sind **X¹ und X²** gleich oder verschieden und können die gleichen allgemeinen, bevorzugten und besonders bevorzugten Bedeutungen haben wie zuvor für X¹ und X² in der allgemeinen Formel (A) angegeben.

Bevorzugt werden Katalysatoren der allgemeinen Formel (G), (H) und (K) eingesetzt, wobei
- M: Ruthenium ist,
- X¹ und X²: beide Halogen, insbesondere Chlor darstellen,
- R¹ und R²: gleich oder verschieden sind und fünf- oder sechsgliedrige monocyclische Gruppen mit 1 bis 4, bevorzugterweise 1 bis 3 und besonders bevorzugt 1 oder 2 Heteroatomen darstellen oder zwei- oder polycyclische Strukturen aus 2, 3, 4 oder 5 solcher fünf- oder sechsgliedriger monocyclischer Gruppen, wobei alle jeweils vorgenannten Gruppen durch ein oder mehrere Alkyl, bevorzugt C₁-C₁₀-Alkyl, Cycloalkyl, bevorzugt C₃-C₈-Cycloalkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂₃ Heteroaryl-Reste substituiert sein können,
- R²¹ und R²²: gleich oder verschieden sind und C₁-C₃₀-Alkyl C₃-C₂₀-Cycloalkyl, C₂-C₂₀-Alkenyl, C₂-C₂₀-Alkinyl, C₆-C₂₄-Aryl, C₁-C₂₀-Carboxylate, C₁C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₃₀-Alkylamino, C₁-C₃₀-Alkylthio, C₆-C₂₄-Arylthio, C₁-C₂₀-Alkylsulfonyl, C₁-C₂₀-Alkylsulfinyl darstellen, und
- L: eine Struktur der bereits zuvor beschriebenen allgemeinen Formeln (IIa) oder (IIb), inbesondere der Formeln (IIIa) bis (IIIf) besitzt.

Ein besonders bevorzugter Katalysator, der unter die allgemeine Formel (G) fällt, besitzt die Struktur (XIX), 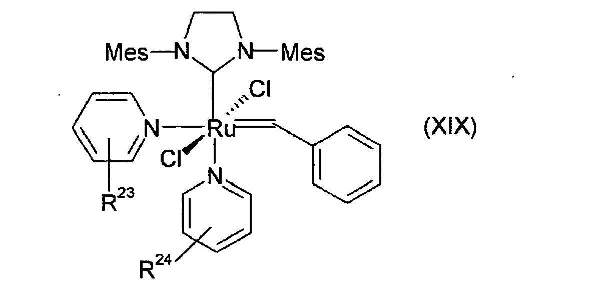 worin
- R²³ und R²⁴: gleich oder verschieden sind und Halogen, geradkettiges oder verzweigtes C₁-C₂₀ Alkyl, C₁-C₂₀ Heteroalkyl, C₁-C₁₀ Haloalkyl, C₁-C₁₀ Alkoxy, C₆-C₂₄ Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl. Carbamido, Thioformyl, Amino, Dialkylamino, Trialkylsilyl und Trialkoxysilyl bedeuten.

Die vorgenannten Reste C₁-C₂₀ Alkyl, C₁-C₂₀ Heteroalkyl, C₁-C₁₀ Haloalkyl, C₁-C₁₀ Alkoxy, C₆-C₂₄ Aryl, bevorzugt Phenyl, Formyl, Nitro, Stickstoff-Heterocyclen, bevorzugt Pyridin, Piperidin and Pyrazin, Carboxy, Alkylcarbonyl, Halocarbonyl, Carbamoyl, Thiocarbomoyl, Carbamido, Thioformyl, Amino, Trialkylsilyl und Trialkoxysilyl können jeweils wieder durch ein oder mehrere Reste Halogen, bevorzugt Fluor, Chlor oder Brom, C₁-C₅-Alkyl, C₁-C₅-Alkoxy oder Phenyl substituiert sein.

Besonders bevorzugte Ausführungsformen des Katalysators der Formel (XIX) besitzen die Strukturen (XIX a) oder (XIX b), wobei R²³ und R²⁴ die gleichen Bedeutungen besitzen wie in der Formel (XIX) angegeben.

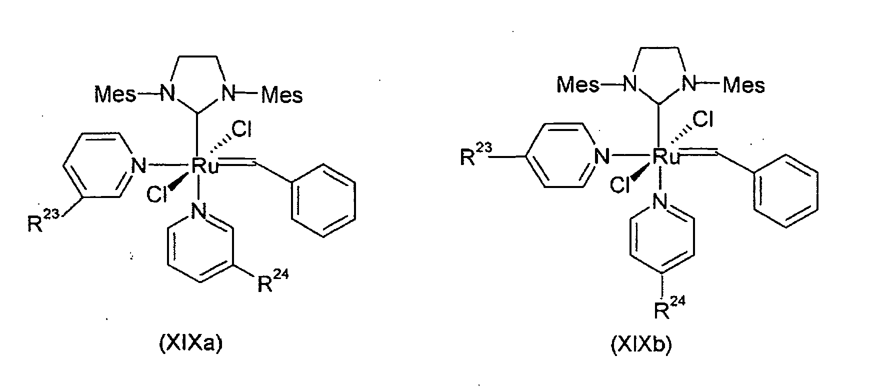

Wenn R²³ und R²⁴ Wasserstoff bedeuten, wird in der Literatur vom sogenannten **"Grubbs III Katalysator"** gesprochen.

Weitere geeignete Katalysatoren, die unter die allgemeinen Formeln (G), (H) und (K) fallen, besitzen die nachfolgend genannten Strukturformen (XX)-(XXXI), wobei Mes jeweils für 2,4,6-Trimethylphenyl steht.

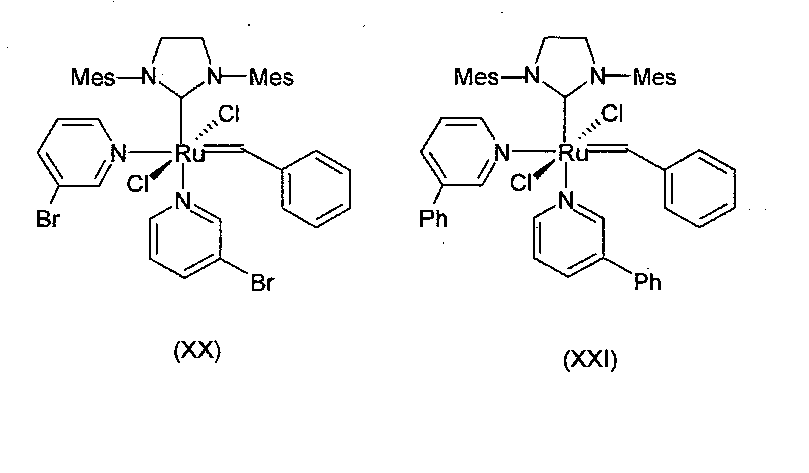

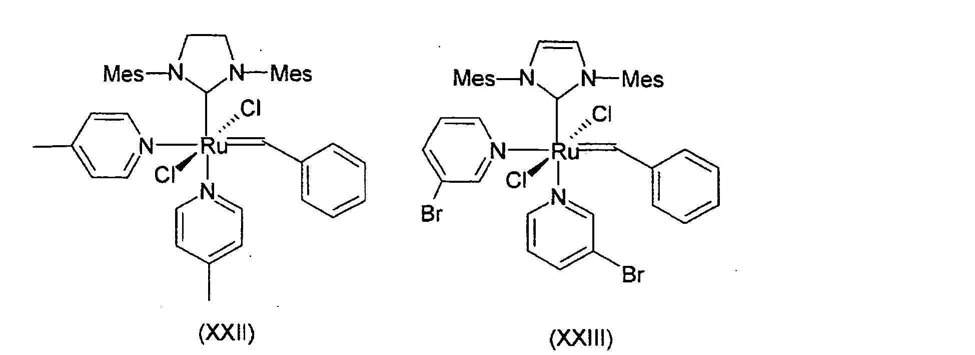

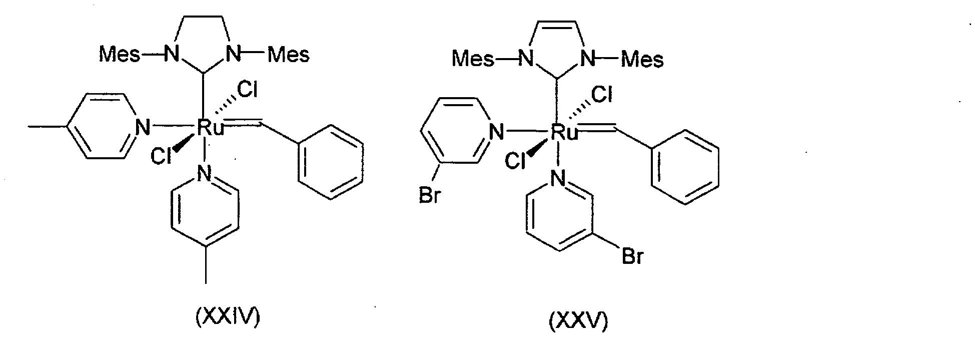

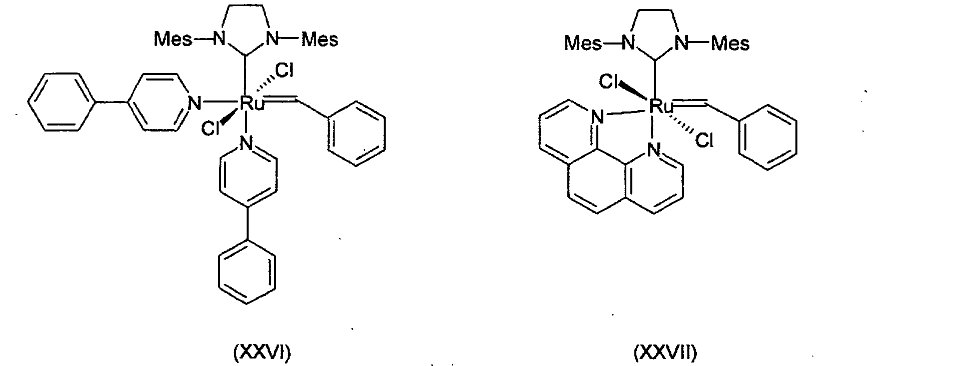

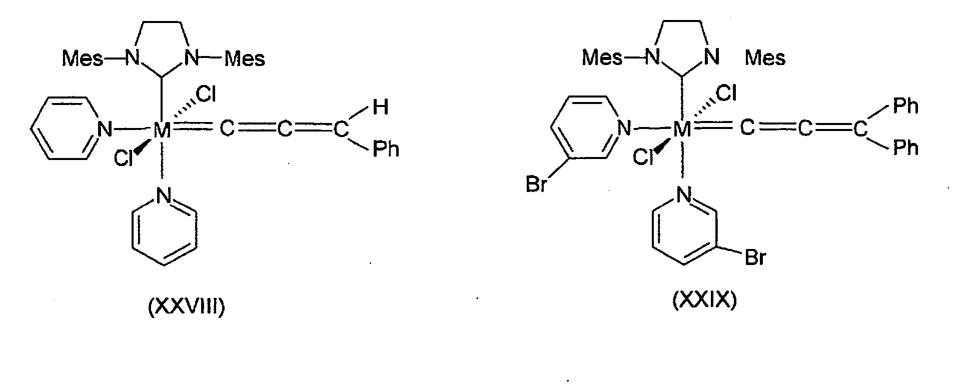

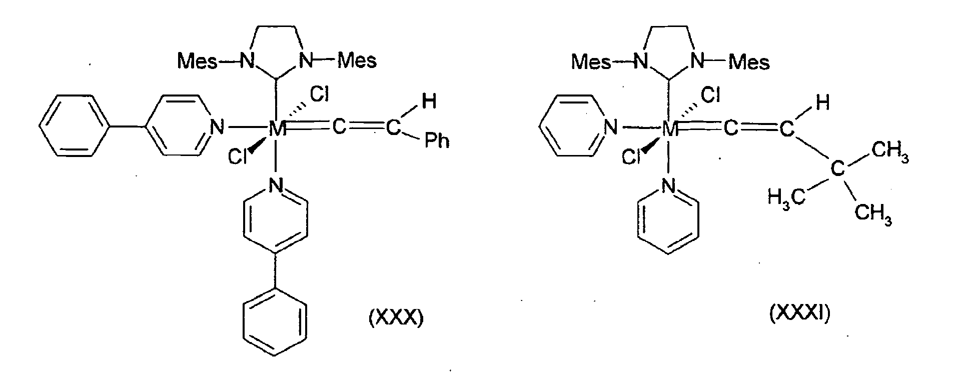

Für den Einsatz im erfindungsgemäßen Verfahren kann die Verbindung der allgemeinen Formel (1) in einem Lösungs- oder Dispergiermittel oder auch ohne Lösungs- bzw. Dispergiermittel zum Metathese-Katalysator oder zu einer Lösung des Metathese-Katalysators gegeben werden und diese Mischung dann mit dem abzubauenden Nitrilkautschuk in Kontakt gebracht werden. Alternativ dazu kann die Verbindung der allgemeinen Formel (I) auch direkt einer Lösung des abzubauenden Nitrilkautschuks zugegeben werden, der darüber hinaus der Metathese-Katalysator zugegeben wird.

Als Lösungsmittel bzw. Dispergiermittel, mit dem die Verbindung der allgemeinen Formel (I) dem Katalysator bzw. dessen Lösung zugesetzt wird, können alle bekannten Lösungsmittel verwendet werden. Für die Wirksamkeit der Verbindung der allgemeinen Formel (I) ist es nicht unbedingt erforderlich, dass die Verbindung der allgemeinen Formel (I) in dem Lösungsmittel eine erhebliche Löslichkeit aufweist. Bevorzugte Lösungs-/Dispergiermittel umfassen, sind aber nicht beschränkt auf, Aceton, Benzol, Chlorbenzol, Chloroform, Cyclohexan, Dichlormethan, Dioxan, Dimethylformamid, Dimethylacetamid, Dimethylsulfon, Dimethylsufoxid, Methylethylketon, Tetrahydrofuran, Tetrahydropyran und Toluol. Vorzugsweise ist das Lösungs-/Dispergiermittel gegenüber dem Metathesekatalysator inert.

Im erfindungsgemäßen Verfahren wird der Metathese-Katalysator und die Verbindung der allgemeinen Formel (I) in einem Mol-Verhältnis Metathese-Katalysator zu Verbindung der allgemeinen Formel (I) von 1:1000 bis 1:1, bevorzugt 1:100 bis 1:1, besonders bevorzugt 1:25 bis 1:1 1 eingesetzt.

Die Menge, in der die Verbindung der allgemeinen Formel (I) bezogen auf den abzubauenden Nitrilkautschuk verwendet werden, liegt in einem Bereich von 0,0005 phr bis 5 phr, bevorzugt 0,005 phr bis 2,5 phr (phr = Gew.Teile auf 100 Gew.-Teile Kautschuk).

Die Menge des Metathese-Katalysators bezogen auf den eingesetzten Nitrilkautschuk hängt von der Natur sowie katalytischen Aktivität des speziellen Katalysators ab. Die Menge an eingesetztem Katalysator beträgt üblicherweise 1 bis 1.000 ppm Edelmetall, bevorzugt 2 bis 500 ppm, insbesondere 5 bis 250 ppm, bezogen auf den eingesetzten Nitrilkautschuk.

Die NBR-Metathese kann in Abwesenheit oder aber in Gegenwart eines Co-Olefins durchgeführt werden. Bei diesem handelt es sich bevorzugt um ein geradkettiges oder verzweigtes C₂-C₁₆-Olefin. Geeignet sind beispielsweise Ethylen, Propylen, Isobuten, Styrol, 1-Hexen oder 1-Octen. Bevorzugt wird 1-Hexen oder 1-Octen verwendet. Sofern das Co-Olefin flüssig ist (wie beispielsweise 1-Hexen), liegt die Menge des Co-Olefins bevorzugt in einem Bereich von 0,2-20 Gew.% bezogen auf den eingesetzten NBR. Sofern das Co-Olefin ein Gas ist, wie beispielsweise Ethylen, wird die Menge des Co-Olefins so gewählt, dass sich im Reaktionsgefäß bei Raumtemperatur ein Druck im Bereich von 1 x 10⁵ Pa - 1 x 10⁷ Pa einstellt, bevorzugt ein Druck im Bereich von 5,2 x 10⁵ Pa bis 4 x 10⁶ Pa.

Die Metathese-Reaktion kann in einem geeigneten Lösungsmittel durchgeführt werden, welches den eingesetzten Katalysator nicht deaktiviert und die Reaktion auch nicht in irgendeiner anderen Weise negativ beeinflusst. Bevorzugte Lösungsmittel umfassen, sind aber nicht begrenzt auf, Dichlormethan, Benzol, Toluol, Methylethylketon, Aceton, Tetrahydrofuran, Tetrahydropyran, Dioxan und Cyclohexan. Das besonders bevorzugte Lösungsmittel ist Chlorbenzol. In manchen Fällen, wenn das Co-Olefin selbst als Lösungsmittel fungieren kann, so z.B. bei 1-Hexen, kann auch auf den Zusatz eines weiteren zusätzlichen Lösungsmittels verzichtet werden.

Die Konzentration des eingesetzten Nitrilkautschuks in der Reaktionsmischung der Metathese ist nicht kritisch, aber es ist natürlich zu beachten, dass die Reaktion nicht durch eine viel zu hohe Viskosität der Reaktionsmischung und die damit verbundenen Mischungsprobleme negativ beeinflusst werden sollte. Bevorzugt liegt die Konzentration des NBR in der Reaktionsmischung im Bereich von 1 bis 25 Gew.%, besonders bevorzugt im Bereich von 5 bis 20 Gew.%, bezogen auf die gesamte Reaktionsmischung.

Der Metathese Abbau wird üblicherweise bei einer Temperatur im Bereich von 10°C bis 150°C durchgeführt, bevorzugt bei einer Temperatur im Bereich von 20 bis 100 °C.
Die Reaktionszeit hängt von einer Reihe von Faktoren ab, beispielsweise vom Typ des NBR, der Art des Katalysators, der verwendeten Katalysator-Konzentration und der Reaktionstemperatur. Typischerweise ist die Reaktion innerhalb von fünf Stunden unter normalen Bedingungen beendet.

Der Fortschritt der Metathese kann durch Standard-Analytik überwacht werden, z.B. durch GPC-Messungen oder durch Bestimmung der Viskosität.

Als Nitrilkautschuke ("NBR") können in die Metathese-Reaktion Co- oder Terpolymere eingesetzt werden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten.

Das konjugierte Dien kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Einen besonders bevorzugten Nitrilkautschuk stellt somit ein Copolymer aus Acrylnitril und 1,3-Butadien dar.

Neben dem konjugierten Dien und dem α,β-ungesättigten Nitril können noch ein oder mehrere weitere dem Fachmann bekannte, copolymerisierbare Monomere eingesetzt werden, z.B. α,β-ungesättigte Mono- oder Dicarbonsäuren, deren Ester oder Amide. Als α,β-ungesättigte Mono- oder Dicarbonsäuren sind dabei Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Alkylester der α,β-ungesättioten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxyalkylester der α,β-ungesättigten Carbonsäuren sind Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten.

Die Anteile an konjugiertem Dien und α,β-ungesättigtem Nitril in den einzusetzenden NBR-Polymeren können in weiten Bereichen schwanken. Der Anteil des oder der Summe der konjugierten Diene liegt üblicherweise im Bereich von 40 bis 90 Gew.-%, bevorzugt im Bereich von 60 bis 85 Gew. %, bezogen auf das Gesamtpolymer. Der Anteil des oder der Summe der α,β-ungesättigten Nitrile liegt üblicherweise bei 10 bis 60 Gew.-%, bevorzugt bei 15 bis 40 Gew.-%, bezogen auf das Gesamtpolymer. Die Anteile der Monomere summieren sich jeweils zu 100 Gew.% auf. Die zusätzlichen Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die Herstellung der Nitrilkautschuke durch Polymerisation der vorgenannten Monomere ist dem Fachmann hinlänglich bekannt und in der Polymerliteratur umfangreich beschrieben.

Nitrilkautschuke, die im erfindungsgemäßen Sinn verwendet werden können, sind ferner käuflich erhältlich, z.B. als Produkte aus der Produktreihe der Marken Perbunan^{®} und Krynac^{®} von der Lanxess Deutschland GmbH.

Die zur Metathese eingesetzten Nitrilkautschuke besitzen eine Mooney-Viskosität (ML 1+4 bei 100°C) im Bereich von 30 bis 70, bevorzugt von 30 bis 50. Dies entspricht einem Gewichtsmittel des Molekulargewicht M_{w} im Bereich von 150.000 - 500.000, bevorzugt im Bereich von 180.000-400.000. Die eingesetzten Nitrilkautschuke besitzen ferner eine Polydispersität PDI = M_{w}/Mₙ, wobei M_{w} das Gewichtsmittel und Mₙ das Zahlenmittel des Molekulargewichts darstellt, im Bereich von 2,0 - 6,0 und bevorzugt im Bereich von 2,0 - 4,0.

Die Bestimmung der Mooney-Viskosität erfolgt dabei gemäß ASTM Norm D 1646.

Die durch das erfindungsgemäße Metathese-Verfahren erhaltenen Nitrilkautschuke besitzen eine Mooney-Viskosität (ML 1+4 bei 100°C) im Bereich von 5 - 30, bevorzugt von 5 - 20 Dies entspricht einem Gewichtsmittel des Molekulargewicht M_{w} im Bereich von 10.000 - 100.000, bevorzugt im Bereich von 10.000-80.000. Die erhaltenen Nitrilkautschuke besitzen ferner eine Polydispersität PDI = M_{w}/Mₙ, wobei Mₙ das Zahlenmittel des Molekulargewichts darstellt, im Bereich 1,4 - 4,0 bevorzugt im Bereich von 1,5 - 3.

An den Metathese Abbau in Gegenwart des erfindungsgemäßen Katalysator-Systems kann sich eine Hydrierung der erhaltenen abgebauten Nitrilkautschuke anschließen. Diese kann in der dem Fachmann bekannten Art und Weise erfolgen.

Es ist möglich, die Hydrierung unter Einsatz homogener oder heterogener Hydrierkatalysatoren durchzuführen. Es ist ferner möglich, die Hydrierung in-situ durchzuführen, d.h. in dem gleichen Reaktionsgefäß, in dem zuvor auch der Metathese-Abbau erfolgte und ohne Notwendigkeit den abgebauten Nitrilkautschuk zu isolieren. Der Hydrierkatalysator wird einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**).**

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Rutheniumhaltigen Katalysators erreicht werden. Einsetzbar ist beispielsweise ein Katalysator der allgemeinen Formel

(R¹ ₘB)₁ MXₙ

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇₋C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(111)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkyl-monocycloalkyl, Dicycloalkyl-monoaryl oder Dicyclalkyl-monoaryl-Resten.

Beispiele von Co-Katalysatoren finden sich beispielsweise in US-A-4,631,315**.** Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Nach Abschluss der Hydrierung erhält man einen hydrierten Nitrilkautschuk mit einer Mooney-Viskosität (ML 1+4 bei 100°C), gemessen gemäß ASTM Norm D 1646, im Bereich von 10 - 50, bevorzugt von 10 bis 30. Dies entspricht einem Gewichtsmittel des Molekulargewicht M_{w} im Bereich von 2.000 - 400.000 g/mol, bevorzugt im Bereich von 20.000 - 200.000. Die erhaltenen hydrierten Nitrilkautschuke besitzen ferner eine Polydispersität PDI= M_{w}/Mₙ, wobei M_{w} das Gewichtsmittel und Mₙ das Zahlenmittel des Molekulargewichts darstellt, im Bereich von 1- 5 und bevorzugt im Bereich von 1,5 - 3.

### BEISPIELE

In den nachfolgenden Versuchsserien wurden folgende **Katalysatoren** verwendet:

| **Bezeichnung des Katalysators** | **Struktur-Formel** | **Molekulargewicht Mw [g/mol]** | **Quelle** |
|---|---|---|---|
| Grubbs-II-Katalysator | 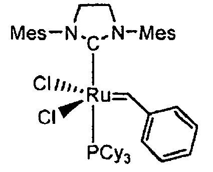 | 848,33 | Firma Materia / Pasadena; USA |
| Grubbs-Hoveyda Katalysator | 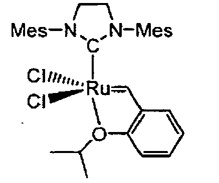 | 626,14 | Firma Materia / Pasadena; USA |
| Grela-Katalysator | 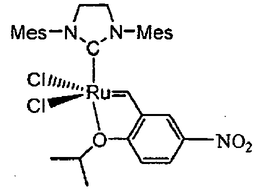 | 671,13 | Herstellung gemäß J. Org. Chem. 2004, 69, 6894-6896 |
| Nolan-Katalysator | 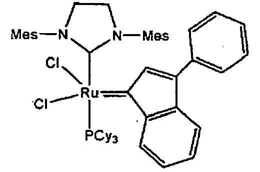 | 949,37 | Umicore S.A./ Brüssel, Belgien |

Für die Versuche wurden folgende Katalysatorzusätze verwendet, die alle von Acros Organics bezogen wurden:

| **Bezeichnung des Katalysator-Zusatzes** | **Struktur-Formel** | **Molgewicht [g/mol]** |
|---|---|---|
| Tetra-iso-propoxytitanat | Ti(OC₃H₇)₄ | 284,26 |
| Tetra-tert.-butoxytitanat | Ti(OC₄H₉)₄ | 340,33 |
| Tetra-n-butoxytitanat | Ti(OC₄H₉)₄ | 340,35 |
| Tetraethoxytitanat | Ti(OC₂H₅)₄ | 228,13 |
| Tetraethoxyniobdat | Nb(OC₂H₅)₅ | 318,21 |
| Tetraethoxytantalat | Ta(OC₂H₅)₅ | 406,25 |
| Tetra-tert-butoxyzirkonat | Zr(OC₂H₅)₄ | 383,68 |

### Eingesetzter Nitrilkautschuk:

Die in den nachfolgenden Versuchserien beschriebenen Abbaureaktionen wurden unter Einsatz des Nitrilkautschuks Perbunan^{®} NT 3435 der Lanxess Deutschland GmbH durchgeführt. Dieser Nitrilkautschuk wies folgende charakteristischen Kenngrößen auf:

| | |
|---|---|
| Acrylnitrilgehalt: | 34,6 Gew.% |
| Mooney-Viskosität (ML 1+4 @100°C): | 33 Mooney-Einheiten |
| Restfeuchte: | 0,9 Gew.% |
| M_{w}: | 204.000 g/mol |
| Mₙ: | 89.000 g/mol |
| PDI (M_{w} / Mₙ): | 2,3 |

### Durchführung der Metathese:

Zur Durchführung der Metathese wurde der Nitrilkautschuk innerhalb von 12 Stunden in Chlorbenzol gelöst (12 Gew.%; die genauen Mengenangaben für den Nitrilkautschuk sowie das Chlorbenzol sind in den nachfolgenden Tabellen der Versuchsserien angegeben). Anschließend wurden nacheinander 1-Hexen, die jeweilige Lewis Säure sowie der Katalysator zugegeben. Die Reaktionstemperatur betrug 20°C. Der Abbruch der Metathese-Reaktion erfolgte mit Ethylvinylether für mindestens 30 min.

### GPC-Probenvorbereitung:

Für die Durchführung der Molekulargewichtsbestimmung mit GPC wurden 100 mg Probe des nach der Metathese erhaltenen Nitrilkautschuks in 3,5 ml N,N'-Dimethylacetamid gelöst (mit LiBr stabilisiert, 0,075M). Anschließend wurde mit Hilfe eines Spritzenfilters filtriert (0,2 µm Porengröße).

### GPC-Messung:

| | |
|---|---|
| Pumpe: | Waters Mod. 510 |
| RI-Detektor: | Waters Model 410 Differential Refraktometer |
| Flussgeschwindigkeit: | 1 ml/min |
| Eluent: | N,N'-Dimethylacetamid |
| Temperatur: | 80°C |
| Säulensatz: | 2x Resipore 300x7,5 mm, Porengrösse 3 µm |
| Kalibrierstandard: | PS (Polymer Standard Service); mit Molmassen von 960 bis 6 x 10⁵ g/mol. |

### Überblick über die durchgeführten Versuchsserien:

| **Versuchs-serie** | **Katalysator** | **Zusatz** | **Molverhältnis (Katalysator: Zusatz)** |
|---|---|---|---|
| 1.1 | Grubbs-II | - | - |
| 1.2 | Grubbs-II | Tetra-iso-propoxytitanat | 1/1000 |
| 1.3 | Grubbs-II | Tetra-iso-propoxytitanat | 1/500 |
| 1.4 | Grubbs-II | Tetra-iso-propoxytitanat | 1/200 |
| 1.5 | Grubbs-II | Tetra-iso-propoxytitanat | 1/70 |
| 1.6 | Grubbs-II | Tetra-iso-propoxytitanat | 1/22 |
| 1.7 | Grubbs-II | Tetra-iso-propoxytitanat | 1/11 |
| 1.8 | Grubbs-II | Tetra-iso-propoxytitanat | 1/5 |
| 1.9 | Grubbs-II | Tetra-tert.-butoxytitanat | 1/22 |
| 1.10 | Grubbs-II | Tetra-n-butoxytitanat | 1/22 |
| 1.11 | Grubbs-II | Tetraethoxytitanat | 1/22 |
| 1.12 | Grubbs-II | Tetraethoxyniobdat | 1/22 |
| 1.13 | Grubbs-II | Tetraethoxytantalat | 1/22 |
| 1.14 | Grubbs-II | Tetra-tert-butoxyzirkonat | 1/22 |
| 2.1 | Grubbs-Hoveyda- | - | - |
| 2.2 | Grubbs-Hoveyda- | Tetra-iso-propoxytitanat | 1/22 |
| 3.1 | Grela | - | - |
| 3.2 | Grela | Tetra-iso-propoxytitanat | 1/22 |
| 4.1 | Nolan | - | - |
| 4.2 | Nolan | Tetra-iso-propoxytitanat | 1/22 |

### Versuchsserie 1: Grubbs-II-Katalysator

### Serie 1.1

| **HBR** | **Grubbs-II-Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | 91 | 51 | 1,8 |
| [g] | [mg] | [phr] | [g] | [phr] | | [g] | 60 | 77 | 48 | 1,6 |
| | | | | | | | 185 | 56 | 36 | 1,6 |
| 40 | 20 | 0,05 | 0,8 | 2,0 | - | - | 425 | 52 | 29 | 1,8 |

### Serie 1.2

| **NBR** | **Grubbs-II-Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | - | - | - |
| [g] | [mg] | [phr] | [g] | [phr] | | [g] | 60 | - | - | - |
| | | | | | | | 185 | 37 | 21 | 1,7 |
| 40 | 20 | 0,05 | 0,8 | 2,0 | **Ti-(IV)-iso- propylat** | **6,7** | 425 | 21 | 13 | 1,6 |

### Serie 1.3

| **NBR** | **Grubbs-II- Katalysator** | | **1-Hexen** | | **Zusatz** | | **Zeit [min.]** | **Mw [kg/mol]** | **Mn** [**kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | - | - | - |
| [g] | [mg] | [phr] | [g] | [phr] | | [g] | 60 | - | - | - |
| | | | | | | | 185 | 37 | 21 | 1,8 |
| 40 | 20 | 0,05 | 0,8 | 2,0 | **Ti-(IV)- isopropylat** | **3,35** | 425 | 22 | 11 | 2,0 |

### Serie 1.4

| **NBR** | **Gruhbs-II- Katalysator** | | **1-Hexen** | | **Zusatz** | | **Zeit** [**min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | 91 | 42 | 2,2 |
| [g] | [mg] | [phr] | [g] | [phr] | | [g] | 60 | 64 | 30 | 2,1 |
| | | | | | | | 185 | 24 | 11 | 2,2 |
| 40 | 20 | 0,05 | 0,8 | 2,0 | **Ti-(IV)-isopropylat** | **1,34** | 425 | 17 | 9 | 1,9 |

### Serie 1.5

| **NBR** | **Grubbs-II- Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf. NBR | Art | Menge | 0 | 204 | 89 | 2,3 |
| | | | | | | | 30 | - | - | - |
| [g] | [mg] | [phr] | [g] | [phr] | | [g] | 60 | 72 | 38 | 1,9 |
| | | | | | | | 185 | 32 | 20 | 1,6 |
| 40 | 20 | 0,05 | 0,8 | 2,0 | **Ti-(IV)- isopropylat** | **0,46** | 425 | 24 | 15 | 1,6 |

### Serie 1.6

| **NBR** | **Grubbs-II- Katalysator** | | **1-Hexen** | | **Zusatz** | | **Zeit [min.]** | **M [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | - | - | - |
| [g] | [mg] | [phr] | [g] | [phr] | | [g] | 60 | 59 | 33 | 1,8 |
| | | | | | | | 185 | 27 | 15 | 1,8 |
| 40 | 20 | 0,05 | 0,8 | 2,0 | **Ti-(IV)-isopropylat** | **0,15** | 425 | 18 | 11 | 1,7 |

### Serie 1.7

| **NBR** | **Grubbs-II-Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | - | - | - |
| [g] | [mg] | [phr] | [g] | [phr] | | [g] | 60 | - | - | - |
| | | | | | | | 185 | 51 | 29 | 1,8 |
| 40 | 20 | 0,05 | 0,8 | 2,0 | **Ti-(IV)-isopropylat** | **0,074** | 425 | 30 | 18 | 1,7 |

### Serie 1.8

| **HNBR** | **Grubbs-II-Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | - | - | - |
| [g] | [mg] | [phr] | [g] | [phr] | | [g] | 60 | 76 | 39 | 2,0 |
| | | | | | | | 185 | 40 | 18 | 2,2 |
| 40 | 20 | 0,05 | 0,8 | 2,0 | **Ti-(IV)-isopropylat** | **0,034** | 425 | 30 | 14 | 2,1 |

### Serie 1.9

| **NBR** | **Grubbs-II- Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | - | - | - |
| [g] | [mg] | [phr] | [g] | [phr] | | [g] | 60 | 72 | 42 | 1,7 |
| | | | | | | | 185 | 35 | 22 | 1,6 |
| 40 | 20 | 0,05 | 0,8 | 2,0 | **Ti-(IV)-tert-butylat** | **0,178** | 425 | 23 | 13 | 1,7 |

### Serie 1.10

| **NBR** | **Grubbs-II- Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | - | - | - |
| [g] | [mg] | [phr] | [g] | [phr] | | [g] | 60 | - | - | - |
| | | | | | | | 185 | 40 | 22 | 1,8 |
| 40 | 20 | 0,05 | 0,8 | 2,0 | **Ti-(IV)-n-Butylat** | **0,178** | 425 | 30 | 16 | 1,9 |

### Serie 1.11

| **NBR** | **Grubbs-II- Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | - | - | - |
| [g] | [mg] | [phr] | [g] | [phr] | | [g] | 60 | 56 | 27 | 2,1 |
| | | | | | | | 185 | 29 | 14 | 2,1 |
| 40 | 20 | 0,05 | 0,8 | 2,0 | **Ti-(IV)- ethylat** | **0,119** | 425 | 19 | 10 | 1,9 |

### Serie 1.12

| **HNBR** | **Grubbs-II- Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | - | - | - |
| [g] | [mg] | [phr] | [g] | [phr] | | [g] | 60 | 70 | 29 | 2,5 |
| | | | | | | | 185 | 32 | 16 | 2,0 |
| 40 | 20 | 0,05 | 0,8 | 2,0 | **Nb-(V)-ethylat** | **0,166** | 425 | 20 | 10 | 1,9 |

### Serie 1.13

| **NßR** | **Grubbs-II- Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | - | - | - |
| [g] | [mg] | [phr] | [g] | [phr] | | [g] | 60 | 71 | 36 | 2,0 |
| | | | | | | | 185 | 33 | 15 | 2,2 |
| 40 | 20 | 0,05 | 0,8 | 2,0 | **Ta-(V)- ethylat** | **0,212** | 425 | 22 | 10 | 2,1 |

### Serie 1.14

| **NBR** | **Grubbs-II- Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | - | - | - |
| [g] | [mg] | [phr] | [g] | [phr] | | [g] | 60 | - | - | - |
| | | | | | | | 185 | 45 | 23 | 1,9 |
| 40 | 20 | 0,05 | 0,8 | 2,0 | **Zr-(IV)-tert-Butylat** | **0,201** | 425 | 35 | 16 | 2,2 |

### Versuchsserie 2: Grubbs-Hoveyda-Katalysator

### Serie 2.1

| **NBR** | **Grubbs-Hoveyda-Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | 100 | 48 | 2,1 |
| [g] | [mg] | [phr] | [g] | [phr] | | [g] | 60 | 83 | 43 | 1,9 |
| | | | | | | | 185 | 86 | 48 | 1,8 |
| 40 | 8 | 0,02 | 0,8 | 2,0 | - | - | 425 | 82 | 47 | 1,7 |

### Serie 2.2

| **NBR** | **Grubbs-Hoveyda-Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge [g] | 0 | 204 | 89 | 2,3 |
| | | | | | | | 30 | 71 | 41 | 1,7 |
| [g] | [mg] | [phr] | [g] | [phr] | | | 60 | 59 | 34 | 1,7 |
| | | | | | | | 185 | 54 | 32 | 1,7 |
| 40 | 8 | 0,02 | 0,8 | 2,0 | **Ti-(IV)-isopropylat** | **0,081** | 425 | 51 | 29 | 1,8 |

### Versuchsserie 3: Grela-Katalysator

### Serie 3.1

| **NBR** | **Grela-Katalysator** | | **1-Hexen** | | **Zusatz** | | **Zeit [min.]** | **Mw** [k**g/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 30 | 49 | 34 | 1,4 |
| [g] | [mg] | [phr] | [g] | [phr] | | [g] | 60 | 48 | 31 | 1,6 |
| | | | | | | | 185 | 48 | 29 | 1,6 |
| 40 | 15,8 | 0,040 | 0,8 | 2,0 | - | - | 425 | 50 | 29 | 1,7 |

### Serie 3.2

| **NBR** | **Grela-Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | [g] | 30 | 26 | 16 | 1,6 |
| [g] | [mg] | [phr] | [g] | [phr] | | | 60 | 22 | 15 | 1,5 |
| | | | | | | | 185 | 15 | 9 | 1,6 |
| 40 | 15,8 | 0,039 5 | 0,8 | 2,0 | **Ti-(IV)-isopropylat** | **0,149** | 425 | 12 | 7 | 1,6 |

### Versuchsserie 4: Nolan Katalysator

### Serie 4.1

| **NBR** | **Nolan Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 23 |
| | | | | | | | 60 | 111 | 51 | 2,2 |
| [g] | [mg] | [phr] | [g] | [phr] | | [g] | 185 | 86 | 45 | 1,9 |
| 40 | 44,8 | 0,11 | 0,8 | 2,0 | - | - | 425 | 86 | 45 | 1,9 |

### Serie 4.2

| **NBR** | **Nolan Katalysator** | | **1-Hexen** | | **Zusatz** | | **Zeit [min.]** | **Mw [kg/mol]** | **Mn [kg/mol]** | **PDI** |
|---|---|---|---|---|---|---|---|---|---|---|
| Menge | Menge | bez. auf NBR | Menge | bez. auf NBR | Art | Menge | 0 | 204 | 89 | 2,3 |
| | | | | | | | 60 | - | - | - |
| [g] | [mg] | [phr] | [g] | [phr] | | [g] | 185 | - | - | - |
| 40 | 44,8 | 0,11 | 0,8 | 2,0 | **Ti-(IV)-isopropylat** | 296,5 | 425 | 57 | 31 | 1,9 |

## Patentansprüche

1. Verfahren zum Molekulargewichtsabbau von Nitrilkautschuk, wobei ein Nitrilkautschuk mit einem Metathese-Katalysator, bei dem es sich um einen Komplexkatalysator auf Basis eines Metalls der 6. oder 8. Nebengruppe des Periodensystems handelt, der mindestens einen carbenartig an das Metall gebundenen Liganden aufweist, sowie einer Verbindung der allgemeinen Formel (I)
M(OZ)ₘ (I)
worin
M ein Übergangsmetall der 4., 5. und 6. Nebengruppe des Periodensystems der Elemente darstellt,
m 4, 5 oder 6 ist und
Z gleich oder verschieden ist und einen linearen, verzweigten, aliphatischen, cyclischen, heterocyclischen oder aromatischen Rest mit 1-32 Kohlenstoffatome darstellt, der zusätzlich noch 1 bis 15 Heteroatome aufweisen kann,
in Kontakt gebracht wird.

2. Verfahren nach Anspruch 1, wobei eine Verbindung der allgemeinen Formel (I) eingesetzt wird, in der M Titan, Zirkon, Hafnium, Vanadin, Niob, Tantal, Chrom, Molybdän oder Wolfram bedeutet.

3. Verfahren nach Anspruch 1 oder 2, wobei eine Verbindung der allgemeinen Formel (I) eingesetzt wird, worin Z 1-32 Kohlenstoffatome besitzt und zusätzlich noch 1 bis 15 Heteroatome, bevorzugt Stickstoff oder Sauerstoff, aufweisen kann, und geradkettiges oder verzweigtes C₁-C₃₀-Alkyl, bevorzugt C₁-C₂₀-Alkyl, besonders bevorzugt C₁-C₁₂-Alkyl, C₃-C₂₀-Cycloalkyl, bevorzugt C₃-C₁₀-Cycloalkyl, besonders bevorzugt C₅-C₈-Cycloalkyl, C₂-C₂₀-Alkenyl, bevorzugt C₂-C₁₈-Alkenyl, C₂-C₂₀-Alkinyl-, einen Rest der allgemeinen Formel (-CHZ¹-CHZ¹-A²-)ₚ-CH₂-CH₃, wobei p eine ganze Zahl von 1 bis 10 ist, Z¹ gleich oder verschieden und Wasserstoff oder Methyl bedeuten, bevorzugt die an benachbarten C-Atomen sitzenden Z¹ ungleich sind, und A² Sauerstoff, Schwefel oder -NH bedeutet, einen C₆-C₂₄-Aryl, bevorzugt C₆-C₁₄-Aryl oder einen C₄-C₂₃-Heteroaryl-Rest, wobei diese Heteroaryl-Reste mindestens 1 Heteroatom, bevorzugt Stickstoff oder Sauerstoff aufweisen, darstellt.

4. Verfahren nach Anspruch 1, wobei eine Verbindung der allgemeinen Formel (I) eingesetzt wird, worin
M Titan, Zirkon, Hafnium, Vanadin, Niob, Tantal, Chrom, Molybdän oder Wolfram bedeutet,
m 4, 5 oder 6 ist und
Z Methylat, Ethylat, n-Propylat, i-Propylat, n-Butylat, i-Butylat, tert-Butylat, n-Pentylat, i-Pentylat, t-Pentylat, Dodecanat, Oleat, Phenolat oder sterisch gehindertes Phenolat bedeutet.

5. Verfahren nach Anspruch 1, wobei als Verbindung der allgemeinen Formel (I) Tetraethoxytitanat, Tetraisopropyloxytitanat, Tetra-tert-Butyloxytitanat, Tetra-tert-Butyloxyzirkonat, Pentaethoxyniobat oder Pentaethoxytantalat eingesetzt wird.

6. Verfahren nach einem oder mehreren der Ansprüche 1 bis 5, wobei als Katalysator eine Verbindung der allgemeinen Formel (A) eingesetzt wird, 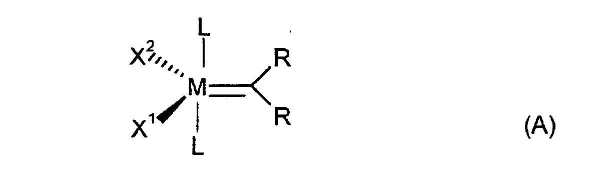 worin
M Osmium oder Ruthenium bedeutet,
X¹ und X² gleich oder verschieden sind und zwei Liganden, bevorzugt anionische Liganden, darstellen,
L gleiche oder verschiedene Liganden, bevorzugt neutrale Elektronen-Donoren darstellen,
R gleich oder verschieden sind und Wasserstoff, Alkyl, bevorzugt C₁-C₃₀-Alkyl, Cycloalkyl, bevorzugt C₃-C₂₀-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, oder Alkylsulfinyl, bevorzugt C₁-C₂₀-Alkylsulfinyl darstellen, wobei diese Reste alle jeweils durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann.

7. Verfahren nach Anspruch 6, wobei X¹ und X² gleich oder verschieden sind und Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl-Reste bedeuten.

8. Verfahren gemäß Anspruch 6 oder 7, wobei X¹ und X² gleich oder verschieden sind und Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat bedeuten.

9. Verfahren gemäß einem oder mehreren der Ansprüche 6 bis 8, wobei X¹ und X² identisch sind und Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat) bedeuten.

10. Verfahren gemäß einem oder mehreren der Ansprüche 6 bis 9, wobei die beiden Liganden L unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin, Thioether- oder einen Imidazolidin("Im")-Liganden bedeuten.

11. Verfahren gemäß Anspruch 10, wobei der Imidazolidinrest (Im) eine Struktur der allgemeinen Formeln (IIa) oder (IIb) auf weist, 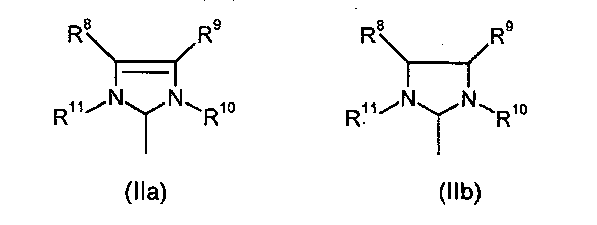 worin
R⁸, R⁹, R¹⁰, R¹¹ gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₁₀-Alkylsulfonat, C₆-C₂₀-Arylsulfonat oder C₁-C₂₀-Alkylsulfinyl bedeuten und diese Reste unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein können, wobei auch diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

12. Verfahren gemäß einem oder mehreren der Ansprüche 1-11, wobei als Katalysator eine Verbindung der allgemeinen Formel (A1) eingesetzt wird, 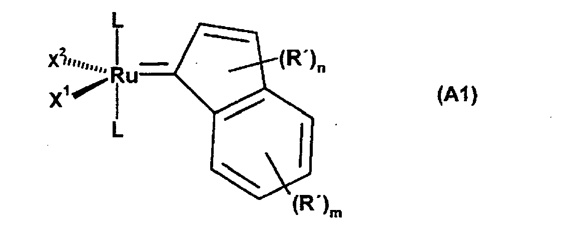 = worin
X¹, X² und L die gleichen allgemeinen, bevorzugten und besonders bevorzugten Bedeutungen haben können wie in der allgemeinen Formel (A) in den Ansprüchen 6-11,
n gleich 0, 1 oder 2 ist,
m gleich 0, 1, 2, 3 oder 4 ist und
R' gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten können, die alle jeweils durch ein oder mehrere Alkyl-, Halogen-, Alkoxy-, Aryl- oder Heteroaryl-Reste substituiert sein können.

13. Verfahren gemäß einem oder mehreren der Ansprüche 1 bis 11, wobei der Katalysator die Struktur (IV), (V) oder (VI) besitzt, wobei Cy jeweils für Cyclohexyl, Mes für 2,4,6-Trimethylphenyl und Ph für Phenyl steht.

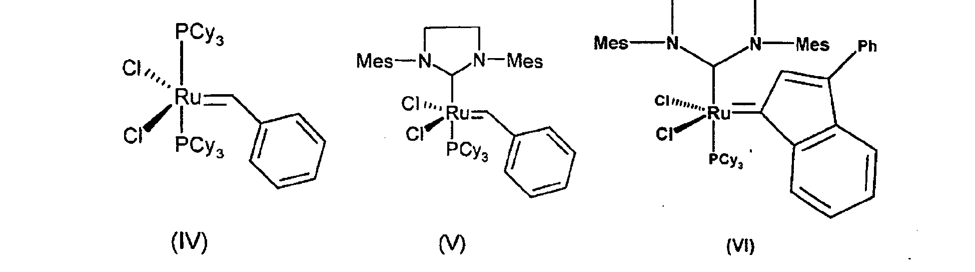

14. Verfahren gemäß einem oder mehreren der Ansprüche 1-5, wobei ein Katalysator der allgemeinen Formel (B) eingesetzt wird, 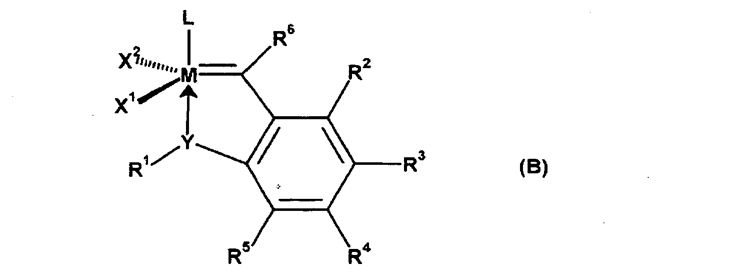 worin
M Ruthenium oder Osmium bedeutet,
Y Sauerstoff (O), Schwefel (S), einen Rest N-R¹ oder einen Rest P-R¹ bedeutet,
X¹ und X² gleiche oder verschiedene Liganden sind,
R¹ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
R², R³, R⁴ und R⁵ gleich oder verschieden sind und Wasserstoff, organische oder anorganische Reste darstellen,
R⁶ Wasserstoff, einen Alkyl-, Alkenyl-, Alkinyl- oder einen Aryl-Rest bedeutet und
L ein Ligand ist, der die gleichen Bedeutungen besitzt, wie der Ligand L in der in Anspruch 6 genannten Formel (A).

15. Verfahren gemäß Anspruch 14, wobei L einen P(R⁷)₃ Rest darstellt, wobei R⁷ unabhängig voneinander C₁-C₆-Alkyl, C₃-C₈-Cycloalkyl oder Aryl bedeuten, oder aber einen gegebenenfalls substituierten Imidazolidinrest ("Im"), der bevorzugt die Struktur der in Anspruch 11 genannten allgemeinen Formeln (IIa) und (IIb) besitzt und besonders bevorzugt eine der nachfolgenden Strukturen (IIIa) bis (IIIf) aufweist, wobei Mes jeweils für 2,4,6-Trimethylphenyl oder alternativ jeweils für einen 2,6-Diisopropylphenyl-Rest steht.

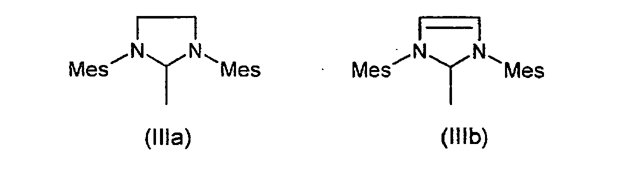

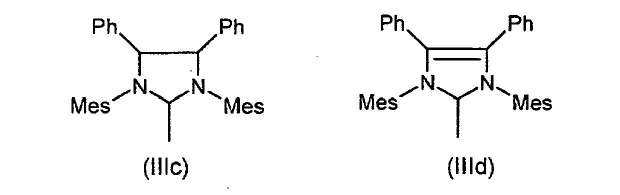

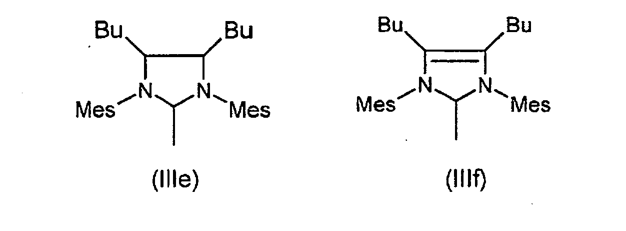

16. Verfahren gemäß Anspruch 14 oder 15, wobei X¹ und X² in der allgemeinen Formel (B) die Bedeutungen annimmt, die X¹ und X² in den Ansprüchen 8-10 besitzen.

17. Verfahren gemäß einem oder mehreren der Ansprüche 14 bis 16, wobei ein Katalysator gemäß der allgemeinen Formel (B1) eingesetzt wird, 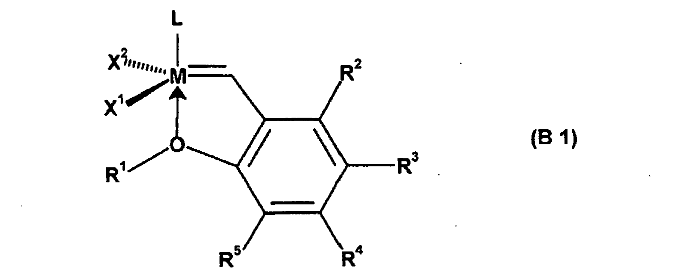 worin
M, L, X¹, X², R¹, R², R³, R⁴ und R⁵ die für die allgemeine Formel (B) in Anspruch 14-16 genannten Bedeutungen besitzen.

18. Verfahren gemäß Anspruch 17, wobei ein Katalysator gemäß der allgemeinen Formel (B1) eingesetzt wird, worin
M Ruthenium bedeutet,
X¹ und X² gleichzeitig Halogen, insbesondere Chlor bedeuten,
R¹ für einen geradkettigen oder verzweigten C₁-C₁₂ Alkylrest steht,
R², R³, R⁴, R⁵ die für die allgemeine Formel (B) in Anspruch 14 genannten Bedeutungen besitzen und
L die für die allgemeine Formel (B) in Anspruch 14 genannten Bedeutungen besitzt.

19. Verfahren gemäß Anspruch 17, wobei ein Katalysator gemäß der allgemeinen Formel (B1) eingesetzt wird, worin
M Ruthenium darstellt,
X¹ und X² gleichzeitig Chlor bedeuten,
R¹ für einen Isopropyl-Rest steht,
R², R³, R⁴, R⁵ alle Wasserstoff bedeuten und
L einen gegebenenfalls substituierten Imidazolidin-Rest der Formeln (IIa) oder (IIb) darstellt, 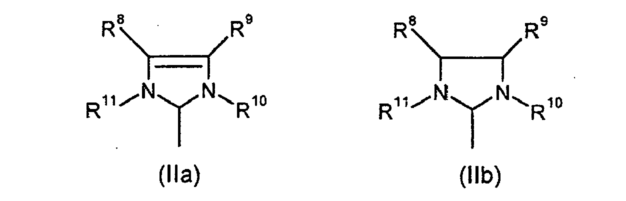
worin
R⁸, R⁹, M¹⁰, R¹¹ gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten.

20. Verfahren gemäß Anspruch 17, wobei als Katalysator der allgemeinen Strukturformel (B 1) ein Katalysator der Strukturen (VII), (VIII), (IX), (X), (XI), (XII), (XIII), (XIV) oder (XV) eingesetzt wird, wobei Mes jeweils 2,4,6-Trimethylphenyl bedeutet.

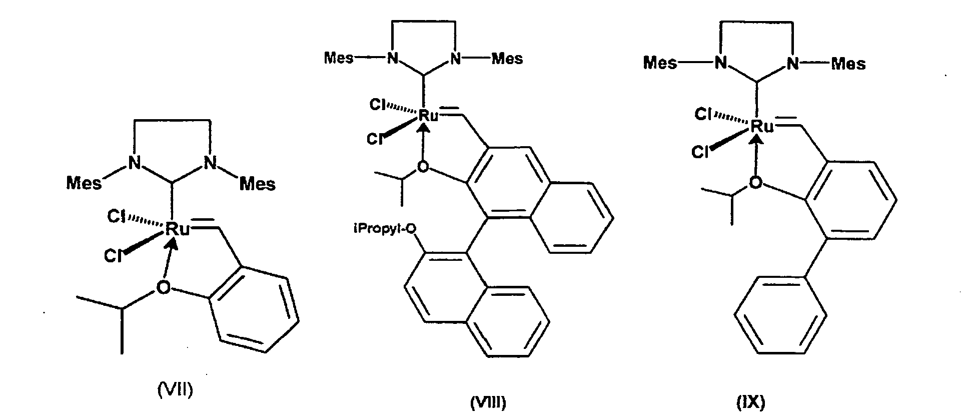

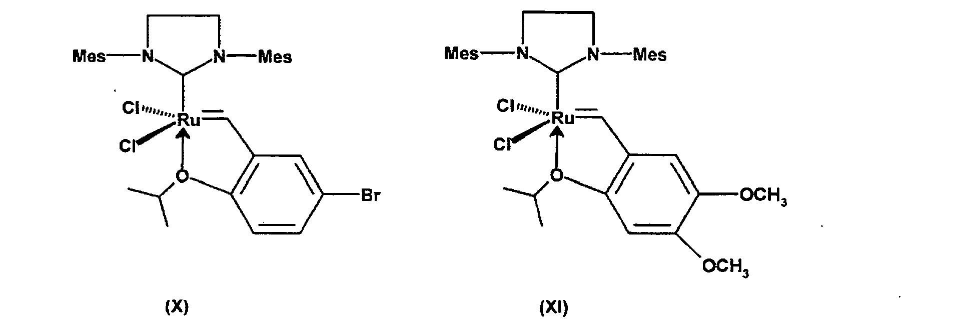

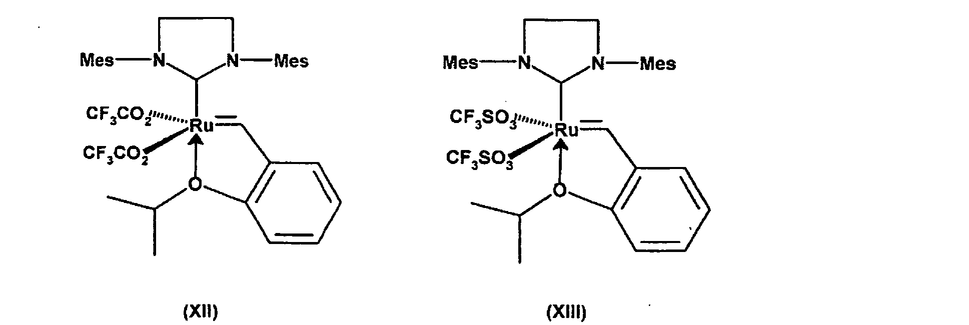

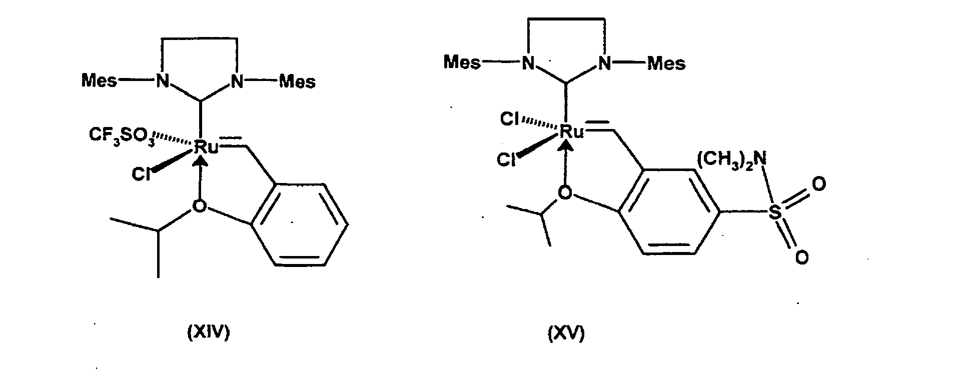

21. Verfahren gemäß Anspruch 14, wobei ein Katalysator der allgemeinen Formel (B2) eingesetzt wird, 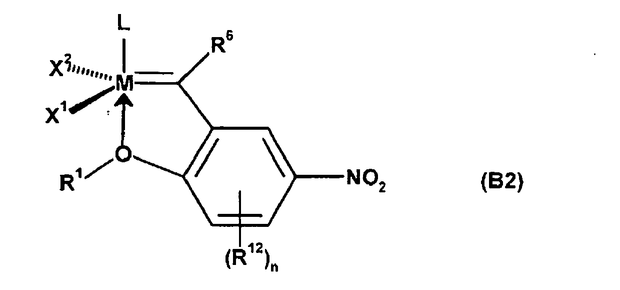 worin
M, L, X¹, X², R¹ und R⁶ die für die allgemeine Formel (B) in Anspruch 14 genannten Bedeutungen haben,
R¹² gleich oder verschieden sind und die für die Reste R², R³, R⁴ und R⁵ in der allgemeinen Formel (B) in Anspruch 14 genannten Bedeutungen, ausgenommen Wasserstoff, besitzen und
n gleich 0, 1, 2 oder 3 ist.

22. Verfahren gemäß Anspruch 21, wobei ein Katalysator der folgenden Strukturen (XVI) oder (XVII) eingesetzt wird, wobei Mes jeweils 2,4,6-Trimethylphenyl bedeutet.

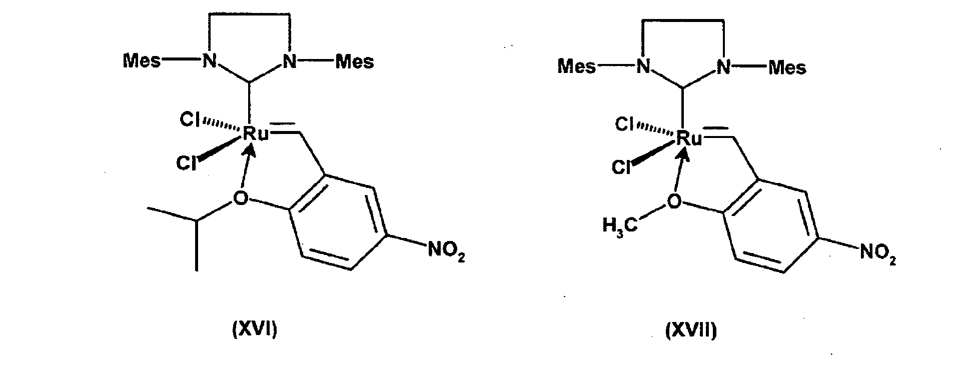

23. Verfahren gemäß Anspruch 14, wobei ein Katalysator der allgemeinen Formel (B3) eingesetzt wird, 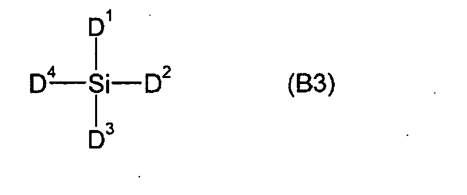 worin D¹, D², D³ und D⁴ jeweils eine Struktur der nachfolgend dargestellten allgemeinen Formel (XVIII) aufweisen, die über die rechts dargestellte Methylengruppe an das Silicium der Formel (B3) angebunden ist und 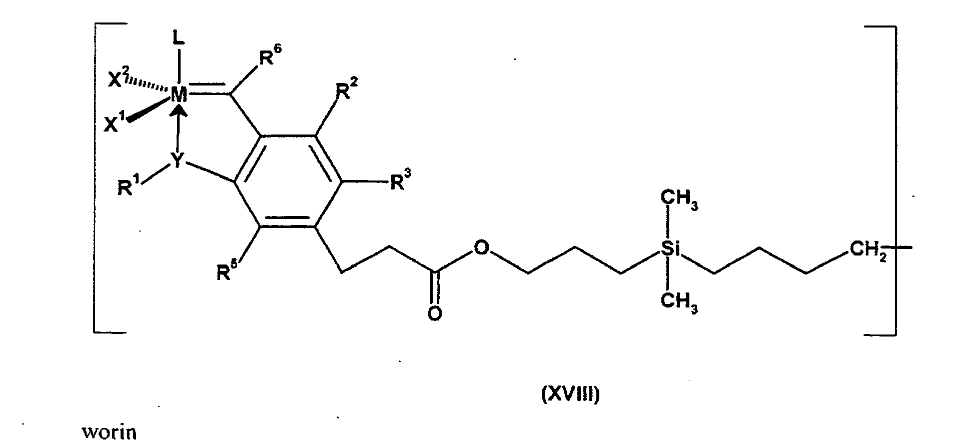
M, L, X¹, X², R¹, R², R³, R⁵ und R⁶ die für die allgemeine Formel (B) in Anspruch 14 genannten Bedeutungen besitzen.

24. Verfahren gemäß einem oder mehreren der Ansprüche 1 bis 5, wobei ein Katalysator allgemeinen Formel (B4) eingesetzt wird, 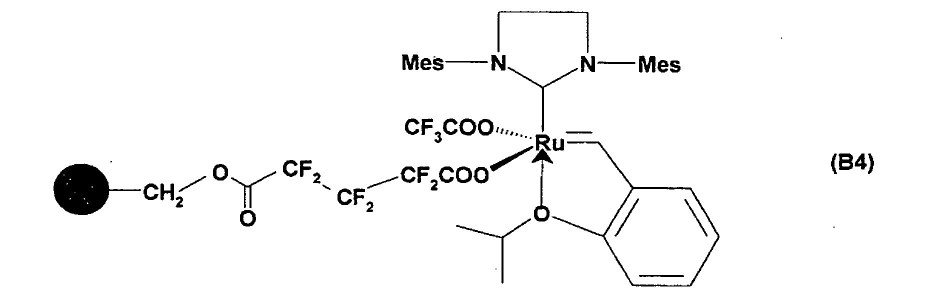 worin das Symbol
●
für einen Träger steht.

25. Verfahren gemäß einem oder mehreren der Ansprüche 1-5, wobei ein Katalysator der allgemeinen Formel (C) eingesetzt wird, 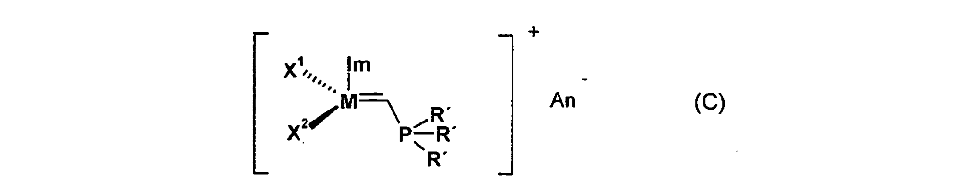 worin
M Ruthenium oder Osmium bedeutet,
X¹ und X² gleich oder verschieden sind und anionische Liganden darstellen,
R' gleich oder verschieden sind und organische Reste darstellen,
Im einen gegebenenfalls substituierten Imidazolidinrest darstellt und
An ein Anion darstellt.

26. Verfahren gemäß einem oder mehreren der Ansprüche 1-5, wobei ein Katalysator der allgemeinen Formel (D) eingesetzt wird, 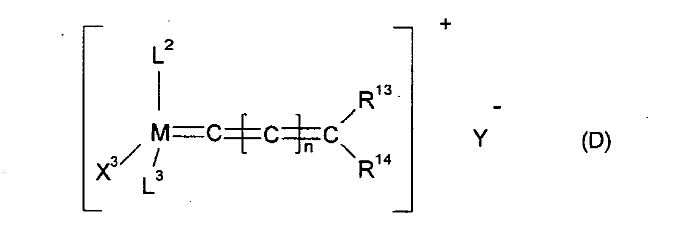 worin
M Ruthenium oder Osmium bedeutet,
R¹³ und R¹⁴ unabhängig voneinander Wasserstoff, C₁-C₂₀-Alkyl, C₂-C₂₀-Alkenyl, C₂-C₂₀ Alkinyl, C₆-C₂₄-Aryl, C₁-C₂₀-Carboxylat, C₁-C₂₀-Alkoxy, C₂-C₁₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀-Alkylsulfonyl oder C₁-C₂₀-Alkylsulfinyl bedeuten,
X³ ein anionischer Ligand ist,
L² ein neutraler π-gebundener Ligand ist, unabhängig davon, ob mono- oder polycyclisch,
L³ ein Ligand aus der Gruppe der Phosphine, sulfonierten Phosphine, fluorierten Phosphine, funktionalisierten Phosphine mit bis zu drei Aminoalkyl-, Ammoniumalkyl, Alkoxyalkyl, Alkoxycarbonylalkyl, Hydrocarbonylalkyl-, Hydroxyalkyl- oder Ketoalkyl-Gruppen, Phosphite, Phosphinite, Phosphonite, Phosphinamine, Arsine, Stibine, Ether, Amine, Amide, Imine, Sulfoxide, Thioether und Pyridine darstellt,
Y⁻ ein nicht-koordinierendes Anion ist und
n 0, 1, 2, 3, 4 oder 5 ist.

27. Verfahren gemäß einem oder mehreren der Ansprüche 1-5, wobei ein Katalysator der allgemeinen Formel (E) eingesetzt wird, 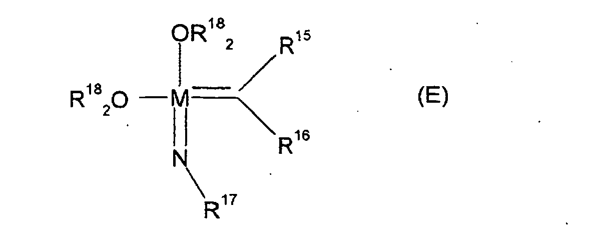 worin
M² Molybdän oder Wolfram ist,
R¹⁵ und R¹⁶ gleich oder verschieden sind und Wasserstoff, C₁-C₂₀-Alkyl, C₂-C₂₀-Alkenyl, C₂-C₂₀-Alkinyl, C₆-C₂₄-Aryl, C₁-C_{2O}-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀-Alkylsulfonyl oder C₁-C₂₀ Alkylsulfinyl bedeuten,
R¹⁷ and R¹⁸ gleich oder verschieden sind und einen substituierten oder einen halogensubstituierten C₁-C₂₀-Alkyl, C₆-C₂₄-Aryl, C₆-C₃₀-Aralkyl-Rest oder Silikon-enthaltende Analoga davon darstellen.

28. Verfahren gemäß einem oder mehreren der Ansprüche 1-5, wobei ein Katalysator der allgemeinen Formel (F) eingesetzt wird, 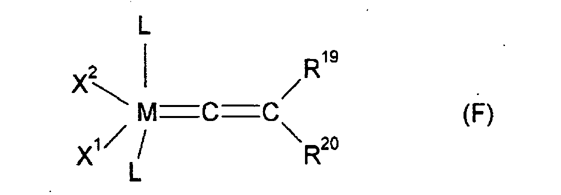 worin
M Ruthenium oder Osmium bedeutet,
X¹ und X² gleich oder verschieden sind und anionische Liganden darstellen, die alle Bedeutungen von X¹ und X² in der allgemeinen Formeln (A) und (B) annehmen können,
L gleiche oder verschiedene Liganden darstellt, die alle Bedeutungen von L in den allgemeinen Formeln (A) und (B) annehmen können und
R¹⁹ and R²⁰ gleich oder verschieden sind und Wasserstoff oder substituiertes oder unsubstituiertes Alkyl bedeuten.

29. Verfahren gemäß einem oder mehreren der Ansprüche 1-5, wobei ein Katalysator der allgemeinen Formeln (G), (H) oder (K) eingesetzt wird, 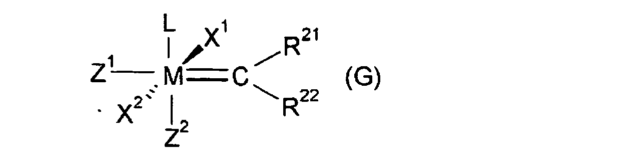 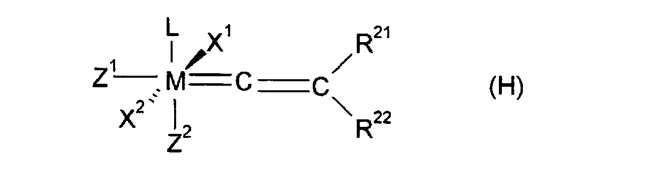 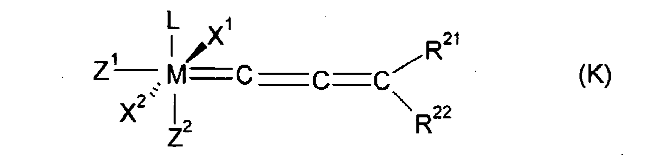 worin
M Osmium oder Ruthenium bedeutet,
X¹ und X² gleich oder verschieden sind und zwei Liganden, bevorzugt anionische Liganden, darstellen,
L einen Liganden, bevorzugt einen neutralen Elektronen-Donor darstellt,
Z¹ und Z² gleich oder verschieden sind und neutrale Elektronen-Donoren darstellen,
R²¹ und R²² unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils optional durch ein oder mehrere Reste ausgewählt aus Alkyl, Halogen, Alkoxy, Aryl oder Heteroaryl substituiert sind.

30. Verfahren gemäß einem oder mehreren der Ansprüche 1-29, wobei der Metathese-Katalysator und die Verbindung der allgemeinen Formel (I) in einem Molverhältnis von Metathese-Katalysator zu Verbindung der allgemeinen Formel (I) von 1:1000 bis 1:1, bevorzugt 1:100 bis 1:1, besonders bevorzugt 1:25 bis 1:1 eingesetzt werden.

31. Verfahren gemäß einem oder mehreren der Ansprüche 1-30, wobei die Verbindung der allgemeinen Formel (I) bezogen auf den Nitrilkautschuk in einer Menge im Bereich von 0,0005 phr bis 5 phr, bevorzugt 0,005 phr bis 2,5 phr (phr = Gew.Teile auf 100 Gew.-Teile Kautschuk) eingesetzt wird.

32. Verfahren gemäß einem oder mehreren der Ansprüche 1-31, wobei der Katalysator in einer solchen Menge eingesetzt wird, dass 1 bis 1.000 ppm Edelmetall, bevorzugt 2 bis 500 ppm, insbesondere 5 bis 250 ppm, bezogen auf den eingesetzten Nitrilkautschuk eingesetzt werden.

33. Verfahren gemäß einem oder mehreren der Ansprüche 1-32, wobei man im Anschluss an das Verfahren zum Molekulargewichtsabbau von Nitrilkautschuk eine Hydrierung des Nitrilkautschuks durchführt.

## Claims

1. Process for reducing the molecular weight of nitrile rubber, wherein a nitrile rubber is brought into contact with a metathesis catalyst which is a complex catalyst based on a metal of transition group 6 or 8 of the Periodic Table and has at least one ligand bound in a carbene-like fashion to the metal and also a compound of the general formula (I)
M(OZ)ₘ (I)
where
M is a transition metal of transition group 4, 5 or 6 of the Periodic Table of the Elements,
m is 4, 5 or 6 and
the radicals Z are identical or different and are each a linear, branched, aliphatic, cyclic, heterocyclic or aromatic radical which has 1-32 carbon atoms and may additionally have from 1 to 15 heteroatoms.

2. Process according to Claim 1, wherein a compound of the general formula (I) in which M is titanium, zirconium, hafnium, vanadium, niobium, tantalum, chromium, molybdenum or tungsten is used.

3. Process according to Claim 1 or 2, wherein a compound of the general formula (I)
in which Z has 1-32 carbon atoms and can additionally have from 1 to 15 heteroatoms, preferably nitrogen or oxygen, and is straight-chain or branched C₁-C₃₀-alkyl, preferably C₁-C₂₀-alkyl, particularly preferably C₁-C₁₂-alkyl, C₃-C₂₀-cycloalkyl, preferably C₃-C₁₀-cycloalkyl, particularly preferably C₅-C₈-cycloalkyl, C₂-C₂₀-alkenyl, preferably C₂-C₁₈-alkenyl, C₂-C₂₀-alkynyl, a radical of the general formula (-CHZ¹-CHZ¹-A²-)ₚ-CH₂-CH₃, where p is an integer from 1 to 10, the radicals Z¹ are identical or different and are each hydrogen or methyl, with the radicals Z¹ located on adjacent carbon atoms preferably being different, and A² is oxygen, sulphur or -NH, a C₆-C₂₄-aryl, preferably C₆-C₁₄-aryl or a C₄-C₂₃-heteroaryl radical having at least 1 heteroatom, preferably nitrogen or oxygen, is used.

4. Process according to Claim 1, wherein a compound of the general formula (I) in which
M is titanium, zirconium, hafnium, vanadium, niobium, tantalum, chromium, molybdenum or tungsten,
m is 4, 5 or 6 and
Z is methoxide, ethoxide, n-propoxide, i-propoxide, n-butoxide, i-butoxide, tert-butoxide, n-pentoxide, i-pentoxide, tert-pentoxide, dodecanoate, oleate, phenoxide or sterically hindered phenoxide,
is used.

5. Process according to Claim 1, wherein tetraethoxytitanate, tetraisopropyloxytitanate, tetra-tert-butyloxytitanate, tetra-tert-butyloxyzirconate, pentaethoxyniobate or pentaethoxytantalate is used as compound of the general formula (I).

6. Process according to one or more of Claims 1 to 5, wherein a compound of the general formula (A), 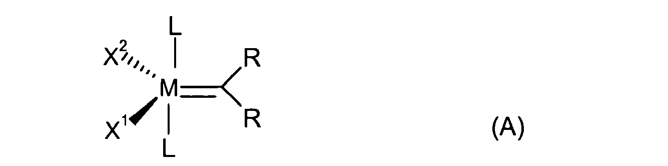 where
M is osmium or ruthenium,
X¹ and X² are identical or different and are two ligands, preferably anionic ligands,
the symbols L represent identical or different ligands, preferably uncharged electron donors,
the radicals R are identical or different and are each hydrogen, alkyl, preferably C₁-C₃₀-alkyl, cycloalkyl, preferably C₃-C₂₀-cycloalkyl, alkenyl, preferably C₂-C₂₀-alkenyl, alkynyl, preferably C₂-C₂₀-alkynyl, aryl, preferably C₆-C₂₄-aryl, carboxylate, preferably C₁-C₂₀-carboxylate, alkoxy, preferably C₁-C₂₀-alkoxy, alkenyloxy, preferably C₂-C₂₀-alkenyloxy, alkynyloxy, preferably C₂-C₂₀-alkynyloxy, aryloxy, preferably C₆-C₂₄-aryloxy, alkoxycarbonyl, preferably C₂-C₂₀-alkoxycarbonyl, alkylamino, preferably C₁-C₃₀-alkylamino, alkylthio, preferably C₁-C₃₀-alkylthio, arylthio, preferably C₆-C₂₄-arylthio, alkylsulphonyl, preferably C₁-C₂₀-alkylsulphonyl, or alkylsulphinyl, preferably C₁-C₂₀-alkylsulphinyl, where these radicals may in each case be substituted by one or more alkyl, halogen, alkoxy, aryl or heteroaryl radicals or, as an alternative, the two radicals R together with the common carbon atom to which they are bound are bridged to form a cyclic group which can be aliphatic or aromatic in nature, may be substituted and may contain one or more heteroatoms,
is used as catalyst.

7. Process according to Claim 6, wherein X¹ and X² are identical or different and are each hydrogen, halogen, pseudohalogen, straight-chain or branched C₁-C₃₀-alkyl, C₆-C₂₄-aryl, C₁₋C₂₀-alkoxy, C₆-C₂₄-aryloxy, C₃-C₂₀-alkyldiketonate, C₆-C₂₄-aryldiketonate, C₁-C₂₀-carboxylate, C₁-C₂₀-alkylsulphonate, C₆-C₂₄-arylsulphonate, C₁-C₂₀-alkylthiol, C₆-C₂₄-arylthiol, C₁-C₂₀-alkylsulphonyl or C₁-C₂₀-alkylsulphinyl radicals.

8. Process according to Claim 6 or 7, wherein X¹ and X² are identical or different and are each halogen, in particular fluorine, chlorine, bromine or iodine, benzoate, C₁-C₅-carboxylate, C₁-C₅-alkyl, phenoxy, C₁-C₅-alkoxy, C₁-C₅-alkylthiol, C₆-C₂₄-arylthiol, C₆-C₂₄-aryl or C₁-C₅-alkylsulphonate.

9. Process according to one or more of Claims 6 to 8, wherein X¹ and X² are identical and are each halogen, in particular chlorine, CF₃COO, CH₃COO, CFH₂COO, (CH₃)₃CO, (CF₃)₂(CH₃)CO, (CF₃)(CH₃)₂CO, PhO (phenoxy), MeO (methoxy), EtO (ethoxy), tosylate (p-CH₃-C₆H₄-SO₃), mesylate (2,4,6-trimethylphenyl) or CF₃SO₃ (trifluoromethanesulphonate).

10. Process according to one or more of Claims 6 to 9, wherein the two ligands L are each, independently of one another, a phosphine, sulphonated phosphine, phosphate, phosphinite, phosphonite, arsine, stibine, ether, amine, amide, sulphoxide, carboxyl, nitrosyl, pyridine, thioether or imidazolidine ("Im") ligand.

11. Process according to Claim 10, wherein the imidazolidine radical (Im) has a structure of the general formula (IIa) or (IIb) 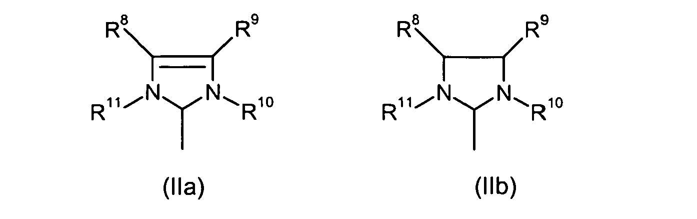 where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₀-aryloxy, C₂-C₂₀-alkoxycarbonyl, C₁-C₂₀-alkylthio, C₆-C₂₀-arylthio, C₁-C₂₀-alkylsulphonyl, C₁-C₂₀-alkylsulphonate, C₆-C₂₀-arylsulphonate or C₁-C₂₀-alkylsulphinyl and these radicals can, independently of one another, be substituted by one or more substituents, preferably straight-chain or branched C₁-C₁₀-alkyl, C₃-C₈-cycloalkyl, C₁-C₁₀-alkoxy or C₆-C₂₄-aryl, where these abovementioned substituents may in turn be substituted by one or more radicals, preferably radicals selected from the group consisting of halogen, in particular chlorine or bromine, C₁-C₅-alkyl, C₁-C₅-alkoxy and phenyl.

12. Process according to one or more of Claims 1-11, wherein a compound of the general formula (A1), 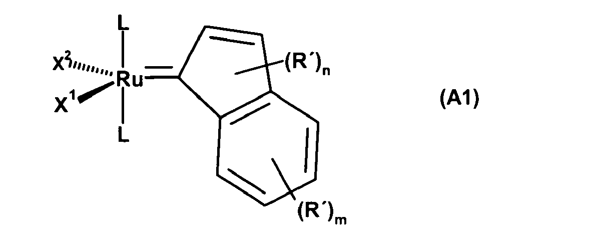 where
X¹, X² and L can have the same general, preferred and particularly preferred meanings as in the general formula (A) in Claims 6-11,
n is 0, 1 or 2,
m is 0, 1, 2, 3 or 4 and
the radicals R' are identical or different and can be alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radicals which may in each case be substituted by one or more alkyl, halogen, alkoxy, aryl or heteroaryl radicals,
is used as catalyst.

13. Process according to one or more of Claims 1 to 11, wherein the catalyst has the structure (IV), (V) or (VI), where Cy is in each case cyclohexyl, Mes is 2,4,6-trimethylphenyl and Ph is phenyl.

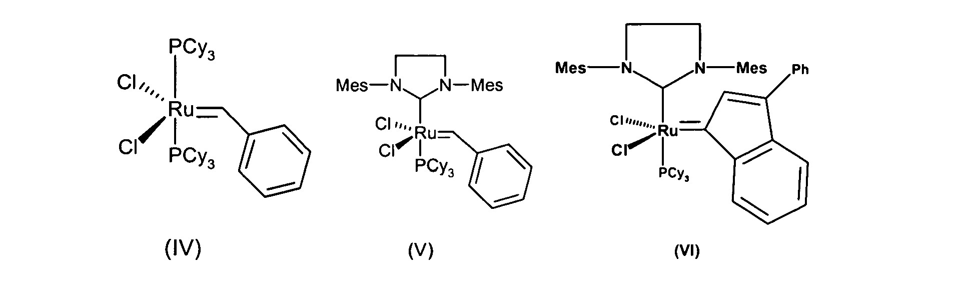

14. Process according to one or more of Claims 1-5, wherein a catalyst of the general formula (B), 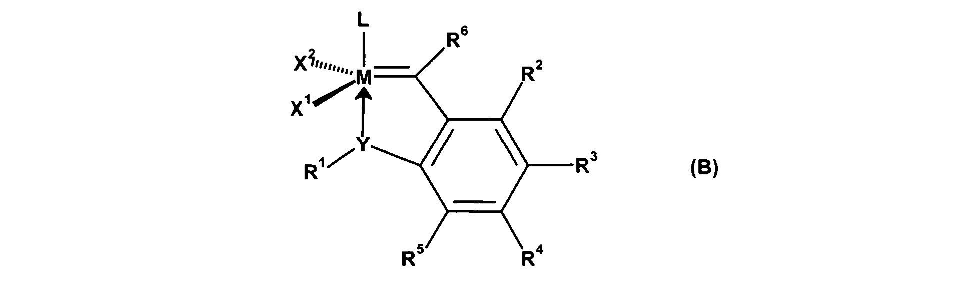 where
M is ruthenium or osmium,
Y is oxygen (O), sulphur (S), an N-R¹ radical or a P-R¹ radical,
X¹ and X² are identical or different ligands,
R¹ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical which may in each case optionally be substituted by one or more alkyl, halogen, alkoxy, aryl or heteroaryl radicals,
R², R³, R⁴ and R⁵ are identical or different and are each hydrogen or an organic or inorganic radical,
R⁶ is hydrogen or an alkyl, alkenyl, alkynyl or aryl radical and
L is a ligand which has the same meanings as the ligand L in the formula (A) mentioned in Claim 6,
is used.

15. Process according to Claim 14, wherein L is a P(R⁷)₃ radical, where the radicals R⁷ are each, independently of one another, C₁-C₆-alkyl, C₃-C₈-cycloalkyl or aryl, or else a substituted or unsubstituted imidazolidine radical ("Im") which preferably has the structure of one of the general formulae (IIa) and (IIb) mentioned in Claim 11 and particularly preferably one of the following structures (IIIa) to (IIIf), where Mes is in each case 2,4,6-trimethylphenyl or alternatively in each case a 2,6-diisopropylphenyl radical.

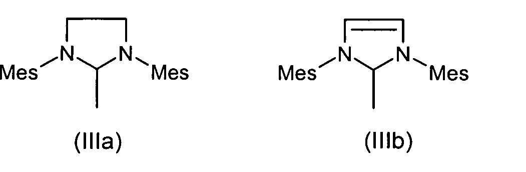

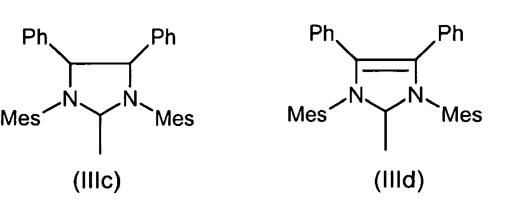

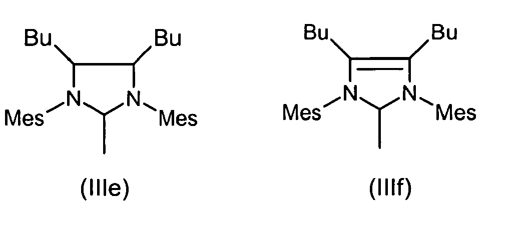

16. Process according to Claim 14 or 15, wherein X¹ and X² in the general formula (B) have the meanings of X¹ and X² in Claims 8-10.

17. Process according to one or more of Claims 14 to 16, wherein a catalyst of the general formula (B1), 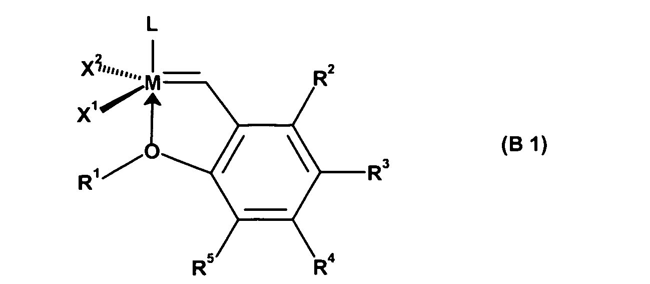 where
M, L, X¹, X², R¹, R², R³, R⁴ and R⁵ have the meanings mentioned for the general formula (B) in Claims 14-16,
is used.

18. Process according to Claim 17,wherein a catalyst of the general formula (B1) in which
M is ruthenium,
X¹ and X² are both halogen, in particular chlorine,
R¹ is a straight-chain or branched C₁-C₁₂-alkyl radical,
R², R³, R⁴, R⁵ have the meanings mentioned for the general formula (B) in Claim 14 and
L has the meanings mentioned for the general formula (B) in Claim 14,
is used.

19. Process according to Claim 17, wherein a catalyst of the general formula (B1) in which
M is ruthenium,
X¹ and X² are both chlorine,
R¹ is an isopropyl radical,
R², R³, R⁴, R⁵ are all hydrogen and
L is a substituted or unsubstituted imidazolidine radical of the formula (IIa) or (IIb) 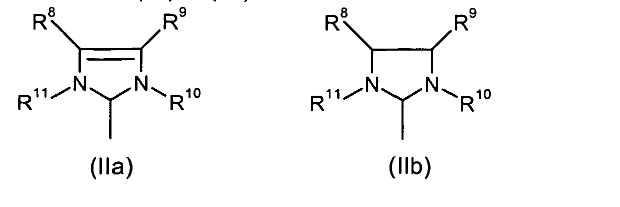 where
R⁸, R⁹, R¹⁰, R¹¹ are identical or different and are each hydrogen, straight-chain or branched C₁-C₃₀-alkyl, C₃-C₂₀-cydoalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl,
is used.

20. Process according to Claim 17, wherein a catalyst of the structure (VII), (VIII), (IX), (X), (XI), (XII), (XIII), (XIV) or (XV), where Mes is in each case 2,4,6-trimethylphenyl, is used as catalyst of the general structural formula (B1).

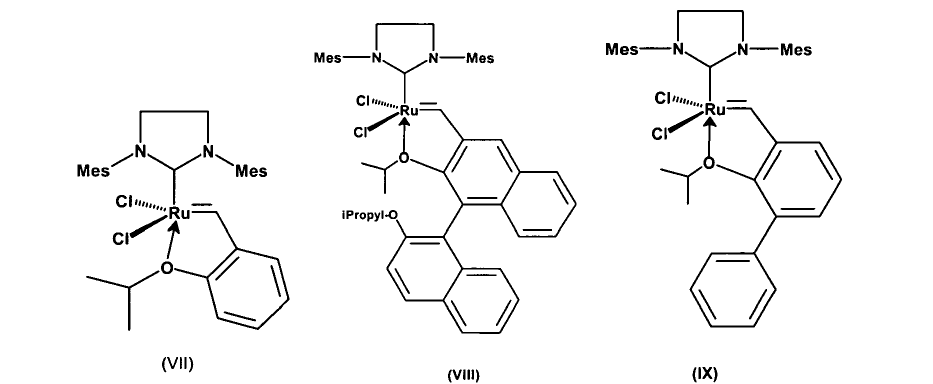

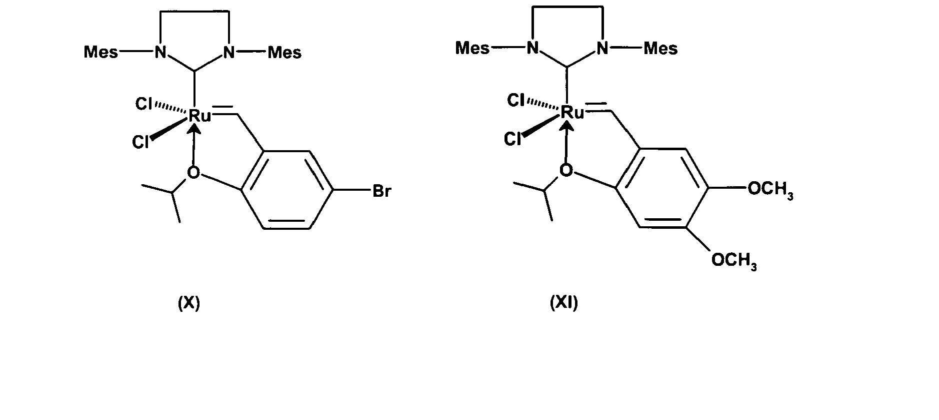

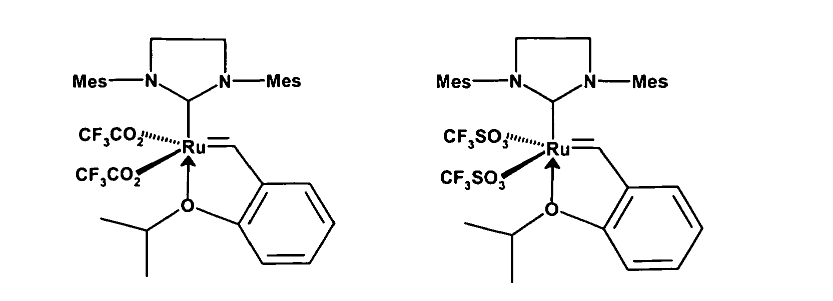

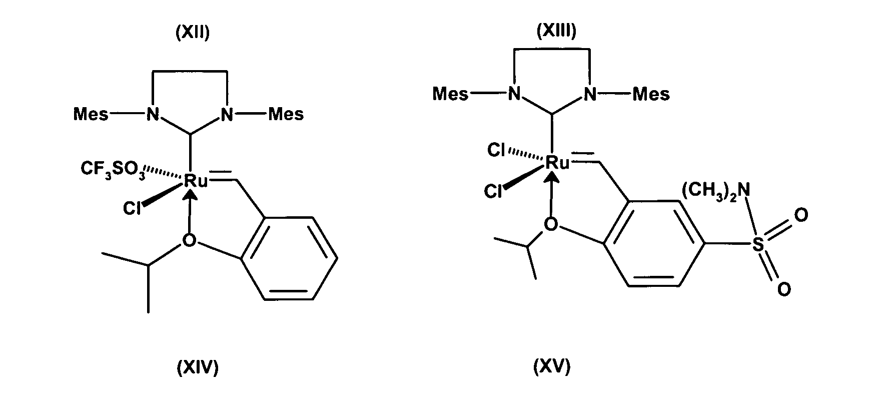

21. Process according to Claim 14, wherein a catalyst of the general formula (B2), 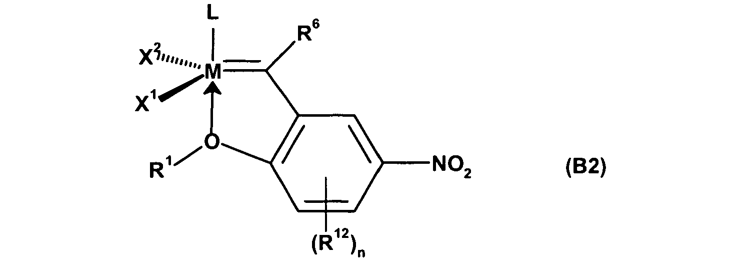 where
M, L, X¹, X², R¹ and R⁶ have the meanings mentioned for the general formula (B) in Claim 14,
the radicals R¹² are identical or different and have the meanings, with the exception of hydrogen, mentioned for the radicals R², R³, R⁴ and R⁵ in the general formula (B) in Claim 14 and
n is 0, 1, 2
is used.

22. Process according to Claim 21, wherein a catalyst of the structure (XVI) or (XVII), where Mes is in each case 2,4,6-trimethylphenyl, is used.

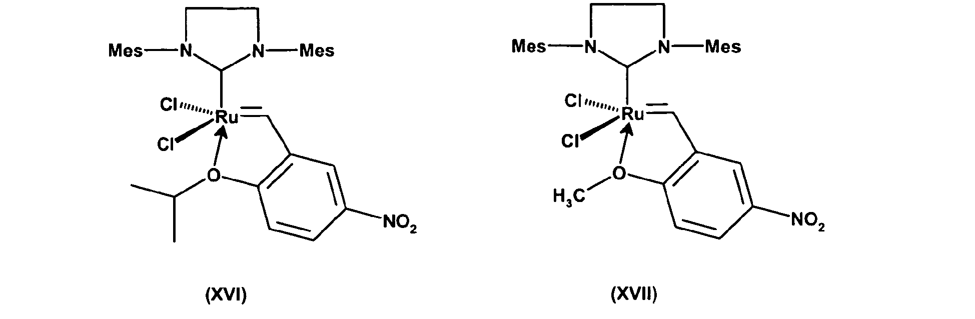

23. Process according to Claim 14, wherein a catalyst of the general formula (B3), 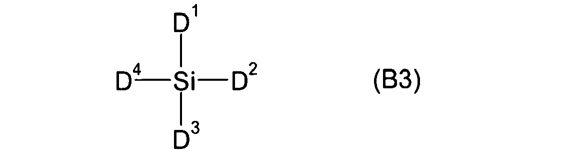 where D¹, D², D³ and D⁴ each have a structure of the general formula (XVIII) shown below which is bound via the methylene group shown at right to the silicon of the formula (B3), 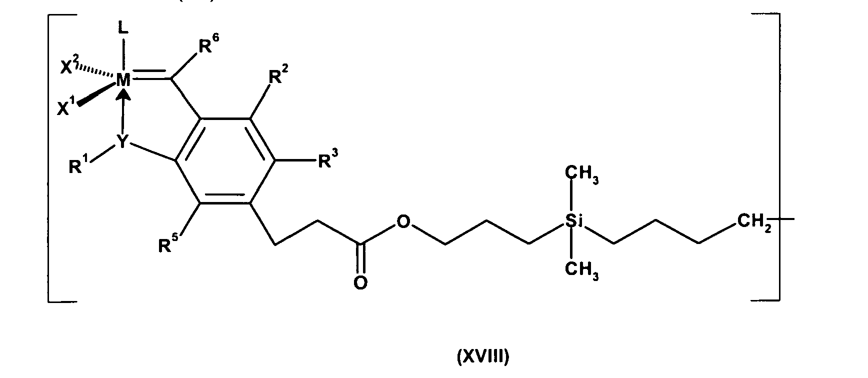 where
M, L, X¹', X², R¹, R², R³, R⁵ and R⁶ have the meanings mentioned for the general formula (B) in Claim 14,
is used.

24. Process according to one or more of Claims 1 to 5, wherein a catalyst of the general formula (B4), 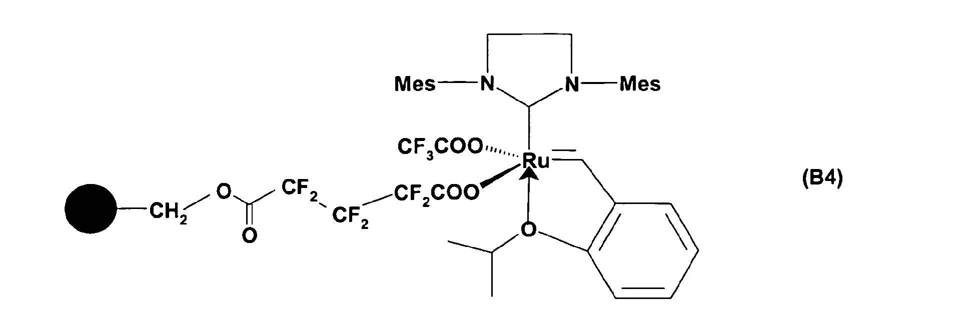 where the symbol
●
represents a support,
is used.

25. Process according to one or more of Claims 1-5, wherein a catalyst of the general formula (C), 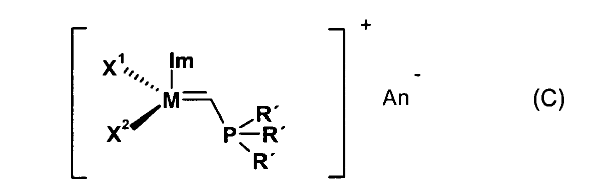 where
M is ruthenium or osmium,
X¹ and X² are identical or different and are anionic ligands,
R' are identical or different and are organic radicals,
Im is a substituted or unsubstituted imidazolidine radical and
An is an anion,
is used.

26. Process according to one or more of Claims 1-5, wherein a catalyst of the general formula (D), 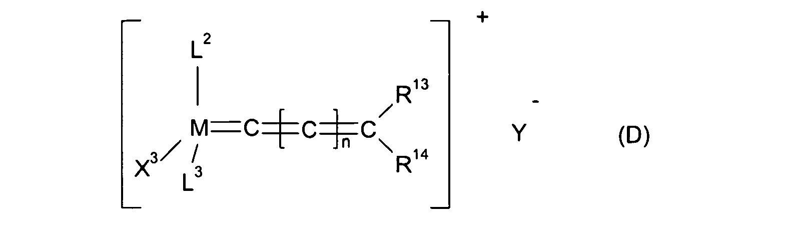 where
M is ruthenium or osmium,
R¹³ and R¹⁴ are each, independently of one another, hydrogen, C₁-C₂₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₁-C₂₀-alkylsulphonyl or C₁-C₂₀-alkylsulphinyl,
X³ is an anionic ligand,
L² is an uncharged π-bonded ligand which may either be monocyclic or polycyclic,
L³ is a ligand selected from the group consisting of phosphines, sulphonated phosphines, fluorinated phosphines, functionalized phosphines having up to three aminoalkyl, ammonioalkyl, alkoxyalkyl, alkoxycarbonylalkyl, hydrocarbonylalkyl, hydroxyalkyl or ketoalkyl groups, phosphites, phosphinites, phosphonites, phosphinamines, arsines stibines, ethers, amines, amides, imines, sulphoxides, thioethers and pyridines,
Y⁻ is a noncoordinating anion and
n is 0, 1,2,3,4 or 5,
is used.

27. Process according to one or more of Claims 1-5, wherein a catalyst of the general formula (E), 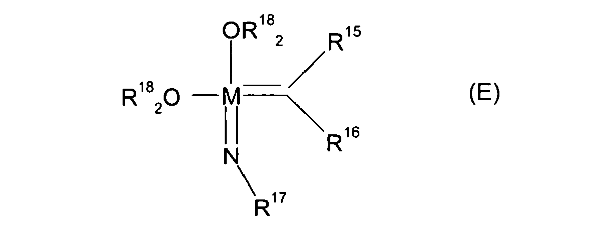 where
M² is molybdenum or tungsten,
R¹⁵ and R¹⁶ are identical or different and are each hydrogen, C₁-C₂₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₁-C₂₀-alkylsulphonyl or C₁-C₂₀-alkylsulphinyl,
R¹⁷ and R¹⁸ are identical or different and are each a substituted or halogen-substituted C₁-C₂₀-alkyl, C₆-C₂₄-aryl, C₆-C₃₀-aralkyl radical or a silicone-containing analogue thereof,
is used.

28. Process according to one or more of Claims 1-5, wherein a catalyst of the general formula (F), 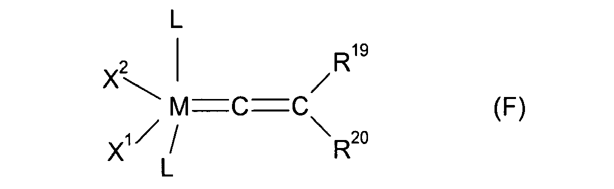 where
M is ruthenium or osmium,
X¹ and X² are identical or different and are anionic ligands which can have all meanings of X¹ and X² in the general formulae (A) and (B),
the symbols L represent identical or different ligands which can have all meanings of L in the general formulae (A) and (B), and
R¹⁹ and R²⁰ are identical or different and are each hydrogen or substituted or unsubstituted alkyl,
is used.

29. Process according to one or more of Claims 1-5, wherein a catalyst of the general formula (G), (H) or (K), 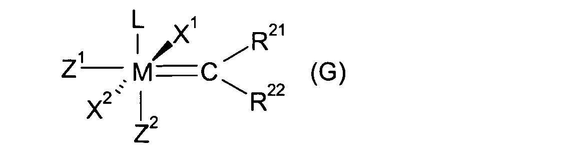 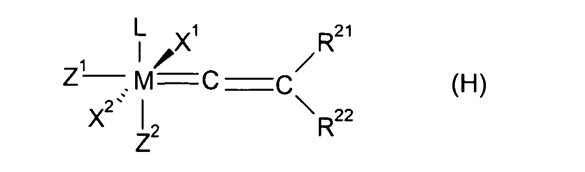 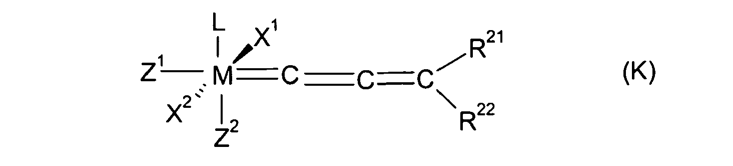 where
M is osmium or ruthenium,
X¹ and X² are identical or different and are two ligands, preferably anionic ligands,
L is a ligand, preferably an uncharged electron donor,
Z¹ and Z² are identical or different and are uncharged electron donors,
R²¹ and R²² are each, independently of one another, hydrogen alkyl, cycloalkyl, alkenyl, alkynyl, aryl, carboxylate, alkoxy, alkenyloxy, alkynyloxy, aryloxy, alkoxycarbonyl, alkylamino, alkylthio, alkylsulphonyl or alkylsulphinyl which may in each case optionally be substituted by one or more radicals selected from among alkyl, halogen, alkoxy, aryl or heteroaryl,
is used.

30. Process according to one or more of Claims 1-29, wherein the metathesis catalyst and the compound of the general formula (I) are used in a molar ratio of metathesis catalyst to compound of the general formula (I) of from 1:1000 to 1:1, preferably 1:100 to 1:1, particularly preferably from 1:25 to 1:1.

31. Process according to one or more of Claims 1-30, wherein the compound of the general formula (I) is used in an amount based on the nitrile rubber in the range from 0.0005 phr to 5 phr, preferably from 0.005 phr to 2.5 phr (phr = parts by weight per 100 parts by weight of rubber).

32. Process according to one or more of Claims 1-31, wherein the catalyst is used in such an amount that from 1 to 1000 ppm of noble metal, preferably from 2 to 500 ppm, in particular from 5 to 250 ppm, based on the nitrile rubber used, are used.

33. Process according to one or more of Claims 1-32, wherein the process for reducing the molecular weight of nitrile rubber is followed by a hydrogenation of the nitrile rubber.

## Revendications

1. Procédé pour la dégradation du poids moléculaire du caoutchouc de nitrile, dans lequel on met en contact un caoutchouc de nitrile avec un catalyseur de métathèse, où il s'agit d'un catalyseur complexe à base d'un métal du 6ème ou 8ème groupe secondaire du système périodique, qui présente au moins un ligand lié comme un carbène au métal, ainsi qu'avec un composé de formule générale (I)
M(OZ)ₘ (I)
où
M représente un métal de transition du 4ème, 5ème et 6ème groupe secondaire du système périodique des éléments,
m vaut 4, 5 ou 6 et
Z est identique ou différent et représente un radical linéaire, ramifié, aliphatique, cyclique, hétérocyclique ou aromatique comprenant 1-32 atomes de carbone, qui peut en outre encore présenter 1 à 15 hétéroatomes.

2. Procédé selon la revendication 1, où un composé de formule générale (I), dans laquelle M signifie titane, zirconium, hafnium, vanadium, niobium, tantale, chrome, molybdène ou tungstène est utilisé.

3. Procédé selon la revendication 1 ou 2, où un composé de formule générale (I) est utilisé, dans laquelle Z possède 1-32 atomes de carbone et peut en outre encore présenter 1 à 15 hétéroatomes, de préférence de l'azote ou de l'oxygène, et signifie un radical C₁-C₃₀-alkyle linéaire ou ramifié, de préférence C₁-C₂₀-alkyle, de manière particulièrement préférée C₁-C₁₂-alkyle, C₃-C₂₀-cycloalkyle, de préférence C₃-C₁₀-cycloalkyle, de manière particulièrement préférée C₅-C₈-cycloalkyle, C₂-C₂₀-alcényle, de préférence C₂-C₁₈-alcényle, C₂-C₂₀-alcynyle, un radical de formule générale (-CHZ¹-CHZ¹-A²-)p-CH₂-CH₃, où p est un nombre entier de 1 à 10, Z¹ est identique ou différent et signifie hydrogène ou méthyle, les radicaux Z¹ situés sur des atomes de carbone adjacents étant de préférence différents, et A² signifie oxygène, soufre ou -NH, un radical C₆-C₂₄-aryle, de préférence C₆-C₁₄-aryle ou un radical C₄-C₂₃-hétéroaryle, ces radicaux hétéroaryle présentant au moins 1 hétéroatome, de préférence l'azote ou l'oxygène.

4. Procédé selon la revendication 1, un composé de formule générale (I) étant utilisé, dans laquelle
M signifie titane, zirconium, hafnium, vanadium, niobium, tantale, chrome, molybdène ou tungstène,
m vaut 4, 5 ou 6 et
Z signifie méthylate, éthylate, n-propylate, i-propylate, n-butylate, i-butylate, tert-butylate, n-pentylate, i-pentylate, t-pentylate, dodécanate, oléate, phénolate ou phénolate stériquement encombré.

5. Procédé selon la revendication 1, où on utilise comme composé de formule générale (I) le tétraéthoxytitanate, le tétra-isopropyloxytitanate, le tétratert-butyloxytitanate, le tétratert-butyloxyzirconate, le pentaéthoxyniobate ou le pentaéthoxytantalate.

6. Procédé selon l'une ou plusieurs des revendications 1 à 5, où on utilise comme catalyseur un composé de formule générale (A) 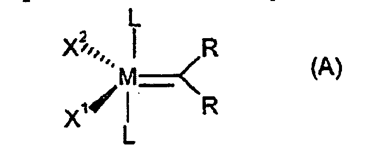 où
M signifie osmium ou ruthénium,
X¹ et X² sont identiques ou différents et représentent deux ligands, de préférence des ligands anioniques,
L représentent des ligands identiques ou différents, de préférence des donneurs d'électrons neutres,
R sont identiques ou différents et signifient hydrogène, alkyle, de préférence C₁-C₃₀-alkyle, cycloalkyle, de préférence C₃-C₂₀-cycloalkyle, alcényle, de préférence C₂-C₂₀-alcényle, alcynyle, de préférence C₂-C₂₀-alcynyle, aryle, de préférence C₆-C₂₄-aryle, carboxylate, de préférence C₁-C₂₀-carboxylate, alcoxy, de préférence C₁-C₂₀-alcoxy, alcényloxy, de préférence C₂-C₂₀-alcényloxy, alcynyloxy, de préférence C₂-C₂₀-alcynyloxy, aryloxy, de préférence C₆-C₂₄-aryloxy, alcoxycarbonyle, de préférence C₂-C₂₀-alcoxycarbonyle, alkylamino, de préférence C₁-C₃₀-alkylamino, alkylthio, de préférence C₁-C₃₀-alkylthio, arylthio, de préférence C₆-C₂₄-arylthio, alkylsulfonyle, de préférence C₁-C₂₀-alkylsulfonyle, ou alkylsulfinyle, de préférence C₁-C₂₀-alkylsulfinyle, où ces radicaux peuvent tous être substitués à chaque fois par un ou plusieurs radicaux alkyle, halogène, alcoxy, aryle ou hétéroaryle, ou, en variante, les deux radicaux R, avec incorporation de l'atome de carbone commun auquel ils sont liés, sont pontés en un groupe cyclique, qui peut être de nature aliphatique ou aromatique, qui est le cas échéant substitué et qui peut contenir un ou plusieurs hétéroatomes.

7. Procédé selon la revendication 6, où X¹ et X² sont identiques ou différents et signifient hydrogène, halogène, pseudohalogène, un radical C₁-C₃₀-alkyle linéaire ou ramifié, C₆-C₂₄-aryle, C₁-C₂₀-alcoxy, C₆-C₂₄-aryloxy, C₃-C₂₀-alkyldicétonate, C₆-C₂₄-aryldicétonate, C₁-C₂₀-carboxylate, C₁-C₂₀-alkylsulfonate, C₆-C₂₄-arylsulfonate, C₁-C₂₀-alkylthiol, C₆-C₂₄-arylthiol, C₁-C₂₀-alkylsulfonyle ou C₁-C₂₀-alkylsulfinyle.

8. Procédé selon la revendication 6 ou 7, où X¹ et X² sont identiques ou différents et signifient halogène, en particulier fluor, chlore, brome ou iode, benzoate, C₁-C₅-carboxylate, C₁-C₅-alkyle, phénoxy, C₁-C₅-alcoxy, C₁-C₅-alkylthiol, C₆-C₂₄-arylthiol, C₆-C₂₄-aryle ou C₁-C₅-alkylsulfonate.

9. Procédé selon l'une ou plusieurs des revendications 6 à 8, où X¹ et X² sont identiques et signifient halogène, en particulier chlore, CF₃COO, CH₃COO, CFH₂COO, (CH₃) ₃CO, (CF₃)₂(CH₃) CO, (CF₃) (CH₃) ₂CO, PhO (phénoxy), MeO (méthoxy), EtO (éthoxy), tosylate (p-CH₃-C₆H₄-SO₃) mésylate (2,4,6-triméthylphényle) ou CF₃SO₃ (trifluorométhanesulfonate).

10. Procédé selon l'une ou plusieurs des revendications 6 à 9, où les deux ligands L, indépendamment l'un de l'autre, signifient un ligand phosphine, phosphine sulfonée, phosphate, phosphinite, phosphonite, arsine, stibine, éther, amine, amide, sulfoxyde, carboxyle, nitrosyle, pyridine, thioéther ou imidazolidine ("Im").

11. Procédé selon la revendication 10, où le radical imidazolidine (Im) présente une structure des formules générales (IIa) ou (IIb), 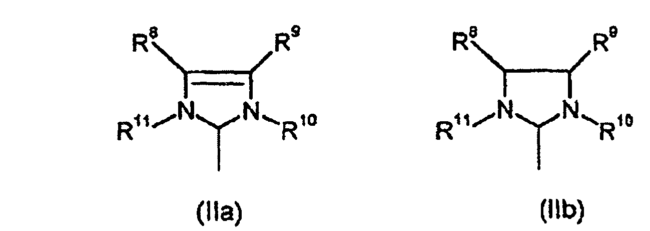 où
R⁸, R⁹, R¹⁰, R¹¹ sont identiques ou différents et signifient hydrogène, C₁-C₃₀-alkyle linéaire ou ramifié, C₃-C₂₀-cycloalkyle, C₂-C₂₀-alcényle, C₂-C₂₀-alcynyle, C₆-C₂₄-aryle, C₁-C₂₀-carboxylate, C₁-C₂₀-alcoxy, C₂-C₂₀-alcenyloxy, C₂-C₂₀-alcynyloxy, C₆-C₂₀-aryloxy, C₂-C₂₀-alcoxycarbonyle, C₁-C₂₀-alkylthio, C₆-C₂₀-arylthio, C₁-C₂₀-alkylsulfonyle, C₁-C₂₀-alkylsulfonate, C₆-C₂₀-arylsulfonate ou C₁-C₂₀-alkylsulfinyle et ces radicaux, indépendamment l'un de l'autre, peuvent être substitués par un ou plusieurs substituants, de préférence C₁-C₁₀-alkyle linéaire ou ramifié, C₃-C₈-cycloalkyle, C₁-C₁₀-alcoxy ou C₆-C₂₄-aryle, où ces substituants susmentionnés peuvent également à nouveau être substitués par un ou plusieurs radicaux, de préférence choisis dans le groupe halogène, en particulier chlore ou brome, C₁-C₅-alkyle, C₁-C₅-alcoxy et phényle.

12. Procédé selon l'une ou plusieurs des revendications 1 à 11, où on utilise comme catalyseur un composé de formule générale (A1) 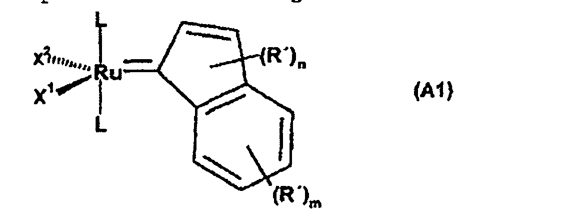 où
X¹, X² et L peuvent présenter les mêmes significations générales, préférées et particulièrement préférées que dans la formule générale (A) dans les revendications 6-11,
n vaut 0, 1 ou 2,
m vaut 0, 1, 2, 3 ou 4 et
R' sont identiques ou différents et peuvent signifier alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois être substitués par un ou plusieurs radicaux alkyle, halogène, alcoxy, aryle ou hétéroaryle.

13. Procédé selon l'une ou plusieurs des revendications 1 à 11, où le catalyseur présente la structure (IV), (V) ou (VI), où Cy représente à chaque fois cyclohexyle, Mes représente 2,4,6-triméthylphényle et Ph représente phényle.

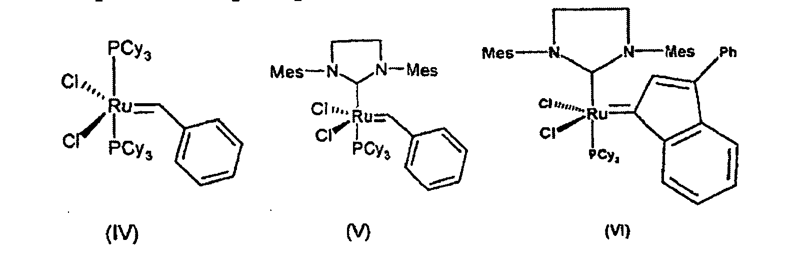

14. Procédé selon l'une ou plusieurs des revendications 1 à 5, où on utilise un catalyseur de formule générale (B) 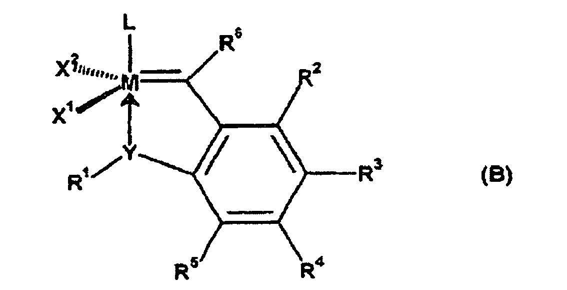 où
M signifie ruthénium ou osmium,
Y signifie oxygène (O), soufre (S), un radical N-R¹ ou un radical P-R¹,
X¹ et X² sont des ligands identiques ou différents,
R¹ représente un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois être éventuellement substitués par un ou plusieurs radicaux alkyle, halogène, alcoxy, aryle ou hétéroaryle,
R² R³ R⁴ et R⁵ sont identiques ou différents et représentent hydrogène, des radicaux organiques ou inorganiques,
R⁶ signifie hydrogène, un radical alkyle, alcényle, alcynyle ou aryle et
L représente un ligand qui présente les mêmes significations que le ligand L dans la formule (A) mentionnée dans la revendication 6.

15. Procédé selon la revendication 14, où L représente un radical P(R⁷)₃, où les radicaux R⁷ signifient, indépendamment l'un de l'autre, C₁-C₆-alkyle, C₃-C₈-cycloalkyle ou aryle, ou alors un radical imidazolidine éventuellement substitué ("Im"), qui présente de préférence la structure des formules générales (IIa) et (IIb) mentionnées dans la revendication 11 et qui présente de manière particulièrement préférée une des structures suivantes (IIIa) à (IIIf), où Mes représente à chaque fois 2,4,6-triméthylphényle ou en variante à chaque fois un radical 2,6-diisopropylphényle.

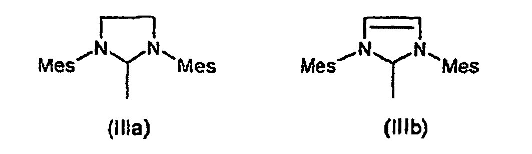

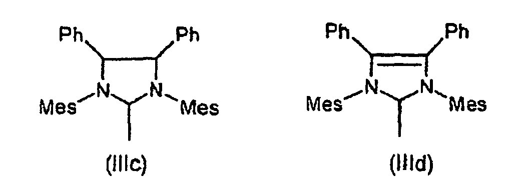

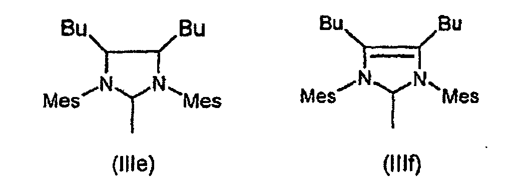

16. Procédé selon la revendication 14 ou 15, où X¹ et X² présentent, dans la formule générale (B), les significations que présentent X¹ et X² dans les revendications 8-10.

17. Procédé selon l'une ou plusieurs des revendications 14 à 16, où on utilise un catalyseur selon la formule générale (B1) 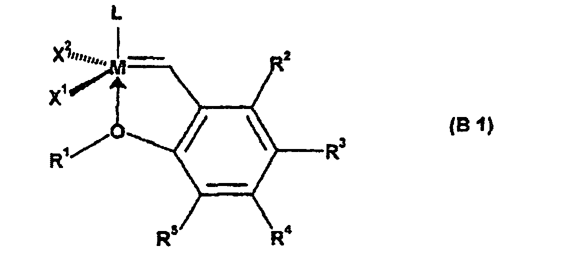 où
M, L, X¹, X², R¹, R² ,R³, R⁴ et R⁵ présentent les significations mentionnées pour la formule générale (B) dans les revendications 14 à 16.

18. Procédé selon la revendication 17, où on utilise un catalyseur selon la formule générale (B1), dans laquelle
M signifie ruthénium,
X¹ et X² signifient simultanément halogène, en particulier chlore,
R¹ représente un radical C₁-C₁₂-alkyle linéaire ou ramifié,
R², R³, R⁴, R⁵ présentent les significations mentionnées pour la formule générale (B) dans la revendication 14 et
L présente les significations mentionnées pour la formule générale (B) dans la revendication 14.

19. Procédé selon la revendication 17, où on utilise un catalyseur selon la formule générale (B1), dans laquelle
M représente ruthénium,
X¹ et X² signifient simultanément chlore,
R¹ représente un radical isopropyle,
R², R³, R⁴, R⁵ signifient tous hydrogène et représente un radical imidazolidine le cas échéant substitué des formules (IIa) ou (IIb). 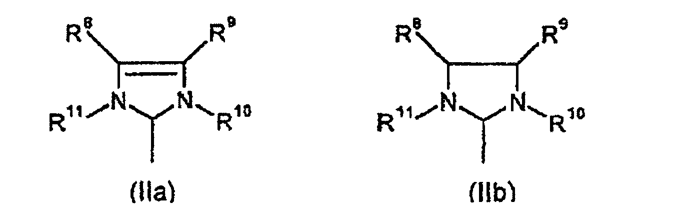 où
R⁸, R⁹, R¹⁰, R¹¹ sont identiques ou différents et signifient hydrogène, C₁-C₃₀-alkyle linéaire ou ramifié, C₃-C₂₀-cycloalkyle, C₂-C₂₀-alcenyle, C₂-C₂₀-alcynyle, C₆-C₂₄-aryle, C₁-C₂₀-carboxylate, C₁-C₂₀-alcoxy, C₂-C₂₀-alcényloxy, C₂-C₂₀-alcynyloxy, C₆-C₂₄-aryloxy, C₂-C₂₀-alcoxycarbonyle, C₁-C₂₀-alkylthio, C₆-C₂₄-arylthio, C₁-C₂₀-alkylsulfonyle, C₁-C₂₀-alkylsulfonate, C₆-C₂₄-arylsulfonate ou C₁-C₂₀-alkylsulfinyle.

20. Procédé selon la revendication 17, 1 où on utilise comme catalyseur de formule de structure générale (B1) un catalyseur des structures (VII), (VIII), (IX), (X), (XI), (XII), (XIII), (XIV) ou (XV), où Mes signifie à chaque fois 2,4,6-triméthylphényle.

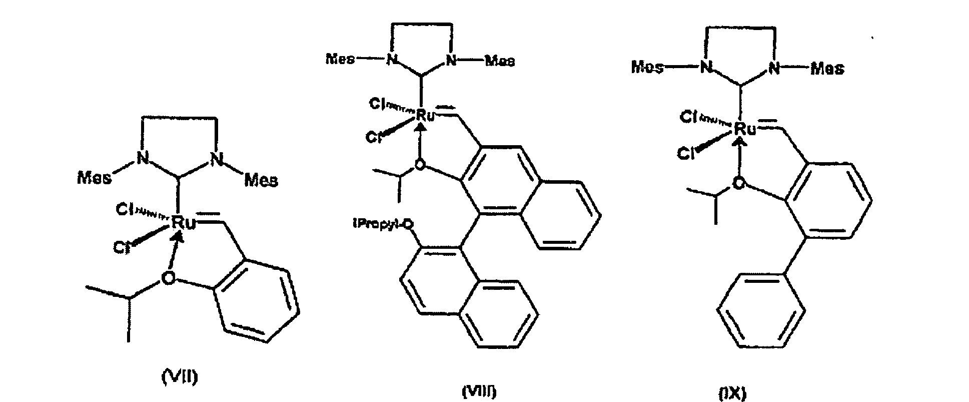

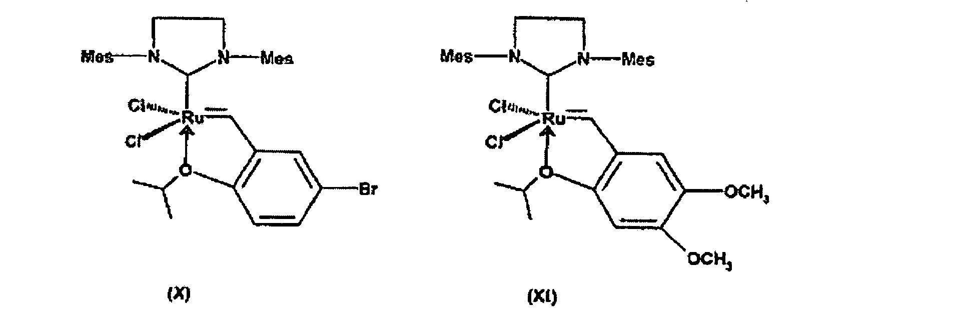

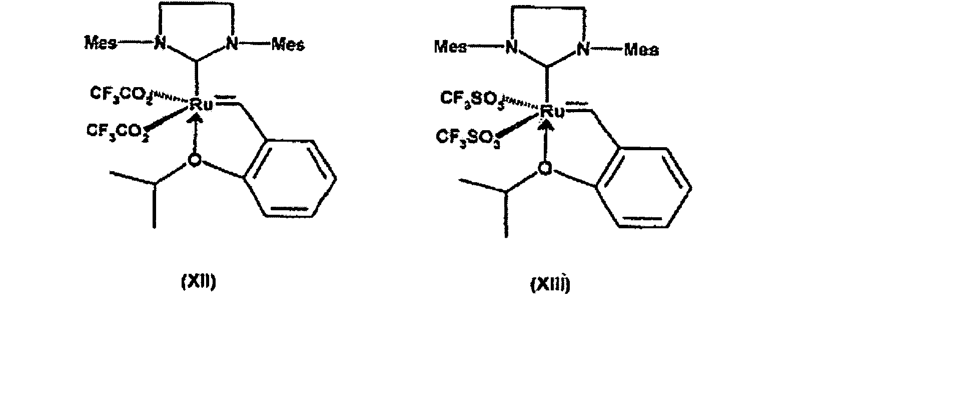

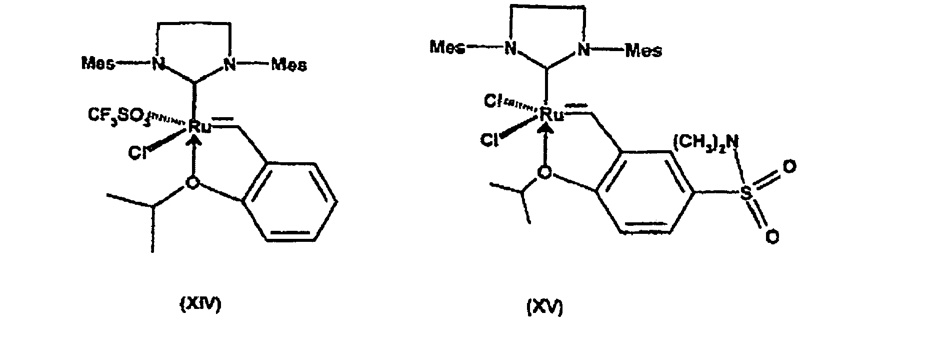

21. Procédé selon la revendication 14, où on utilise un catalyseur selon la formule générale (B2), 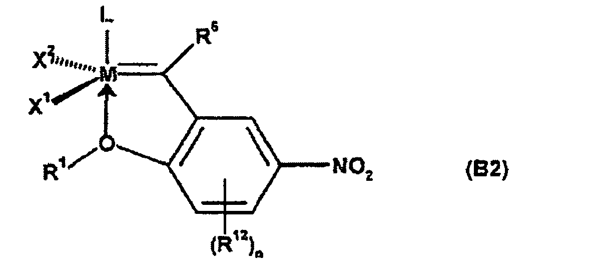 où
M, L, X¹, X², R¹ et R⁶ présentent les significations mentionnées pour la formule générale (B) dans la revendication 14,
R¹² sont identiques ou différents et présentent les significations mentionnées pour les radicaux R², R³, R⁴ et R⁵ dans la formule générale (B) dans la revendication 14, à l'exception d'hydrogène et
n vaut 0, 1, 2 ou 3.

22. Procédé selon la revendication 21, où on utilise un catalyseur des structures suivantes (XVI) ou (XVII),
où Mes signifie à chaque fois 2,4,6-triméthylphényle.

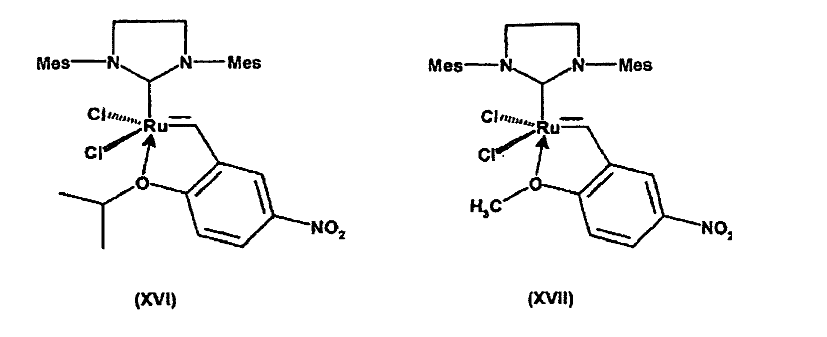

23. Procédé selon la revendication 14, où on utilise un catalyseur selon la formule générale (B3), 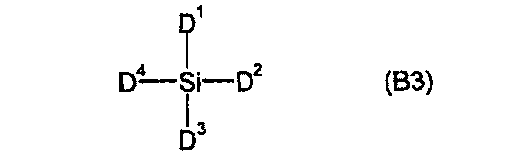 où
D¹, D², D³ et D⁴ présentent à chaque fois une structure de la formule générale (XVIII) représentée ci-après, qui est liée via le groupe méthylène représenté à droite au silicium de formule (B3) et 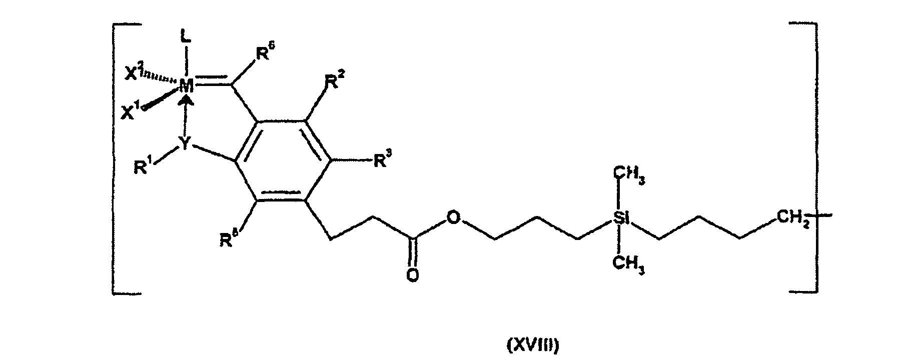 où
M, L, X¹, X², R¹, R², R³, R⁵ et R⁶ présentent les significations mentionnées pour la formule générale (B) dans la revendication 14.

24. Procédé selon l'une ou plusieurs des revendications 1 à 5, où on utilise un catalyseur selon la formule générale (B4) 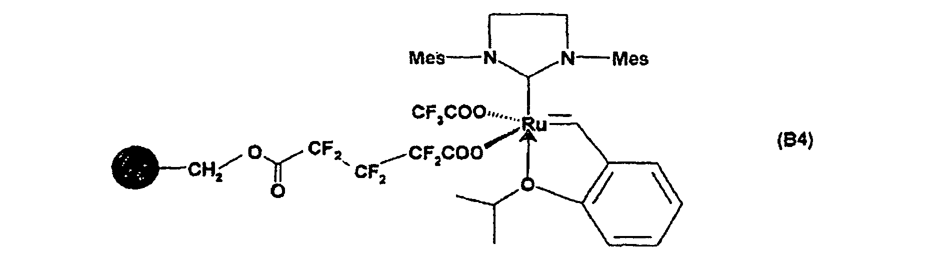 dans laquelle le symbole
●
représente un support.

25. Procédé selon l'une ou plusieurs des revendications 1 à 5, où on utilise un catalyseur de formule générale (C) 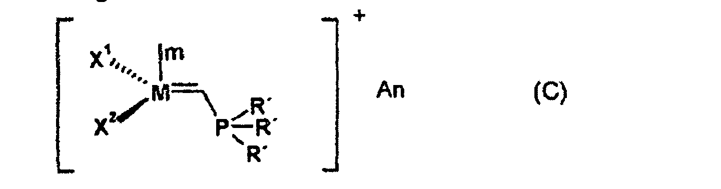 où
M signifie ruthénium ou osmium,
X¹ et X² sont identiques ou différents et représentent des ligands anioniques,
R¹ sont identiques ou différents et représentent des radicaux organiques,
Im représente un radical imidazolidine le cas échéant substitué et
An représente un anion.

26. Procédé selon l'une ou plusieurs des revendications 1 à 5, où on utilise un catalyseur de formule générale (D) 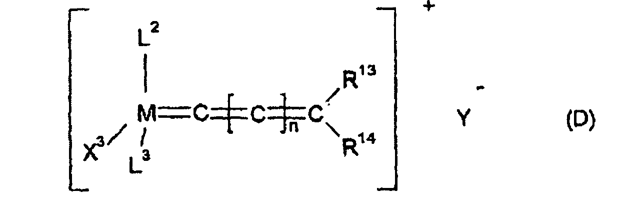 où
M signifie ruthénium ou osmium,
R¹³ et R¹⁴ signifient, indépendamment l'un de l'autre,
X³ hydrogène, C₁-C₂₀-alkyle, C₂-C₂₀-alcényle, C₂-C₂₀-alcynyle, C₆-C₂₄-aryle, C₁-C₂₀-carboxylate, C₁-C₂₀-alcoxy, C₂-C₂₀-alcényloxy, C₂-C₂₀-alcynyloxy, C₆-C₂₄-aryloxy, C₂-C₂₀-alcoxycarbonyle, C₁-C₂ₒ-alkylthio, C₁-C₂₀-alkylsulfonyle ou C₁-C₂₀-alkylsulfinyle, représente un ligand ionique,
L² représente un ligand neutre lié par π, indépendamment du fait qu'il est monocyclique ou polycyclique,
L³ représente un ligand du groupe des phosphines, des phosphines sulfonées, des phosphines fluorées, des phosphines fonctionnalisées avec jusqu'à trois groupes aminoalkyle, ammoniumalkyle, alcoxyalkyle, alcoxycarbonylalkyle, hydrocarbonylalkyle, hydroxyalkyle ou cétoalkyle, des phosphites, des phosphinites, des phosphonites, des phosphinamines, des arsines, des stibines, des éthers, des amines, des amides, des imines, des sulfoxydes, des thioéthers et des pyridines,
Y⁻ représente un anion non coordinant et
n vaut 0, 1, 2, 3, 4 ou 5.

27. Procédé selon l'une ou plusieurs des revendications 1 à 5, où on utilise un catalyseur de formule générale (E) 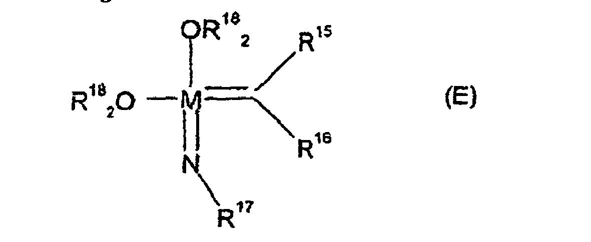 où
M² représente molybdène ou tungstène,
R¹⁵ et R¹⁶ sont identiques ou différents et signifient hydrogène, C₁-C₂₀-alkyle, C₂-C₂₀-alcényle, C₂-C₂₀-alcynyle, C₆-C₂₄-aryle, C₁-C₂₀-carboxylate, C₁-C₂₀-alcoxy, C₂-C₂₀-alcényloxy, C₂-C₂₀-alcynyloxy, C₆-C₂₄-aryloxy, C₂-C₂₀-alcoxycarbonyle, C₁-C₂₀-alkylthio, C₁-C₂₀-alkylsulfonyle ou C₁-C₂₀-alkylsulfinyle,
R¹⁷ et R¹⁸ sont identiques ou différents et représentent un radical C₁-C₂₀-alkyle, C₆-C₂₄-aryle, C₆-C₃₀-aralkyle non substitué ou substitué par halogène ou des analogues contenant silicium de ceux-ci.

28. Procédé selon l'une ou plusieurs des revendications 1 à 5, où on utilise un catalyseur de formule générale (F) 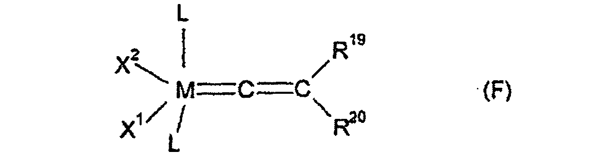 où
M signifie ruthénium ou osmium,
X¹ et X² sont identiques ou différents et représentent des ligands anioniques, qui peuvent prendre toutes les significations de X¹ et X² dans les formules générales (A) et (B),
L représente des ligands identiques ou différents, qui peuvent prendre toutes les significations de L dans les formules générales (A) et (B) et
R¹⁹ et R²⁰ sont identiques ou différents et représentent hydrogène ou alkyle substitué ou non substitué.

29. Procédé selon l'une ou plusieurs des revendications 1 à 5, où on utilise un catalyseur des formules générales (G), (H) ou (K) 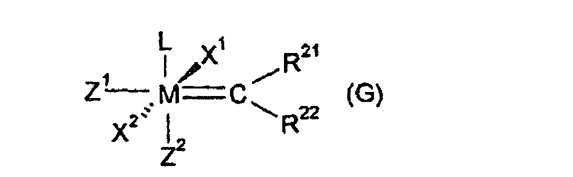 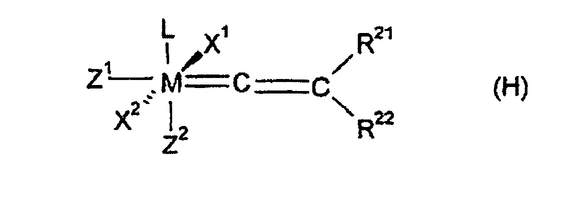 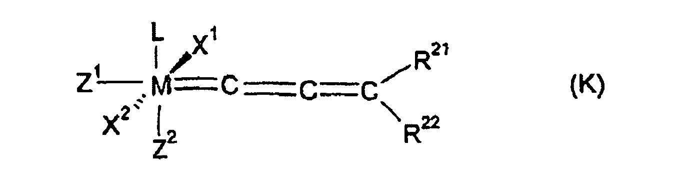 où
M signifie osmium ou ruthénium,
X¹ et X² sont identiques ou différents et représentent deux ligands, de préférence des ligands anioniques,
L représente un ligand, de préférence un donneur d'électrons neutre,
Z¹ et Z² sont identiques ou différents et représentent des donneurs d'électrons neutres,
R²¹ et R²² signifient, indépendamment l'un de l'autre, hydrogène, alkyle, cycloalkyle, alcényle, alcynyle, aryle, carboxylate, alcoxy, alcényloxy, alcynyloxy, aryloxy, alcoxycarbonyle, alkylamino, alkylthio, alkylsulfonyle ou alkylsulfinyle, qui sont à chaque fois éventuellement substitués par un ou plusieurs radicaux choisis parmi alkyle, halogène, alcoxy, aryle ou hétéroaryle.

30. Procédé selon l'une ou plusieurs des revendications 1 à 29, où le catalyseur de métathèse et le composé de formule générale (I) sont utilisés dans un rapport molaire de catalyseur de métathèse à composé de formule générale (I) de 1:1000 à 1:1, de préférence de 1:100 à 1:1, de manière particulièrement préférée de 1:25 à 1:1.

31. Procédé selon l'une ou plusieurs des revendications 1 à 30, où le composé de formule générale (I) est utilisé, par rapport au caoutchouc de nitrile, en une quantité dans la plage de 0,0005 phr à 5 phr, de préférence de 0,005 phr à 2,5 phr (phr parties en poids par rapport à 100 parties en poids de caoutchouc).

32. Procédé selon l'une ou plusieurs des revendications 1 à 31, où le catalyseur est utilisé en des quantités telles qu'on utilise 1 à 1000 ppm de métal noble, de préférence 2 à 500 ppm, en particulier 5 à 250 ppm, par rapport au caoutchouc de nitrile utilisé.

33. Procédé selon l'une ou plusieurs des revendications 1-32, où on réalise, après le procédé pour la dégradation du poids moléculaire du caoutchouc de nitrile une hydrogénation du caoutchouc de nitrile.
